(19)

Europäisches
Patentamt
European
Patent Office
Office européen
des brevets

(11)  **EP 3 893 250 A1**

(12)  **EUROPEAN PATENT APPLICATION**

(43) Date of publication:
**13.10.2021 Bulletin 2021/41**

(51) Int Cl.:
***G21B 3/00*** *(2006.01)*

(21) Application number: **20168985.8**

(22) Date of filing: **09.04.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Cill AB
149 21 Nynäshamn (SE)**

(72) Inventor: **Peltola, Pekka
149 43 NYNÄSHAMN (SE)**

(74) Representative: **Noréns Patentbyrå AB
Box 10198
100 55 Stockholm (SE)**

(54)  **METHOD AND APPARATUS FOR ENERGY CONVERSION**

(57)    Method for converting nuclear energy by fusing deuterium or tritium nuclei, which method comprises the initial step of providing a first atom, in turn comprising a first nucleus and a first electron, and a second atom, in turn comprising a second nucleus and a second electron, which method further comprises the following steps:
a) bringing the first and second nucleus together at a distance of at the most 7 Å;
b) applying a magnetic field (B) arranged to align spins of said first and second nucleus so that spin axes are antiparallel and directed either towards each other or away and projected on a common line between the first and second nuclei, which common line is parallel to the magnetic field (B);
c) modifying the electron orbits of said first and second electrons such that a spatial distribution is skewed away from a region not located between the first and second nuclei along the common line, or ionizing said atoms; wherein the first and second hydrogen nuclei are brought together at said distance, with said spin orientation and said ionized or electron orbit modified state at one and the same time.
    The invention also relates to a system.

## Fig. 16

EP 3 893 250 A1

**Description**

The present invention relates to a method and an apparatus for energy conversion. More particularly, the invention relates to such energy conversion in which nuclear energy is converted to other energy types via a nuclear fusion process.

In general, nuclear fusion of chemical elements will produce excess energy when a number $n$ of such input chemical elements with mass numbers $A_i$ and an atomic numbers $Z_i$ are fused, as long as the resulting $A_f = A_1 + A_2 + \cdots + A_n$ and $Z_f$ of the fusion product satisfies $Z_f \leq 26$. The total number $A_f \equiv N_p + N_n$ of $N_p$ number of protons and $N_n$ number of neutrons does not change in the fusion process, at least not for the energies used herein. It is well-known that a central difficulty with nuclear fusion is that it is necessary to overcome the electromagnetic repulsion between two nuclei of the fusion material and to bring the nuclei close enough for the attractive but short-range strong nuclear interaction to overcome the electromagnetic repulsion.

Conventionally, an approach has been tried using a plasma having high temperature, and to overcome the electromagnetic repulsion through high-speed collisions between nuclei due to said high temperature. The rationale behind this approach is to achieve random high-speed collisions at high temperatures, typically exceeding $10^6$ K. The property of random collisions, however, translates directly to low efficiency. The high temperature also translates to an expensive energy production and safety problems.

It would therefore be desirable to achieve nuclear fusion at low temperatures. In particular, it would be desirable to be able to achieve such low-temperature nuclear fusion in an efficient process. Such efficient low-temperature nuclear fusion could then be used in a fusion reactor, a battery or a fuel cell to provide large amounts of energy. The present invention solves the above described problems.

Hence, the invention relates to a method for converting nuclear energy by fusing deuterium or tritium nuclei, which method comprises the initial step of providing a first hydrogen atom, in turn comprising a first deuterium or tritium nucleus and a first electron, and a second hydrogen atom, in turn comprising a second deuterium or tritium nucleus and a second electron, which method further comprises the following steps: a) bringing the first nucleus and the second nucleus together to a distance between the first and second nucleus of at the most 7 Å; b) applying a first magnetic field such that a resulting total magnetic field (B) is arranged to align a first spin of said first nucleus in relation to a second spin of said second nucleus so that a respective spin axis of said first and second spins are anti-parallel and directed either towards each other or away from each other and so that said first and second spins are projected on a common line between the first and second nuclei, which common line is parallel or anti-parallel to the total magnetic field (B); c) ionizing said first hydrogen atom, or modifying the electron orbit of said first electron such that a spatial distribution for the first electron is such that the probability for the first electron to exist in a region between the first and second nuclei along the common line is smaller than in a spherically symmetric spatial distribution; d) ionizing said second hydrogen atom, or modifying the electron orbit of said second electron such that a spatial distribution for the second electron is such that the probability for the second electron to exist in a region between the first and second nuclei along the common line is smaller than in a spherically symmetric spatial distribution, wherein steps a)-d) may be performed in any order but so that the first and second nuclei are provided at said distance, with said spin orientation and said ionized or electron orbit modified state, at one and the same time.

Each of the steps a)-d) can also be performed any number of times, in parallel and/or in sequence.

Hence, the invention relates to the fusion of deuterium and/or tritium. In preferred cases, only tritium or only deuterium is used (within contamination limits). In other words, the first and second nuclei are preferably either both deuterium nuclei or both tritium nuclei, and preferably all (within contamination limits) participating nuclei pairs of a plurality of such nuclei pairs fused according to the present invention are either all deuterium or all tritium. However, it is foreseeable that, in some cases, deuterium-deuterium and tritium-tritium pairs may be fused within one and the same process.

That the nuclei are brough together means that they are geometrically displaced to a common arrangement in which they are provided at said small distance in relation to each other. It is this relative geometric arrangement of the nuclei that is to prevail at the same time as said spin orientation and said ionized/electron orbit modified state is to prevail for fusion to occur with a probability large enough so as to release significant amounts of fusion energy.

Using a selected and adapted magnetic field to achieve such spin alignment to first and second nuclei that are at the same time brought into such close proximity to each other and the respective electron distribution has thus been modified (or the atom in question even being completely ionized), fusion of the deuterium or tritium nuclei can be achieved even at low temperatures, forming a helium nucleus.

The "total magnetic field" includes the "first magnetic field". It is understood that the total magnetic field also may include, as a subcomponent, the earth magnetic field and/or any other external or internal magnetic field. What is important that the first magnetic field is a magnetic field that is actively applied, and which achieves said effect in terms of spin alignment.

That the spatial distribution for the first/second electron is modified such that the probability of the electron in question exists in a region between said nuclei along the common line is smaller than in a spherically symmetric spatial distribution means that said spatial distribution is skewed away from said region. In practise, this means that the spatial distribution of the electron in question is affected so that it does not significantly prevent the approach of the first and second nuclei due to repelling electric force between an electron encircling the first nuclei and an electron encircling the second nuclei. This may, for instance, be achieved using applied magnetic fields as described herein.

The same magnetic field achieving the spin alignment can also be used to modify the electron distribution, or the latter can be achieved in other ways.

The fusion can be performed for one or a plurality of hydrogen nuclei pairs, each carefully being individually aligned and brought together using carefully selected electromagnetic fields, or a large plurality of hydrogen nuclei can be brought together under conditions where there is a significant probability for such atoms to pairwise end up in such spin aligned, electron distribution modified, proximate conditions by random movements of such nuclei under such conditions. This will be exemplified below.

It is understood that the term hydrogen/deuterium/tritium "nuclei", as used herein, may refer to a nucleus only consisting of a proton and zero or more neutrons, or to a hydrogen/deuterium/tritium atom also consisting of an electron.

Generally, the principles described herein are applicable to deuterium, and as an alternative and as applicable also to tritium. However, protium ($^1$H) is not useful as a Fusion Material according to the present invention and the description provided herein. In the atmosphere, and on Earth in general, protium dominates the hydrogen resources. Therefore, in order to perform the present invention first a deuterium and/or tritium source must be selected and provided to provide such Fusion Material. In all embodiments, such a deuterium and/or tritium provision step may hence form an initial step, and the system according to the invention will generally be adapted to receive such Fusion Material from such a source, which source may form part of the system in question. At any rate, the Fusion Material used according to the present invention may contain other elements than deuterium and/or tritium, but preferably contains (by volume) at least 50%, such as at least 80%, such as at least 90%, or even at least 95%, deuterium, tritium or a mixture of deuterium and tritium. Specifically, the present Fusion Material may comprise (by volume) at the most 50%, such as at the most 20%, such as at the most 10%, or even at the most 5%, protium.

In general, the present invention can be used to convert energy, for instance by giving rise to thermal and/or electric energy which is ready to harvest and use for different purposes. In order to achieve such energy conversion at macroscopic levels, the invention will typically be used to fuse not only one pair of hydrogen nuclei, but to perform the invention on a plurality of hydrogen nuclei that are pairwise fused. In other words, it is typically question of a population of hydrogen atoms/nuclei. For any two hydrogen nuclei of such a population, fusion will occur at some probability, inter alia depending on the distance between the nuclei in said pair. The present inventor has discovered that a distance of at the most 7 Å will result in sufficiently probable fusion so as to achieve significant energy production at macroscopic levels. Hence, while according to the invention the particular hydrogen nuclei pair which is to be fused is to be located at a relative distance of at the most 7 Å, on the macroscopic level it is desirable that a sufficient share of the hydrogen nuclei to be used for fusion are pairwise arranged (at the same time or at different times, depending on embodiment) at a respective relative distance of at the most 7 Å. This may mean, for instance, that at least 0.1%, such as at least 1%, such as at least 10%, such as at least 50%, such as at least 80%, or even all or substantially all, of nuclei of such pairs of hydrogen nuclei, are arranged at the most 7 Å from each other at least at some point during the process. The number will depend on embodiment.

In some embodiments, said total magnetic field is arranged to generate an energy splitting between hydrogen nucleus spin states which is then used to separate wanted spins from unwanted spins using an electromagnetic field arranged to filter out nuclei not having particular predetermined energy states. This increases yield in terms of proportion of fused nuclei. As mentioned, the total magnetic field may be controlled by selecting and applying a suitable first magnetic field.

In some embodiments, said total magnetic field is at least 100 $\mu$T of strength, or at least significantly above the natural magnetic field of the Earth.

In some embodiments, said fusion between the first and second nuclei produces a helium nucleus as well as electromagnetic radiation, which electromagnetic radiation is absorbed by an energy absorbing means. Such an absorbing means comprises a water body which is at least 0.1 meters of connected water in a radiation direction of said electromagnetic radiation, and the absorbed energy then manifests as thermal energy. This provides for a simple and failproof way of harvesting the energy released via the fusion reaction.

In some embodiments, said absorbing means comprises a photovoltaic cell, and the absorbed energy then manifests as electric energy. This is an alternative or additional way of providing such simple and failproof harvesting.

In some embodiments, said hydrogen atoms and deuterium or tritium nuclei are kept at an average temperature which is at the most 1,000 K, preferably at the most 500 K, preferably at the most 350 K, throughout the process. Moreover, the hydrogen atoms and deuterium or tritium nuclei may be kept at an average temperature which is at least 0 °C throughout the process. It is pointed out that the present invention in general does not require very elevated temperatures, and that it may even perform significantly better under such lower-temperature conditions. This is advantageous since it substantially reduces investment requirements as compared to conventional (still experimental) very high temperature (tens of million degrees or even more) fusion processes. These mechanisms will be described in detail below.

In some embodiments, the present method further comprises the initial step of locally producing said first and second hydrogen atoms by separating, such as using electrolysis, hydrogen dioxide, such as deuterium or tritium dioxide, to form hydrogen gas and oxygen gas. This provides a simple way of obtaining Fusion Material, which may be performed physically directly in connection to the fusion process itself, as applicable. Such a separation step may be preceded by a separation step in which deuterium and/or tritium containing material is first separated from non-deuterium and/or tritium containing material, and where such separated out material is used in said local production of Fusion Material.

In some embodiments, said steps c) and d) comprise ionization of said first and second hydrogen atoms. Such ionization may be performed by subjecting the hydrogen atoms to electromagnetic radiation. Ionization provides an efficient way of removing electrons from a volume between two deuterium or tritium nuclei to be fused so as to facilitate fusion.

In some further embodiments, the present method may further comprise applying a first aligning electric field to the first hydrogen nucleus, arranged to align a neutron of the first hydrogen nucleus in relation to a proton of the first hydrogen nucleus along a predetermined first alignment direction, and also applying a second aligning electric field to the second hydrogen nucleus, arranged to align a neutron of the second hydrogen nucleus in relation to a proton of the second hydrogen nucleus along a predetermined second alignment direction. In such embodiments, said first and second alignment directions may furthermore be arranged so that said neutron of the first hydrogen nucleus faces either said neutron of the second hydrogen nucleus or said proton of said second hydrogen nucleus, preferably so that said neutron of the first nucleus faces said neutron of the second nucleus. Using two such aligning electric fields provides an efficient way of achieving a desired relative alignment between two nuclei to be fused. In particular in a setup in which two such nuclei are injected towards each other from two different directions, each such injected nucleus can be affected by its own separate electric field. In this and other embodiments, the two aligning electric fields can have mutually different orientations and affect different, or even completely separated, volumes in space, in which respective volume either of said aligning electric fields dominates. The point of fusion between said nuclei may then be arranged between said volumes, such as at the border between them.

The method may hence further include injecting at least said first nucleus into a reaction chamber as a part of a particle beam so that said bringing together specified in step a) thereby is achieved. In particular, both said first nucleus and said second nucleus may be injected into said reaction chamber as a part of a respective hydrogen particle beam, where the first nuclei is a part of a first beam and the second nuclei is a part of a second beam, which first and second beams intersect by having at least one flow direction component which is parallel and of opposite sign. Said particle beams may be parallel and oppositely directed. Using the principles described herein, for instance, the spin and proton/neutron alignment of such injected nuclei can be controlled, together with a relative nuclei velocity at the point of fusion, to a sufficient degree so as to achieve fusion. Then, an injection achieves a very simple and efficient way of providing the Fusion Material to the point of fusion.

Moreover, each beam in question may be achieved simply using a respective accelerating electric field, accelerating the nucleus in question. In some of these embodiments, for each of said beams the accelerating electric field may have an opposite field direction as compared to said first aligning electric field. Then, the aligning field may be used both for aligning and decelerating the injected nuclei to a desired final velocity at the point of fusion.

In some embodiments, said accelerating electric field has a vertical field direction. This provides a way to achieve a very well-controlled injection path without having to consider the effects of gravity.

Said first and second aligning electric fields may be applied so as to decelerate the velocity of the nuclei in question, so that its velocity relative to the other nuclei in question is less than $\pm 1 \cdot 10^7$ m/s when they are brought together in step a), or alternatively so that the total kinetic energy of the first and the second nuclei, when they are brought together in step a), is less than 1 keV. This is achievable, for instance using the principles described herein, and provides adequate conditions for fusion at a sufficient probability to yield sufficient fusion on a statistical level for adequate energy production.

In some embodiments, the method may further comprise ionizing a third hydrogen atom, in the form of a deuterium or tritium atom, to achieve a third deuterium or tritium nucleus; applying said first or second aligning electric fields to the third nucleus, arranged to align a neutron of the third nucleus in relation to a proton of the third nucleus; bringing the third nucleus into physical proximity to a fourth deuterium or tritium nucleus, which third and fourth nuclei do not fuse; and collecting the third nucleus, such as using a collecting electric field, and reusing the third nucleus as the first nucleus in steps a) - c). This way, non-fusion of a statistical share of nuclei, due to chance misalignment and similar, is handled by simply reusing the non-fused material.

In some embodiments, the method further comprises applying at least one quantum state filter only allowing said first and/or second nucleus to be brought together in step a) in case the hydrogen nucleus in question with a total spin $S = K$ has a spin projection state $S_z \approx \pm K$, such as by increasing a nucleus scattering amplitude for other spin energy states. In particular, the method may further comprise applying a respective bending electric field to at least one of said first and second nuclei, arranged to bend a path through space of the nucleus in question, wherein a magnitude of said bending depends on a spin of the nucleus in question, and wherein the nucleus in question, due to said bending, will be brought into contact in step c) only in case said spin fulfils a predetermined condition. This provides an efficient way of filtering away individual nuclei before reaching the point of fusion (being brought together with a counterpart nuclei for fusion), which individual nuclei have poor prospects of actually participating in a nuclear fusion and that as a result risk disturbing the fusion between other pairs of nuclei.

In some embodiments, the distance of step a) is at the most 1000 fermi. This provides adequate prerequisites for fusion.

In some embodiments, said modifying of the electron orbits of steps c) and d) and said bringing together of step a) is performed by loading a plurality of ionized or non-ionized deuterium or tritium atoms into a metal crystal, such as via diffusion or bombardment of deuterium or tritium nuclei into the metal crystal, or by connecting the metal crystal as an anode and placing the corresponding cathode into water composed of the selected hydrogen isotope and then loading the metal crystal with hydrogen via electrolysis. The metal crystal may be a monocrystal or polycrystalline material having a crystal structure achieving said modifying of the electron orbits of steps c) and d) as a result of a geometry of said crystal structure when said deuterium or tritium nuclei are loaded into said metal crystal so as to occupy crystal lattice positions with a distance between two adjacent ones of said nuclei of at most one lattice constant apart. Such loading into a metal crystal lattice provides a simple way of achieving both a suitable intra-nuclei distance for fusion, and a fixing of adjacent pairs of nuclei in the wake of fusion. In other words, such loading into a lattice provides adequate time for the nuclei to fuse, given that under the influence of an externally provided magnetic field the required alignment takes place on a statistical level, providing a large number of such nucleus pairs.

In order to achieve a reasonably frequent fusion in such metal crystal over time, the ratio of the number metal atoms per number of ionized or non-ionized deuterium or tritium atoms after loading may be at least 0.8, preferably at least 1.5.

The metal crystal may be of macroscopic nature, constituting a battery or fuel cell type arrangement. More particularly, a total mass of said metal crystal may be at least $1.2 \cdot 10^{-14}$ grams.

In order to further facilitate the fusion by improved statistical conditions in various embodiments of the present invention, a third aligning electric field may be applied causing Bloch oscillations arranged to momentarily decrease a relative distance between nuclei situation adjacent each other in said metal crystal.

In some embodiments, in order to efficiently harvest the produced energy the method further comprises encapsulating said metal crystal in a material arranged to absorb photons and possible neutrons to generate thermal energy, and/or absorbing thermal energy directly in that form, and/or absorbing photons to generate electric currents and to convey such thermal energy and/or generated electric current away from the metal crystal.

The metal crystal may be any of palladium, titanium, magnesium, aluminium, lithium, sodium, lanthanum or nickel, or a (possibly complex) compound with any of these elements as one component. Hence, metal alloy crystals of two or more different metals are thinkable.

In order to further facilitate fusion on the statistical level, a field strength of an induced magnetic field within the metal crystal may be increased using a ferromagnetic material comprising cobalt, iron, nickel, neodymium and/or samarium inside or in connection to the metal crystal.

In order to further facilitate fusion, a second magnetic field may also be applied, which second magnetic field is varied over time with a frequency within 25% of the corresponding nuclear spin projection transition resonance energy of the ionized or non-ionized deuterium or tritium.

Said second magnetic field may hence be a different subcomponent contributing to said total magnetic field, and is in general different from said first magnetic field. Both said first and said second magnetic fields are preferably externally and actively applied, when used.

Furthermore, said second magnetic field may be applied so that it is orthogonal, or at least substantially orthogonal, such as orthogonal within a $\pm 10\%$ margin, to said first magnetic field.

Also, said first magnetic field may furthermore be a static magnetic field. This is then in contrast to the variable second magnetic field.

Generally, the total magnetic field as described above, including said first and possibly said second subfields, may be applied at least during 10 ms.

In some embodiments, said bringing together of step a) may be achieved by the first and second nuclei forming (when the nuclei in question is an ionized hydrogen atom), or forming part of (when the nuclei in question is a nuclei of a non-ionized hydrogen atom), a deuterium or tritium molecule. Forming deuterium or tritium molecules is a simple way of achieving sufficient geometric proximity of the nuclei to achieve fusion once the two nuclei of the same molecule are aligned according to the principles described herein. It is noted that, also in this case, the electron orbits are modified or that electrons are removed as a result of the ionization.

In particular, the method may further comprise keeping a plurality of such deuterium and/or tritium molecules in a confined volume under subjection of the entire confined volume to the total magnetic field of step b) for at least 1 minute, such as at least 1 hour. Then, the volume hence kept may be gaseous.

In some embodiments, the method may be designed to be repeatable by further comprising a subsequent emptying step in which helium formed is emptied and the confined volume is refilled with a new plurality of deuterium and/or tritium molecules.

In some embodiments, steps c) and d) may comprise ionizing said first and second hydrogen atoms forming said deuterium or tritium molecule.

Moreover, the invention also relates to a system for converting nuclear energy by fusing deuterium or tritium nuclei, which system comprises a hydrogen atom provision arrangement, arranged to, in an initial step, provide a first hydrogen atom, comprising a first deuterium or tritium nucleus and a first electron, and a second hydrogen atom, comprising a second deuterium or tritium nucleus and a second electron, which system further comprises a nucleus movement-imparting arrangement, arranged to bring the first nucleus and the second nucleus together to a distance between the first and second nucleus of at the most 7 Å, which system further comprises a magnetic field provision arrangement, arranged to apply a first magnetic field such that a resulting total magnetic field is arranged to align a first spin of said first nucleus in relation to a second spin of said second nucleus so that a respective spin axis of said first and second spins are anti-parallel and directed either towards each other or away from each other and so that said first and second spins are projected on a common line between the first and second nuclei, which common line is parallel or anti-parallel to the total magnetic field, which system further comprises a hydrogen atom electron orbit modifying arrangement, arranged to ionize said first hydrogen atom, or to modify the electron orbit of said first electron such that a spatial distribution for the first electron is such that the probability for the first electron to exist in a region between the first and second nuclei along the common line is smaller than in a spherically symmetric spatial distribution, which hydrogen atom electron orbit modifying arrangement is further arranged to ionize said second hydrogen atom, or to modify the electron orbit of said second electron such that a spatial distribution for the second electron is such that the probability for the second electron to exist in a region between the first and second nuclei along the common line is smaller than in a spherically symmetric spatial distribution, and wherein the system is arranged to perform said bringing said nuclei together, said application of said magnetic field and said electron orbit modification in any order but so that the first and second nuclei are provided at said distance, with said spin orientation and said ionized or electron orbit modified state at one and the same time.

Said nucleus movement-imparting arrangement may work using different per se known principles, such as an electric field accelerating a hydrogen ion or by allowing individual hydrogen atoms to form hydrogen molecules. This is described in various detailed examples herein.

Said magnetic field provision arrangement may be a per se conventional magnetic field-inducing mechanism, providing a magnetic field of any suitable shape and magnitued.

Said hydrogen atom electron orbit modifying arrangement may also work using different per se known principles, such as by applying an electric and/or magnetic field, by ionizing hydrogen atoms and/or by loading hydrogen atoms into a metal lattice, such as is described in various detailed examples herein.

In the following, the invention will be described in detail, with reference to exemplifying embodiments of the invention and to the enclosed drawings, wherein:

Figure 1 illustrates the compact space-like 2-surfaces representing the neutron n and proton p as a boundary of gluon and other interactive boson propagations in a deuterium atom nucleus;

Figure 2 illustrates two deuterons with their Q = 0 tubes aligned;

Figure 3 illustrates a continuous homeomorphic deformation of the simple Kerr-Newman model depicted in Figure 1;

Figure 4 illustrates how a small non-zero electric repulsion arises on the average from impossibility to exactly prepare the quantum states as $S = S_z$;

Figure 5 illustrates a first exemplary embodiment of the invention;

Figure 6 is an overview of a Fusion Reactor embodiment according to the present invention;

Figure 7 illustrates a conventional nuclear fission plant, suitable for modification to be used with a method according to the present invention;

Figure 8 illustrates a Fusion Reactor embodiment of a Fusion Material container version according to the present invention;

Figure 9 is an overview diagram illustrating a gas chamber principle used by the present invention;

Figure 10 is a simplified illustration of a Battery according to the present invention;

Figure 11 is an illustration of two deuterium atoms in a particular isospin ordering of the nuclei;

Figure 12 illustrates a modification of the electron orbits of the deuterium atoms shown in Figure 11, which modification is obtained by applying a magnetic field;

Figure 13 illustrates the deuterium atoms shown in Figure 11 but after ionization;

Figure 14 illustrates the deuterium atoms shown in Figure 11 loaded into a hydrogen absorbing material;

Figure 15 illustrates the deuterium atoms shown in Figure 11 brought together to form a deuterium molecule;

Figure 16 is a flowchart showing a method according to a first embodiment the present invention;

Figure 17 is a flowchart showing a method according to a second embodiment the present invention; and

Figure 18 is a flowchart showing a method according to a third embodiment the present invention.

Put generally, the present invention solves the efficiency problem for nuclear fusion by a more precisely controlled fusion process. Since the present method can be performed at relatively low temperatures, it will normally involve significantly lower costs than conventional fusion processes. More particularly, the operating temperatures used in the present method may be in the range of $0\text{-}10^4$ K, including STP.

As used herein, the term "cold fusion" may refer to nuclear fusion in a fusion reactor, a battery and/or a fuel cell, as the case may be, which nuclear fusion is performed within said relatively low temperature interval.

**Theoretical background**

The existence of low temperature nuclear fusion has been under debate. However, as will be explained herein low temperature nuclear fusion is actually allowed by well-known theory. In the following, this will be shown by providing the same conclusion from different and independent branches of physics. In General Relativity, and in particular in black hole thermodynamics (see Robert M. Wald, General Relativity (The University of Chicago Press 1984), Section 12.5, p. 330-337), the area of an event horizon is directly related to the entropy of the black hole. The First Law of Thermodynamics relates a change in energy to a change in entropy. Two black holes can coalesce in a low temperature environment with a change in area of the new merged black hole. This change in area implies a change in entropy, and therefore a change in energy.

It was initially believed that the area of the event horizon could only increase, and that the merged event horizon would therefore not in principle be able to emit significant energy. However, Hawking (Hawking, S. W., Comm. Math. Phys. 43, 199-220; 1975) discovered that a black hole can decrease the area by emitting significant radiation or energy. This consideration is not only valid for astrophysical objects in cold interstellar environments. The physical size of an astrophysical black hole depends, apart from its mass, directly on the value of the Newton Gravitational Constant G. If G has a different value, then event horizons can arise with different masses, different mass densities and different sizes. Recent measurements (see Gillies, George T., Reports on Progress in Physics 60 (2), 151-255; 1997) of G have yielded results with mutually exclusive values of G. These measurements indicate that G is not a universal constant but instead it is apparently a variable. Fermi observed that General Relativity in the original form provided by Einstein does not implement the Mach principle fully, and for this reason Brans and Dicke (Brans, C. and Dicke, R.H., Phys. Rev. 124, 925-935; 1961) have modified General Relativity by treating G as a scalar field.

Event horizons of quantum object size may be obtained as extremum values, singular values, poles or limiting values of the Brans and Dicke scalar field. An event horizon is mathematically a null hypersurface of which the space-like projection part is compact. A Kerr-Newman event horizon space-like projection part is homeomorphic to the 2-sphere $S^2$.

Bounded stable regions defined by the propagation of massless fields define such null surfaces. The compactness implies in this case that the massless fields do not propagate to space-like infinity. Compact null hypersurface space-like projection parts therefore define space-time curvatures for systems that are stable, or equivalently stationary, and non-radiating of energy. This applies to massless gluon fields holding quarks together in protons and neutrons as well as to other massless vector boson fields associated with carrying the electroweak and strong interactions of nuclei, the gauge boson fields. The propagation surfaces of massless fields can be used to *define* the geometry and space-time curvature. The mass is associated with a Higgs scalar field.

The ad-hoc spontaneous symmetry breaking or an ad-hoc brute force addition of massive Lagrangian terms is disregarded in this model, but in principle the same observation of compactness for the space-like projection of the propagation of probability amplitude wave functions applies for massive fields. The propagation of gluon and interaction boson null fields, i.e. massless fields that do not escape to space-like infinity, generating stable systems of nuclei, define compact null hypersurfaces for the space-like projection part and thereby *define* event horizons.

Nuclear fusion as regarded as the merging of event horizons therefore does not depend on a high ambient temperature or high velocity collisions but instead on producing compact space-like projection parts of null hypersurfaces by an appropriate engineering of the space-time curvature and the electromagnetic field tensors $F_{ab}$ in a local neighbourhood of the nuclei. The ambient temperature of the nuclei can be the same as the cold interstellar temperature in the black hole null hypersurface case. The energy-momentum (-stress) tensor $T_{ab}$ is directly connected to the space-time curvature through the Einstein field equations.

In Quantum Hadrodynamics (QHD), in Quantum Chromodynamics (QCD) and in particular in Lattice Gauge Theory (LGT), a quark-gluon plasma phase transition (see John Dirk Walecka, Theoretical Nuclear and Subnuclear Physics (Imperial Collage Press 2013), Chapter 19, p. 160-168) is obtained for nuclear matter at high enough baryon density as a low temperature limit $T \rightarrow 0$ when combining QHD and QCD. The QHD phase, i.e. describing the nuclear matter as interacting neutrons and protons, is a phase transition in the limit $T \rightarrow 0$ under the same baryon density condition. QHD describes nuclear fusion, and in particular the concept of nuclear fusion as interacting neutrons and protons has a real meaning only in the low temperature limit $T \rightarrow 0$ at sufficient energy-momentum density. The concept of nuclear fusion has no meaning in the limit $T \rightarrow \infty$. QHD nuclei formations and transitions, including fusion, therefore do not depend on a high temperature environment but on an appropriate engineering of the nuclear forces in order to overcome the electromagnetic repulsions.

Regarding nuclear forces as a relativistic quantum field theory or a relativistic mean field theory (RMFT), again nuclear forces can be engineered at low temperatures by engineering the space-time curvature and the electromagnetic field tensors in the region under consideration. In fact, this engineering becomes simpler at lower temperatures. The engineering of the nuclear forces can be achieved independently whether the nuclear forces are regarded as carried by null fields or symmetry broken massive fields. For example, if the nuclear forces are described by a Yukawa potential on a given space-time, then one aspect of the space-time curvature engineering implies an engineering of the Yukawa potential by stretching, compressing, bending and twisting this space-time, or executing a non-homeomorphic transformation of the topology of this space-time. The space-time curvature engineering is not limited by a particular value of the Newton Gravitational Constant G, as it is possible to vary the energy-momentum density $T_{ab}$ in this engineering. The space-time curvature engineering can be considered as an engineering of the Einstein field equations, but where the Newton Gravitational Constant may have any value. As an example, a mean field theory, such as the RMFT above, can be used as a R.H.S. source $T_{ab}$ in the Einstein Field equation using known techniques from Quantum Field Theory on curved space-times and changing the Newton Gravitational Constant can be regarded as changing $T_{ab}$ by a re-scaling.

**The Basis of the space-time curvature engineering**

This section focuses on the space-time curvature engineering part, since the engineering of the electromagnetic field tensor part $F_{ab}$ is already well-known. This section shows how to apply the method of space-time curvature engineering by engineering $T_{ab}$ in practice, either by building a theoretical model from which the required design of $T_{ab}$ can be deduced depending of what Fusion Material and Doping Material is at hand, or by using an experimental model on how to design $T_{ab}$. For both the theoretical model and the experimental model, the present invention has the following physical and mathematical basis. The basic physics and mathematics is presented in terms of 4-tensors, although the model can equivalently but more compactly be described in reduced 2-spinor form (see R.Penrose & W.Rindler, Volume 1, Two-Spinor Calculus and Relativistic Fields (Cambridge University Press 1990), Section 4.6, p. 231-237).

Baryons and other hadrons are assigned space-like extensions into space-time in the sense that not all energy-momentum density for the system is concentrated to a space-like point. The mean square radius is of the order 0.8 × $10^{-15}m$ (0.8 fm) for the neutron and the charge density radius of the proton is of the order 0.85 × $10^{-15}m$. On the other hand, the electron and other leptons are in a first approximation treated as point particles in this energy-momentum density sense.

The space-time is in this model treated as a continuum and in general as a manifold M with metric $g_{ab}$. In the event that the continuum description fails, it is generally believed that such failure will arise at distance scales of the order Planck length, i.e. at the order of $10^{-35}m$, and in any case the continuum approximation would be valid at the $10^{-15}m$ scales of prime interest here. Under these conditions, the null hypersurface constructions are well defined. Conversely, we can use for example the gluon or any other null vector boson null hypersurfaces and energy-momentum densities to *define* the space-time geometry and curvature. The propagation of null fields probe the effective space-time geometry and curvature, and these propagation flow-lines define the curvature.

The space-time curvature in terms of the Ricci tensor $R_{ab}$ and the scalar curvature $R$, using standard summation conventions $R \equiv R_a{}^a$, is related to energy-momentum density tensor $T_{ab}$ by the Einstein field equations with metric signature (- + ++), Newton Gravitational Constant $G$ and in abstract indices form as (see Robert M. Wald, General Relativity (The University of Chicago Press 1984), Section 4.3, equation (4.3.21)):

$$R_{ab} - \frac{1}{2} R g_{ab} = \frac{8\pi G}{c^4} T_{ab} \tag{1}$$

Here, the cosmological constant is set to zero. The significance of considering $G$ as a scalar field for example in Brans and Dicke theory in this context is that if $G$ increases, it takes a smaller energy-momentum density to generate the same curvature and manipulate the fusion process. Nevertheless, the present method is independent of any particular value of $G$.

The space-time curvature engineering is now achieved via the Einstein equations (1) by engineering $T_{ab}$. In order to design the electromagnetic field part, classical field approximations can be used as the field intensities in most embodiments will correspond to the second quantization vector potential occupation number $N$ limit $N \to \infty$. In this case, we have for the electromagnetic contribution including the repulsive proton-proton interaction in geometrized units for electromagnetic field tensor $F_{ab}$ (see Robert M. Wald, General Relativity (The University of Chicago Press 1984), Section 4.3, equation (4.3.14)):

$$T_{ab} = \frac{1}{4\pi} \left( F_{ac} F_b{}^c - \frac{1}{4} g_{ab} F_{de} F^{de} \right) \tag{2}$$

If the electromagnetic field is not treated classically, but instead as a quantum field, the vector potential $A_b$ in Lorentz gauge is used subject to the standard quantum conditions.

The electromagnetic field tensor is trace-free and therefore does not contribute to engineering the scalar curvature part $R$. This part of the $T_{ab}$ engineering is instead obtained by engineering mass density fields. In this case, the scalar curvature from the trace part of $T_{ab}$ arises from the electro-weak, QHD and QCD energy-momentum densities readily obtained by standard methods from Lagrangian formulations. The massive part in terms of energy-momentum densities can be regarded as arising from Higgs scalars $\sigma$ subject to the Klein-Gordon equations (see F. Mandl & G. Shaw, Quantum Feld Theory (John Wiley and Sons Ltd. 1986), Chapter 3, equation (3.3)):

$$\partial^a \partial_a \sigma + m^2 \sigma = 0 \tag{3}$$

The curved space-time specific "minimal substitution" replacing the ordinary derivative as $\frac{\partial}{\partial x^a} \to \nabla_a$, where $\nabla_a$ is the unique curved space-time Christoffel derivative satisfying $\nabla_a g_{bc} = 0$, can be used in this engineering as we restrict to spin $s = \{0, \frac{1}{2}, 1\}$ for Higgs fields, protons, neutrons and interaction vector bosons (see Robert M. Wald, General Relativity (The University of Chicago Press 1984), Section 13.2, p. 359-). Linearized gravity approximations cannot be used for the null hypersurface formations under consideration.

However, care is required in applying the theoretical model as a standard procedure in QHD is to assume that the baryons satisfy the Dirac equations, and this is reflected by the fact that standard QED Dirac factors are inserted into the corresponding Feynman diagrams (see John Dirk Walecka, Theoretical Nuclear and Subnuclear Physics (Imperial Collage Press 2013), Section 16.2, p. 136-142).

However, the Dirac equations are point particle approximations and for the fusion process any hadron needs in general to be treated as an energy-momentum density with a space-like extension, not as a point particle. The point particle approximation may well apply to S-matrix scattering problems where the detectors a located at large space-like distance, but not in general in this nuclear fusion engineering process. As a first approximation, individual quarks may be regarded as point particles in the QHD domain, but the guiding principle is in general to use density functions as General Relativity mainly refers to continuous energy-momentum densities.

Thus, Higgs field densities are normally used rather than point particle Dirac $\delta$-distributions in order to describe mass. Here the term distribution refers to the mathematical definition of a distribution as defined in Functional Analysis.

Using densities rather than point particles corresponds to replacing $m^2 \rightarrow \sigma^2$ in (3) above. In general, Feynman rules also contain other distributions such as Feynman propagators. Any distribution will lead to mathematical difficulties, for example in the form of divergences, when combining with the densities of General Relativity. Similar care is required when modelling nuclear matter and combining QHD with General Relativity as rigid bodies do not exist in General Relativity.

It is now straightforward to build a theoretical and mathematical model for designing the $T_{ab}$ using standard methods and the above observations, and where the objective is to achieve compact and stationary space-time null hypersurface formation space-like projection parts corresponding to stable nuclei formations after nuclear fusion. These null surfaces will define the space-like boundary to which the gluon fields and other null interaction vector bosons can extend and where all massive fields are confined to the interior of these boundaries for these stable systems. The space-time curvature engineering by engineering $T_{ab}$ is in most embodiments achieved in practice by applying the electromagnetic fields and design the scalar curvature by non-zero mass densities by properly designing the quantum states for a set of dynamical variables and by designing the Fusion Material and Doping Material composition.

It is also possible to take an experimental approach rather than theoretically designing $T_{ab}$ when constructing a specific embodiment of the method. A properly designed space-time curvature engineering will manifest itself as resonance states for the set of dynamical variables. At these resonance states the rate of nuclear fusion in the Fusion Material or combined Fusion Material and Doping Material will increase, and this increase will occur at specific values for the dynamical variables, but where the impact energies for achieving fusion are low compared to the energies required in plasma fusion. These resonance states can be defined in terms of an increase in effective cross sections for the nuclear fusion as a function of quantum states, or equivalently as a function of Fusion Material of Doping Material preparations. This allows for a proper design of $T_{ab}$ through experiment.

From the above, a specific embodiment of the method may be constructed from the specified theoretical model, or from an experimental model determining resonance states, or from a combination of both.

## The General Physics in Embodiments of the Present Method

This section gives an overview of the physics of one embodiment of the method by applying a simple theoretical model. This example uses deuteron Fusion Material and no Doping Material. The resulting Fusion Product in the indicated Cold Fusion process is $^{4}_{2}He$ nuclei together with energy release products. For typographical reasons, the upper index in $^{4}_{2}He$ herein represents the mass number 4, while the lower index represents the electron occupation number 2, with a zero in $^{4}_{0}He$ representing full ionization. The atomic number Z is represented by the symbol *He* itself.

QHD, QCD and other models of nuclear and sub-nuclear physics frequently try to model the system by building a Lagrangian through describing the particles and interactions in as great as detail as possible, from which for example system dynamics, symmetries, conserved quantities, energy-momentum tensors $T_{ab}$ and anti-symmetric tensors $F_{ab}$ follow. This system construction is typically completed by matching various parameters in the model to experimental results in order to obtain an as accurate approximation as possible of the underlying physics. The presently utilised methodology for the space-time curvature engineering part does not, however, depend on such internal system constructions, but instead considers the space-time curvature R.H.S. of equation (1) as generated by an *effective* $T_{ab}$ as L.H.S. of (1). This can be applied for example on the neutron or on the proton. In this particular nucleon case, this approach is similar to the strong gravity approach to QCD and confinement by Salam and Sivaram (Salam, A. and Sivaram, C., Mod. Phys. Lett. Vol. 8, 4, 321-326; 1993), including running coupling constants like the Newton Gravitational Constant as well as running or effective Planck constant $h$, or equivalently for constant $\hbar \equiv h/2\pi$, but the focus of the present methodology is the compact null hypersurface formations generated by this effective $T_{ab}$.

The embodiment example in this section covers both Fusion Reactor applications and Battery & Fuel Cell applications, while any of these implementations may be of macroscopic size, nano size or quantum size. In this outline of the method, classical electromagnetic fields and mass-energy densities of nucleons will be used in the effective space-time curvature design. The Maxwell equations apply on the electromagnetic field tensor part $F_{ab}$.

We design the compact null hypersurfaces space-like projection parts as follows. We take all scalar, pseudo-scalar, vector and tensor boson fields carrying the interactions as massless fields. We take the compact null hypersurface space-like projections as the boundary compact space-like 2-surfaces on which these massless fields propagate. If the null boson fields propagate to the interior of this boundary surface, then the interior null propagation fields are considered trapped by the closed boundary 2-surface, i.e. this is a model of confinement. This model therefore uses only null fields as defined in QFT, while standard QFT at some instances also needs introduces masses through an ad-hoc spontaneous symmetry breaking mechanism. The property of mass is in this method regarded as a global property of these energy-momentum densities. In the mathematical terminology of Functional Analysis, the global properties of energy-momentum densities or density amplitudes $|\psi\rangle$ are obtained from $|\psi\rangle$ as functional $\langle\eta|\psi\rangle$ by operating on $|\psi\rangle$ by integral operators $\langle\eta|$. Nevertheless, it is in principle possible to introduce massive fields corresponding to Lagrangian mass terms, and in this case the massive fields carrying the interactions propagate to the interior of these limiting 2-surfaces. Stationary space-time compact null surfaces are defined as event horizons in General Relativity.

In comparing this space-time curvature model with the most basic nuclear physics shell model, say in photon quantum interactions with the system, the injection or extraction of system energy and angular momentum in an axial space-time symmetry is in the space-time curvature model regarded as expanding or contracting an effective Kerr-Newman event horizon and ergosphere.

We now apply the above method to Cold Fusion of two deuterons. We begin by constructing a space-time curvature model given by the Kerr metric approximating a neutron and a Kerr-Newman metric for approximating the proton, but with a running coupling constant $G$. The Kerr metric can be obtained from the Kerr-Newman metric by setting the integration constant $Q$, commonly interpreted as the electric charge of the system, to $Q = 0$. The Kerr-Newman metric and the electromagnetic vector potential $A_b$ in geometrized units is obtained from (see Robert M. Wald, General Relativity (The University of Chicago Press 1984), Section 12.3, equation (12.3.1)):

$$ds^2 = -\left(\frac{\Delta - a^2\sin^2\theta}{\Sigma}\right)dt^2 - \left(\frac{2a\sin^2\theta(r^2+a^2-\Delta)}{\Sigma}\right)dtd\varphi$$

$$+\left(\frac{(r^2+a^2)^2-\Delta a^2\sin^2\theta}{\Sigma}\right)\sin^2\theta\,d\varphi^2 + \frac{\Sigma}{\Delta}dr^2 + \Sigma d\theta^2\,, \qquad (4)$$

$$A_b = -\frac{Qr}{\Sigma}\left((dt)_b - a\sin^2\theta\,(d\varphi)_b\right)$$

In the set of equations (4), the following definitions apply:

$$\Sigma \equiv r^2 + a^2\cos^2\theta \qquad\qquad \Delta \equiv r^2 + a^2 + Q^2 - 2Mr$$

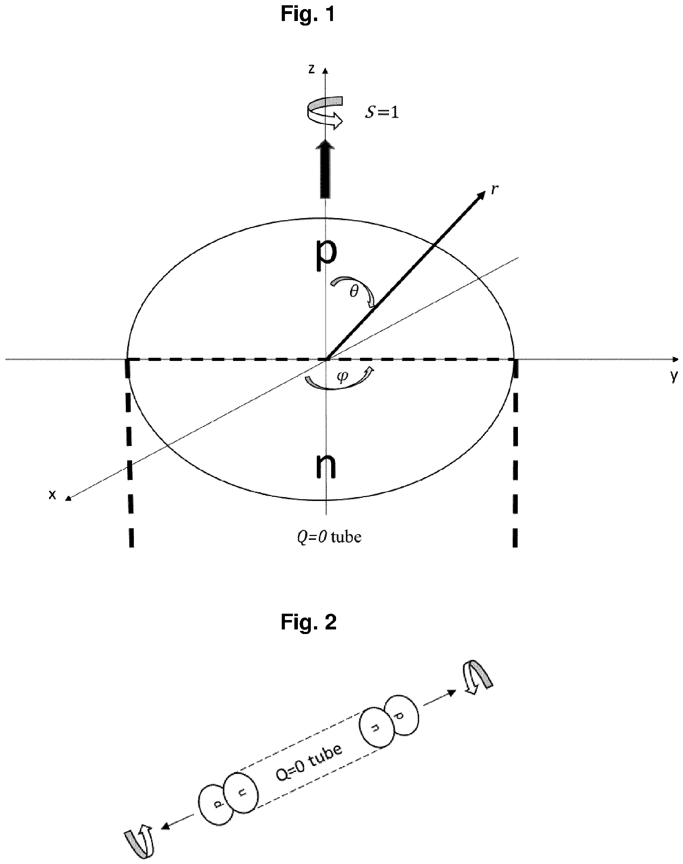

We introduce a simple deuteron approximation, which will be generalized below, by illustrating the compact null surface formations by the Kerr-Newman metric corresponding to event horizons for a spin $S = 1$ deuteron as depicted in Figure 1.

In this Figure 1, the baryon $S = \frac{1}{2}$ spins are aligned in the $S = 1$ state and the deuteron is a boson. The lower half part of the proton boundary ellipsoid has been homeomorphically deformed to an approximate $z = 0$ plane, and correspondingly for the upper part of the neutron ellipsoid. The space-time geometry in the region $z > 0$ is defined by the Kerr-Newman metric by setting $Q = +e$ and in the region $z < 0$ by $Q = 0$. The coordinate r in the Kerr-Newman geometry is not the same as r in Euclidian geometry. In this geometry, the null surface space-like projection part of the upper and lower hemisphere becomes tangential to the $z = 0$ plane in the limit $z \to 0$. At this stage, the metric and space-time geometry is undefined on the $z = 0$ plane itself, and will be discussed below.

In the above simple model, we disregard the discontinuity in the metric in the $z = 0$ plane for the moment, this has been illustrated by the neutron and proton compact space-like null field boundary surfaces being aligned in the $z = 0$ plane. The key point with this geometry here is that there exists no space-like geodesics from the region $z > 0$ originating from the boundary surface that can reach the $Q = 0$ tube in the region $z < 0$. This means that no electric field lines from the proton can reach the $Q = 0$ tube and we could in principle place another proton in that tube without obtaining electromagnetic repulsion. This follows from the effective space-time geometry in (4). No massive particle following a time-like geodesic nor a massless particle following null geodesics can enter the compact 2-surface of the neutron and re-emerge again on the other side of the neutron. This applies to particles as well as to the propagation of quantum mechanical probability amplitudes. The electrostatic repulsion is therefore disabled by the neutron as no interaction can propagate through the neutron. In General Relativity terms, no interaction energy that enters an event horizon can emerge again on the other side. In this model, it is therefore the effective space-time geometry and curvature that makes the neutron a perfect electric field insulator relative to the $Q = 0$ tube. The mathematical expression of this fact in terms of (4) is that when taking an apparent short-cut over the neutron, any field expressed as $E \equiv \frac{\alpha}{R} + \frac{\beta}{R^2} + \frac{\gamma}{R^3} + ...$ will vanish as, due to the space-time curvature, $R \to \infty$ when attempting to come out on the other side of the neutron boundary 2-surface. We denote the topology of the deuteron pair neutron and proton by N#P and placing another proton in the $Q$

= 0 tube and topologically connecting this null boundary surface to the neutron with at least one point in common is in this model denoted by P#N#P.

We now take a second deuteron and align the two Q = 0 tubes as illustrated in Figure 2.

In this Figure 2, the spins of the two deuterons are antiparallel in order to produce an S = 0 state of ${}^{4}_{0}He$, where it is assumed that at least two additional Fusion Products, such as γ-quanta with pairwise antiparallel helicity, are produced. The two deuterons limit null surfaces are drawn in a slightly different way in anticipating the discussion below. This particular nucleon configuration is denoted from left to right as a P#N+N#P null surface topology. In Figure 2, the deuteron spin vectors are drawn in opposite directions and away from each other. The alternative S = 0 fusion with the identical topology P#N+N#P is that the spin vectors are in opposite directions but pointing toward each other. Both the cases with anti-parallel spins pointing away from each other and pointing toward each other are referred to as S = 0 → S = 0 transitions. For an exactly stationary space-time in the sense of General Relativity, which is here interpreted as the temperature limit T → 0, no state transitions can occur. This means that neither iso-spin transitions changing roles between protons and neutrons, nor spin transitions changing directions of spins, can occur. This means in turn that for low enough temperature, the deuteron configurations freeze into the P#N+N#P configuration with anti-parallel spins either pointing towards or away from each other. In the present description, the configuration of spins pointing away from each other will be used for the purpose of illustration, but the principles are often interchangeable between spins pointing towards or pointing away, in particular under time reversal symmetry.

The S = 1 deuteron is a boson. We can therefore bring the two deuterons with Q = 0 tubes aligned arbitrarily close together in absence of electromagnetic repulsion, and without a Pauli Exclusion Principle force arising at close distance tending to pull the two deuterons apart as the spins of each fermion in each deuteron is anti-parallel. In fact, the only exchange interaction is the attractive boson exchange interaction. We now take the deuterons close enough for the short range attractive nuclear forces to take over and which at least with some non-zero probability will result in nuclear fusion. In this simplified model, we obtain ${}^{4}_{0}He$ production of spin S = 0 states by fusion in the limit of impact energy $E_k = 0$, which for an ensemble in an ideal gas approximation for Boltzmann constant $k_B$ is $E_k = \frac{3}{2} k_B T$ and corresponds to the temperature T = 0.

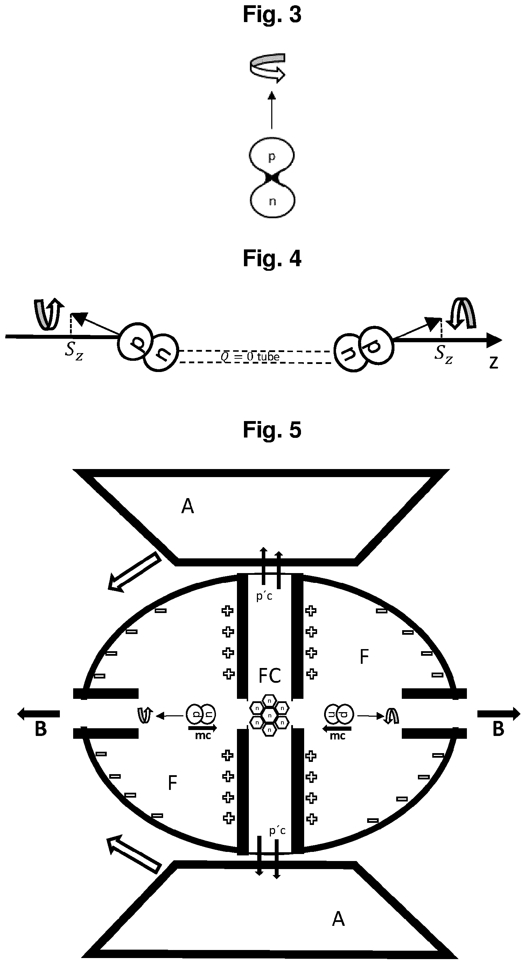

One may ask how realistic the above simple approximation model and application really is. We can generalize the above model by performing a homeomorphic transformation of the boundary null surface construction in Figure 1 by continuously deforming the space-like 2 surface in the plane z = 0 as illustrated in Figure 3.

Figure 3 illustrates a continuous homeomorphic deformation of the simple Kerr-Newman model depicted in Figure 1. This system is topologically denoted N#P. Such a deformation is achieved by smoothly compressing the ellipsoid in Figure 1 at the equator z = 0. The long-distance behavior of the stretched out intermediate region can be approximated by an attractive Yukawa potential field $V(r) = -\alpha \frac{e^{-m_s r}}{r}$ for some α and $m_s$. A short-distance repulsive term complementing this attractive potential in order to generate a stable system is provided in the text below (V(r) = $+\frac{g_v^2}{4\pi c^2} \frac{e^{-m_v r}}{r} - \frac{g_s^2}{4\pi c^2} \frac{e^{-m_s r}}{r}$). If $\psi_n$ is a solution to dynamical equations describing how the energy-momentum distribution of the neutron propagates at the horizon null surface with r = $r_0$, or equivalently if $\frac{1}{m_\pi c^2} \psi_n^* \psi_n$ describes the probability of locating a particle with mass $m_\pi = m_s$ carrying this energy-momentum density field, then

$$\psi_n^* V \psi_n = \alpha \frac{e^{-m_s(r-r_0)}}{r-r_0} \psi_n^* \psi_n$$

describes how this rapidly decreasing density propagates to the exterior of the horizon with r > $r_0$. A corresponding solution for the proton is $\psi_p$, where we assume that an identical particle $m_\pi$ is propagating the proton field, in the event that we assume that the energy-momentum density propagation field is carried by a particle with mass $m_\pi$. In a linear approximation, the field in a neighborhood of points intermediate between the neutron and proton is carried by an overlap amplitude $\psi = \left( \alpha \frac{e^{-m_s(r-r_{0n})}}{r-r_{0n}} \right)^{\frac{1}{2}} \psi_n + \left( \alpha \frac{e^{-m_s(r-r_{0p})}}{r-r_{0p}} \right)^{\frac{1}{2}} \psi_p$ with density $\psi^* \psi$. The neutron and proton null surface horizon formation itself represents, from a QCD point of view, closed trapped surfaces generated by the confined quark interaction gluon null field propagations. The horizon formation from a strong gravity point of view is either regarded as generated by strong Brans-Dicke scalar fields or a strong gravity obtained by formally taking the limit in c.g.s. units $G \to 6.7 \cdot 10^{30}$ for Newton gravitational constant $G$. From the strong gravity point of view, the null surfaces represent a Kerr-Newman event horizon in geometrized units with parameter $a = \dfrac{J}{M_D}$ for deuteron mass $M_D$ and $a^2 + Q^2 = M_D^2$ for proton charge $Q$. In this case, the inner and outer horizons degenerate to a single horizon with ergosphere. This ergosphere is not indicated in Figure 3.

The above model and the conclusions of $_{0}^{4}He$ fusion at $T = 0$ do not change under this homeomorphic transformation.

There is however one general adjustment to the above model that is required, and that decreases the fusion efficiency or rate as we in the general case cannot prepare the two deuteron Fusion Material quantum states exactly as depicted in Figure 2. The significance of this adjustment in the model increases in different embodiments using heavier nuclei. We can at best align the two spin projections along the z-axis on a spin projection cone, and therefore some electrostatic repulsion will arise on the average.

This effect is illustrated in Figure 4, showing how a small non-zero electric repulsion arises on the average from impossibility to exactly prepare the quantum states as $S = S_Z$. A small residue means that the $Q = 0$ tube remains at close distance.

To estimate the order of magnitude for this effect, we consider a single deuteron as an isolated dynamical system at rest in the laboratory system inertial reference frame, and consider $S = 1$ as the ground state of this system. We now add intrinsic energy and intrinsic angular momentum to the system by adding $\gamma$-quanta from two beams with cancelling momentum by which the deuteron remains on the average at rest. Following basic quantum principles, at excitation state $K$, the $S_Z$ states can be denoted by the integer sequence $K$, $K$ - 1, $K$ - 2, ..., 0, -1, -2, ... - $K$ + 1, -$K$, and with $S^2$ kept at fix value when projecting $S$ on different $S_Z$. In this sequence, for Planck constant $h$, the constant $\hbar \equiv h/2\pi$ is set to $\hbar = 1$. This means in this simple model that the electromagnetic repulsion between the protons will *increase* from $S_Z = K$ with decreasing norm $|S_Z|$. If a geometric fraction $r_i$ of each proton $i$ can be reached by each other thorough space-like, time-like or null geodesics, and disregarding quantum effects such as tunnelling, the classical potential energy for coupling constant $\alpha$ is approximately:

$$E = r_1 r_2 \frac{\alpha Q_1 Q_2}{R} \qquad (5)$$

Equating this energy in a symmetric geometric configuration $r \equiv r_1 = r_2$, such as in Figure 4, with the ideal gas approximation $E = \frac{3}{2} k_B T$, at distance $R = 4$ Fermi, we have approximately $T = r^2 5 \times 10^9 K$ and we are back at plasma fusion temperatures unless $r^2 \sim 10^{-4}$ or smaller. Cold fusion will therefore only be achieved for $S = 0$ state $_{0}^{4}He$ for the quantum states $S_Z = K$ fusing with quantum states $S_Z = -K$. In other words, one aim in non-relativistic terms is obtaining a vanishing orbital angular momentum $\boldsymbol{L} = 0$ in the superposition $\boldsymbol{J} \equiv \boldsymbol{L} + \boldsymbol{S}$. The space-time geometry with a combination of a Kerr and a Kerr-Newman geometry, together with homeomorphic transformations as illustrated in Figure 3, is also rather complex and a non-zero screening factor $r = r(x)$ can be included in (5) in order to allow for electromagnetic field lines from the upper hemisphere in Figure 1 to be bent back into the $Q = 0$ tube by the space-time curvature around the neutron.

The Fusion Reactor embodiment below will be approximated by $r = 0$, while a non-zero $r(x)$ will be added into the Battery and Fuel Cell embodiments (see below) using a dielectric function symbol. Adding a residual electromagnetic repulsion requires an adaption of the illustrated embodiments accordingly.

Moreover, the Gibbs density $\rho$ for a system in thermodynamic equilibrium at temperature $T$, Hamiltonian H and Boltzmann constant $k_B$ is for some $C$:

$$\rho = C e^{-H/k_B T} \qquad (6)$$

The equation (6) can be taken over immediately to quantum theory as a von Neumann density, from which follows that in the limit $T \to \infty$ we have $\rho \to C$ and all quantum states are equally probable (see P.A.M Dirac, The Principles of Quantum Mechanics (Oxford at the Clarendon Press 1947, Third Edition), Section 33, p. 130-135). This means that the average electromagnetic repulsion will increase with increasing temperature. We wish to maintain the space-time geometry produced shielding by neutrons and simplify quantum state preparations by keeping the temperature low.

On the other hand, one space-time geometry factor is improving the situation. The mass of the proton is approximately 938.3 $MeV/c^2$ and the neutron mass is 939.6 $MeV/c^2$. When applying the Kerr-Newman geometry in (4), the neutron effective boundary null surface space-like projection will be slightly larger than the proton boundary surface, thereby providing more shielding. Restoring the value of $\hbar$ in the above integer sequence $K$, $K$ - $1\hbar$, $K$ - $2\hbar$, ... , 0, -1$\hbar$, -2$\hbar$, ... - $K$ + $1\hbar$, -$K$, it is seen that it is in general sufficient to prepare the quantum states with $S_Z$ close enough to the values $\pm K$ rather that exactly $\pm K$ in order to achieve cold fusion. In this particular deuteron embodiment and at Cold Fusion temperatures we can reduce the general model to just the triplet state $S_Z$ = {$\pm 1\hbar$, 0}.

In this deuteron embodiment example, the dynamical or quantum state preparations may be achieved for example by applying a classical magnetic field $B$ that will split the deuteron energy states due to an effective magnetic moment $\mu$ of the deuteron parallel to the spin, this energy splitting is obtained from the Hamiltonian term $H_B$ = $\mu \cdot B$ for small velocities $v \ll c$ at Cold Fusion. The difference in the energy levels for different $S_Z$ can be increased by increasing the magnitude of the vector $B$. A quantum state filtering can now be achieved by applying additional classical electromagnetic fields in order to remove the energy states that differ from $S_Z \approx \pm K$. Alternatively, this filtering can be achieved by applying Quantum Electrodynamics (QED), electro-weak, QHD or QCD filters in such a way that the scattering amplitude is small for the $S_Z \approx \pm K$ states, i.e. the states $S_Z \approx \pm K$ will continue through the filter, while other states are scattered away from for example a beam.

In the above model illustrated by Figure 1, the discontinuity of the metric was disregarded in the equatorial plane $z$ = 0. The mathematical model can be improved by adding an adiabatic cut-off for the electric field in the limit $z \rightarrow 0$ in the region $z > 0$, and adiabatically cutting off a possible energy-momentum density difference in the limit $z \rightarrow 0$ in the region $z < 0$. This may be combined with topological identifications similar to standard treatment of the Kerr-Newman ring singularity in General Relativity.

The present method does not depend on the particular mathematical model used to describe the method. The space-time geometry model above was built in such a way that known analytic solutions of the Einstein equations (1) could be utilized for simplicity. In addition, several other mathematical as well as physical simplifications were used above. More general mathematical models of this deuteron embodiment of Cold Fusion may also be constructed using numerical methods. The present method does not depend on any particular mathematical or physical models and approximations used to describe the method.

In particular, the deuteron embodiment is illustrated in Figure 1 through Figure 4 classically in the sense that the neutron and the proton have a given order in the N#P null surface formation. An embodiment of the present method, such as illustrated in Figure 5, may use an electric field E to order the sequence N#P according to Figures 1-4. The present method does not depend on considering the neutron and proton with each particle given fixed classical properties. The particles may be considered as assigned such fixed properties in which case the field $E$ in Figure 5 (see below) tends to order the neutron and proton in the N#P formation with the illustrated orientation. Alternatively, in a quantum field model the iso-spin n-p rotations or oscillations are interchanging the neutron and proton states. In this latter quantum model, the electric field E is considered as polarizing the iso-spin with iso-spin expectation values or shifted iso-spin probabilities as illustrated in Figures 1 through 4.

In the above, the Fusion Product $^4_0He$ in state $S$ = 0 should in the general case be regarded as a collective symbol for a number of possible nuclear fusion channels. For instance, the symbol may collectively denote the reaction channels for protium $^1_0H$, deuteron $D = ^2_0H$, triton $^3_0H$ and neutron $n$:

$$D + D \rightarrow ^3_0He + n \qquad \rightarrow ^3_0H + ^1_0H$$

Many other fusion reaction channels may also occur. However, for reasons of brevity and clarity, in the embodiments presented here the objective will be to pin-point the specific channel $D$ + $D \rightarrow ^4_0He$. The actual channels that the general symbol $^4_0He$ represents depends among other things total angular momentum $J = L + S$ and on the impact energy $E_k$ or the equivalent energy T. The actual channels that a particular embodiment of the present invention targets for production have an impact among other thing on the design geometry of the Fusion Reactor and Accumulator, choice of materials used for the construction of various components etc. For example, regarding the fusion as inelastic scattering of energy-momentum or particles, this scattering amplitude is angle-dependent. The applicability of the present method is essentially independent of the actual reaction channels used in any particular embodiment.

**Embodiments of the present invention**

Hence, the present method is a method of dynamical state preparations to achieve Cold Fusion, that can be applied to any class of embodiments that require energy generation.

The dynamical state preparations for the embodiments described herein are in practice achieved by engineering electromagnetic fields. Two exemplary embodiments, or more precisely two classes of embodiments, will be presented below. These embodiment classes are:

- Fusion Reactor embodiments

- Battery and Fuel Cell embodiments

With regard to Fusion Reactor embodiments, these embodiments do not depend on whether the present method is applied for supplying energy for an autonomous system or if the present method is applied in order to provide distribution of energy through a distribution network. The distributed energy may be of any form such as heat of any material such as water, electricity or any other form of electromagnetic energy and on any scale. The Fusion Reactor embodiments do not depend on any particular scale of the energy or power production. The scale of energy or power production is partly related to the independence of the present method on geometrical scales and on the scales under which the Power Control operates. For autonomous systems, the method can be applied on arbitrary small scale of arbitrary positive integer $n$ in $10^{-n}$ W for powering individual electronic or optical circuits of any scale, contemporary small-scale engines and so-called "nano-engines".

Moreover, the present method can be applied on arbitrary large scales such as contemporary transport engines such as car engines or other automobile engines, building and construction machines such as excavators, manufacturing machines, telecommunication and navigation stations, trains or similar transport system vehicles of contemporary design, aircrafts of any design, boats and naval ships of any size, space vehicles, submarine vehicles etc. For energy distribution systems, the method can be applied on any energy production and distribution scale. A power plant may generate energy from the scales of isolated buildings, small settlements, isolated settlements, as well as to power plants of arbitrary order of magnitude exceeding 1GW and 1TW, i.e. for power plants of arbitrary positive integer $n$ in $10^n$ W. The now enumerated possible embodiments do not constitute an exhaustive list.

With regard to Battery and Fuel Cell embodiments, these embodiments can in principle be used for the same or similar purposes as for the Fusion Reactor embodiments, which includes in particular power plants, conventional transport engines such as car engines or other automobile engines, building and construction machines such as excavators, manufacturing machines, telecommunication and navigation stations, trains or similar transport system vehicles of otherwise conventional design, aircrafts of any design, boats and naval ships of any size, space vehicles, submarine vehicles etc. The Battery and Fuel Cell embodiments are also suitable in conventional mobile and other communication devices or transportable devices, as well as individual electric and optical circuits.

The present general method of Cold Fusion energy production by dynamical state preparations can be performed with any frequency of refuelling or refilling Fusion Material or Doping Material, as well as with any frequency of refilling in comparison with the life span of the entity consuming the produced energy. For example, the duration of the Fusion Material may exceed the lifespan of an autonomous system such as a mobile device. The Fusion Material may be used to define the life span of a space vehicle. A car or a transport vehicle may be refilled once every few years. A nuclear fusion power plant may be refilled with Fusion Material or Doping Material on a regular basis.

**Fusion Reactor Embodiments** - **General Specifications**

The following general specification applies for Fusion Reactor embodiments of the present invention.

1. The method utilizes a Fusion Reactor, an Accumulator and a Power Control. The Fusion Reactor power production capacity is any from 1 W and upwards to $10^n$ W for integer any $n$. As a particular example, for $n$ = 11 the Fusion Reactor is a 100 GW reactor. A Fusion Reactor may produce any from 1W and downwards to $10^{-n}$ W for any integer $n$. As a particular example, for $n$ = 6 the Fusion Reactor is a 1 $\mu$W reactor. Different Fusion Reactor implementations are exemplified by a power production of > 1W, or > 1kW, or >1MW, or >1GW, or >100 GW. The Accumulator may absorb energy $E_a$ in any fraction $\dfrac{E_a}{E_p}$ of the energy produced $E_p$, or any fraction $\dfrac{P_a}{P_p}$ of the power produced, the latter defined as energy produced per second. As particular examples, the Accumulator may absorb the fractions 0.01, 0.1, 0.5, 0.999999, corresponding to absorbing 1%, 10%, 50% and 99.9999% of the produced energy. The Power Control may control the power production in any granularity of the interval from 0 W to maximum power production capacity $P_{max}$ of the Fusion Reactor. The resolution of the Power Control can be defined as $\frac{P_{max}}{n}$ for any integer $n$. As particular examples, $n = 10$, $n = 100$, $n = 1000$ and $n = 10^6$ gives a Power Control in steps of 10%, 1%, 0.1% and one millionth of the maximum power production capacity of the Fusion Reactor. The Power Control is achieved by varying any the parameters determining the power production rate.

2. In principle, the Input Material, comprising the Fusion Material or from which the Fusion Material is extracted, may consist of solid material, liquid material or gaseous material of arbitrary isotope of arbitrary chemical element with atomic number Z in the interval $1 \leq Z < 26$, or any combination thereof, or any composition in which such elements are included. One aspect of the present invention is focused towards using hydrogen, such as deuterium, or possibly protium or tritium, as the Fusion Material. Such Fusion Material may be extracted from heavy water $D_2O$ Input Material in two steps. First, heavy hydrogen gas may be formed, after which D nuclei may be extracted by ionization, $D_2O \rightarrow D_2 + O \rightarrow 2D + excess\ material$. As will be discussed hereinbelow, the inventive principles used to achieve Cold Fusion of hydrogen are readily extendible also to other basic elements, such as lithium.

3. The input Material is most conveniently a composition of neutral atoms, ionized matter may also be used as the Fusion Material.

4. The Fusion Reactor operating temperature is 0-$10^4$ K. This temperature refers both to the temperature of the Fusion Reactor itself, and to the temperature of the Fusion Material in the event that the Fusion Material is a collection of particles and a temperature can be defined. A collection of particles as Fusion Material is implemented by allowing Fusion Material to accumulate in the Fusion Reactor Core or by directly inserting the Fusion Material into the Fusion Reactor Core by mechanically inserting a gas container or a liquid container. The operating temperature may be any sub-interval of 0-$10^4$ K. Operating temperatures and the temperatures at which Cold Fusion is initiated are exemplified by a temperature of < $10^4$ K (Cold Fusion range), or < 1950 K, or < 950 K, or < 500 K, or < 125 C, or < 50 C, or < 5 C, or < - 30 C, or < - 60 C, or < 150 K, or < 77 K (liquid nitrogen), or < 30 K (hydrogen phases). The temperature intervals used depend on the particular application under consideration. For example, in a specific Battery & Fuel Cell application, the temperature range depends among other things on the particular temperature dependence of thermal conductivity, electric conductivity, as well as melting points of the materials used.

5. When restricting to the Fusion Reactor implementations, the method according to the present invention differs from thermonuclear fusion in that the impact energies used are relatively small. The impact energy $E_k$ is defined as the total sum of kinetic energies $E_k = E_{k1} + E_{k2}$ of the two fusing particles, which for the non-relativistic energies used here is approximated by $E_{ki} = \frac{1}{2} m_i v_i^2$ for mass $m$ and velocity $v$, and for each particle index $i$ for the indices 1 and 2. In order to fuse particles using thermonuclear fusion, the required impact energies in order to overcome the Coulomb repulsion are > 80 keV, and more generally > 100 keV. The present method is applying impact energies for fusing two hydrogen isotope nuclei as exemplified by a total impact energy of < 1 keV, or < 220 eV, or < 1 eV, or < 100 meV, or < 1 meV, or < 0.01 meV, depending on the concrete embodiment as exemplified herein. Of course, any such impact energy can be translated to a corresponding temperature, as applicable.

6. The Fusion Reactor itself may consist of, comprise and be built from any suitable material. In particular, the Fusion Reactor may be a solid chamber holding an internal vacuum. However, the whole or part of the Fusion Reactor chamber may also be any gas, a liquid, or a solid material. As a specific example, the Fusion Reactor may be a solid-state implementation using conventional electronics industry materials such as silicon, rare earth metals etc. The material(s) that constitutes the Fusion Reactor by filling various chambers or shielding is referred to herein as Moderator Materials, and when Moderator Materials are applied, these are used taking part in the dynamical state preparations to allow Cold Fusion. The function of the Moderator Materials is distinct from the function of materials that participate in the actual nuclear fusion reaction, herein denoted Fusion and Doping Materials. Nevertheless, Moderator Materials may still be the same material, such as $D$, for example in the case the density of a deuteron beam is used to control the dynamical states of the fusion deuterons.

7. Fusion Reactor Materials, Accumulator Materials and Power Control Materials are the materials or compositions from which the Fusion Reactor, Accumulator and Power Controls are built.

8. The Fusion Reactor and Power Control engineers the dynamical state preparations of the Fusion Materials in the Fusion Reactor by applying electromagnetic fields as will be described hereinbelow.

9. This dynamical state preparation engineering includes engineered control over nuclear spin of the Fusion Material. The spin state preparations may use magnetic fields to project the spins relative to the direction of these magnetic fields as described herein. Such a magnetic field may be a single magnetic field generated by a single component in the form of a single current loop using induction to generate the magnetic fields or constructed from a single magnetic material generating the field. The magnetic field may also be a synthetic field with a resulting field constructed from any number of different current loops or any number of magnetic materials, or a combination of current loops and magnetic materials including a magnetization $M$ of paramagnetic and di-amagnetic materials. The resulting field may be calculated as a first approximation by using the principle of superposition, i.e. simply adding the contribution from the different components at each point in space to obtain the resulting field. The direction of the field in each point is determined by the particular application as described herein. The field strength $|H|$ of an applied field $H$ may be any strength in the interval 0 - 1000 T, as well as exceeding 1000 T. In particular, the applied magnetic field is for example, for different embodiments and with $1nT$ denoting $10^{-9}T$, $1\mu T$ denoting $10^{-6}T$ and mT denoting $10^{-3}T$, of strength above the magnetic field of the Earth, or > 100 $\mu$T, or > 500 $\mu$T, or 50 mT, or > IT, or in the interval $100\ \mu T \leq |H| \leq 50mT$ such as for small-scale applications such as individual Batteries or Fuel Cells, or alternatively in the interval $1T \leq |H| \leq 1000T$ such as for large-scale installations of Fusion Reactors.

10. The Accumulator absorbs energy generated by the Fusion Reactor. The Fusion Reactor delivers the energy to the Accumulator in form of massive or massless particles or heat transport through Accumulator Materials, Reactor Materials, Power Control Materials and Absorber Materials.

11. The Accumulator can absorb the energy as heat, as electromagnetic energy or electric currents, or as any combination thereof. This includes photovoltaic translation from radiation to electrical energy.

12. The Accumulator can be made from or contain any suitable material in any solid, liquid and/or gaseous form, and of any suitable density and temperature. Any field, such as for example electromagnetic fields, can be applied onto the Accumulator and to the interior of the Accumulator. In particular, electromagnetic fields are applied in such a way that, depending on material, photovoltaic elements and photo electric effects can be utilized for electric current and electric energy generation.

13. The nuclear spin control may also be used to direct the produced energy to the Accumulator. This is achieved by allowing only such spins to pass through Spin Filters where the spin dependent cross section is significant in de desired direction of the Accumulators.

14. The Power Control may be used to actively control any or all of the following parameters of the Fusion Reactor, here regarded as a confined chamber, including any combination of the following exemplary parameters: Pressure; Temperature; Volume in 3-dimensial spatial space; Moderator Material composition and density; Electromagnetic field intensities in $F_{ab}$ and $T_{ab}$; Electromagnetic field directions in $F_{ab}$ and $T_{ab}$; Electromagnetic field frequency components in $F_{ab}$ and $T_{ab}$; Separation of input Fusion Material and output Fusion Products; Fusion Material composition; Fusion Material quantity; Fusion Material phase form; Fusion Material density; Fusion Material distribution in 3-dimensial spatial space; Doping Material composition; Doping Material quantity; Doping Material phase form; Doping Material density; Moderation of Fusion Material - Energy spectrum filtering, translation and intensity (amplitude) rescaling; and/or Moderation of Fusion Products - Energy spectrum filtering, translation and intensity (amplitude) rescaling.

15. Optional Doping Material of any suitable isotope of any suitable chemical element, any suitable ionization, any suitable composition of such isotopes, elements and ionizations, and of solid, liquid or gas form or any suitable combination thereof, may be used to stimulate nuclear fusion. In the simplest form, Doping Material consists of neutrons or high-neutron isotopes of any chemical element and of arbitrary ionization. One simple form of doping is low energy or thermalized neutrons that can be extracted from another nuclear fusion or nuclear fission process provided within the Fusion Reactor Core.

16. The method does not depend on any particular geometrical shape of the Fusion Reactor, Accumulator or the mechanical parts of the Power Control, as the dynamical state preparation engineering described herein can be adapted to different geometrical shapes and can be split into different separate shapes.

17. The Fusion Reactor, Accumulator and Power Control may further have any suitable physical size. In particular, these sizes may vary in size upwards and downwards. A practical limiting factor is contemporary available technology. For instance, the physical boundaries of "nano technology" limits how small components may be built. The physical extension in the dimension or direction of maximum extension of any of the components used in the construction may be, for different embodiments, any value in the interval 0 - 100 km. In particular this interval may be $10^{-10}$ - 1000 m, $10^{-10}$ - 500 m, $10^{-10}$ - 100 m, $10^{-10}$ - 10 m, $10^{-10}$ - 1 m, $10^{-10}$ - $10^{-1}$ m, $10^{-10}$ - $10^{-2}$ m, $10^{-9}$ - $10^{-1}$ m, $10^{-9}$ - 1 m, or $10^{-8}$ - $10^{-3}$ m. Quantum and nano-technology applications are typically contained within $10^{-8}$ m, cars $< 10^{-1}$ m, local power plants < 10 m, GW reactors $< 10^{2}$m, 100km constructions may include long distance Fusion Material injection.

18. The geometrical shapes, configurations and sizes of the Fusion Reactor, Accumulator and Power Control can be but need not be constant in time. Regarding nuclear fusion as scattering, the scattering angle of the Fusion Products depends for example on the impact energies, Fusion Material and Doping Material. An adjustment of for example the position of the Accumulator may therefore be required in dependence of these factors. In general, any of said geometrical shape, configuration and size can be an arbitrary function of time. In particular, the shape of the Fusion Reactor can be an ellipsoid in cross-section, but may have any suitable shape.

19. Different dynamical state preparation objectives may be achieved in the present method in various orders. In the example illustrated in Figure 5, a spin control using a magnetic field $B$ is applied before a maximal proton-proton shielding by neutrons is applied through an electric field $E$. However, the order in which various such dynamical state preparation steps are taken to control the Fusion Products can vary.

20. Similarly, the physical location of where such dynamical state preparation steps are taken may also vary. Hence, such steps may be executed in any location within the Fusion Reactor, or even outside the Fusion Reactor. Figure 5 shows an implementation of the method where a proton-proton shielding is executed by applying an electric field $E$ within the Fusion Reactor. In a different embodiment, this engineering step could have been performed outside of the Fusion Reactor and before injecting the Fusion Material into the Fusion Reactor.

21. In the present method, the Fusion Material can be injected into the Fusion Reactor in various ways. In Figure 5, an example of an implementation of the invention and method is illustrated in which a deuterium nucleus beam is injected into the Fusion Reactor. In a different embodiment, the way in which the Fusion Material is injected into the Fusion Reactor may vary. For instance, it need not be in the form of a beam, but could instead be mechanically transported into the Fusion Reactor. Also, the Fusion Material could be injected using more than one beams, such as a plurality of parallel beams.

22. Furthermore, the Fusion Material can be brought together for nuclear fusion to occur in various ways, and the fusion components can have various composition. Figure 5 below shows one possible implementation in which symmetric material, i.e. the same material on both sides of the Fusion Reactor, is injected as beams. The Fusion Materials symmetrically injected may itself be of various Fusion Material compositions, and the method to bring the Fusion Material together in the Fusion Reactor may also vary. For example, one type of Fusion Material may be inserted by mechanically transporting it into the Fusion Reactor, and others may still be injected as beams. The density of Fusion Material in any phase of the power production process measured as number of fusion particles per unit of volume element is in the interval 0 - 1 particles per (f. m.)$^3$ = $(10^{-15}$m$)^3$. The Fusion Material particle number density of 1 particle per (f. m.)$^3$ corresponds to nuclear matter density in the QHD phase and in the gravitational field of the Earth. In particular, the Fusion Material particle number density used may be $10^{-10}$ - 1, $10^{-10}$ - 0.5, $10^{-11}$ - 1, $10^{-13}$ - 1, $10^{-15}$ - 0.8, $10^{-20}$ - 1, $10^{-30}$ - 1, or $10^{-45}$ - 1. The Fusion Material number density in terms of number of particles per unit SI volume instead of per unit cubic Fermi will be denoted by $n_F$ in the text below.

23. The sequence of how Doping Material is applied can also vary, as can any other preparation of the Fusion Material. Figure 5 shows a possible implementation of the method in which a single doping step is performed inside the Fusion Reactor core. This doping could be applied in any number of steps and before injecting into the Fusion Reactor, or at any location within the Fusion Reactor.

24. The average temperature, maximum temperature, minimum temperature of the process may vary, as may any particular pressure in any of Fusion Reactor, Accumulator or Power Control, in any compartment of these components. However, the average operating Fusion Reactor temperature $T$ according to the present invention is $0 < T \leq$

$10^4$ K. It is noted that this interval is also advantageous from an economical point of view, and the best economy is typically achieved around STP, in contrast to plasma physics fusion that requires $T \geq 10^6$. Preferably, the average operating temperature inside the Fusion Reactor is at least 0°C. Moreover, the average operating temperature inside the Fusion Reactor is at the most 1800 K, more preferably at the most 900 K, even more preferably at the most 350 K.

25. The individual dynamical or quantum states of individual atoms in the Fusion Material may vary, as may the individual quantum states of individual atoms in the Doping Material and the Fusion Products. The preparation of the Fusion Material, the preparation of the Doping Material or the processing of Fusion Products may instead be considered as operations performed on a collection of atoms, ions, nuclei, protons, neutrons or other particles. However, this preparation and processing can also be regarded as operations on individual dynamical or quantum states on individual atoms, ionizations, nuclei or operations on individual particle level such as operations on neutrons and protons. In the implementation example illustrated in Figure 5, the magnetic field B is indicated as a collective spin control mechanism.

26. Importantly, the present method does not rely on the presence of chain reactions. High temperature and plasma fusion often depend on fusion direct or indirect chain reactions to maintain a high temperature. An indirect chain reaction is here defined as part of the produced energy being re-directed or fed back to the plasma in order to maintain the plasma at high enough temperature for continued power production. The present method aims at controlled fusion and allows for nuclear chain reactions to occur, but the method does not depend on such chain reactions to occur. In particular, the method does not depend on such chain reactions for directly or indirectly producing adequate temperatures. Maintaining chain reactions at high temperature is both expensive to achieve, expensive to maintain and difficult to control, i.e. carries greater safety hazard, than low temperature non-chain reaction dependent production. Uncontrolled chain reactions are in effect nuclear explosions. This implies that the energy production using this invention is both economically more efficient as well as safer for the workers and the public as compared to conventional fusion processes. With regard to safety hazard in plasma fusion, it is often claimed that this type of nuclear fusion reactors are inherently safe. However, the required energy feedback into the reactor in order to maintain high enough temperature in effect creates mathematically a non-linear system and such systems are generally known to be able to enter into unstable states. In the present invention, such difficulties can be avoided altogether.

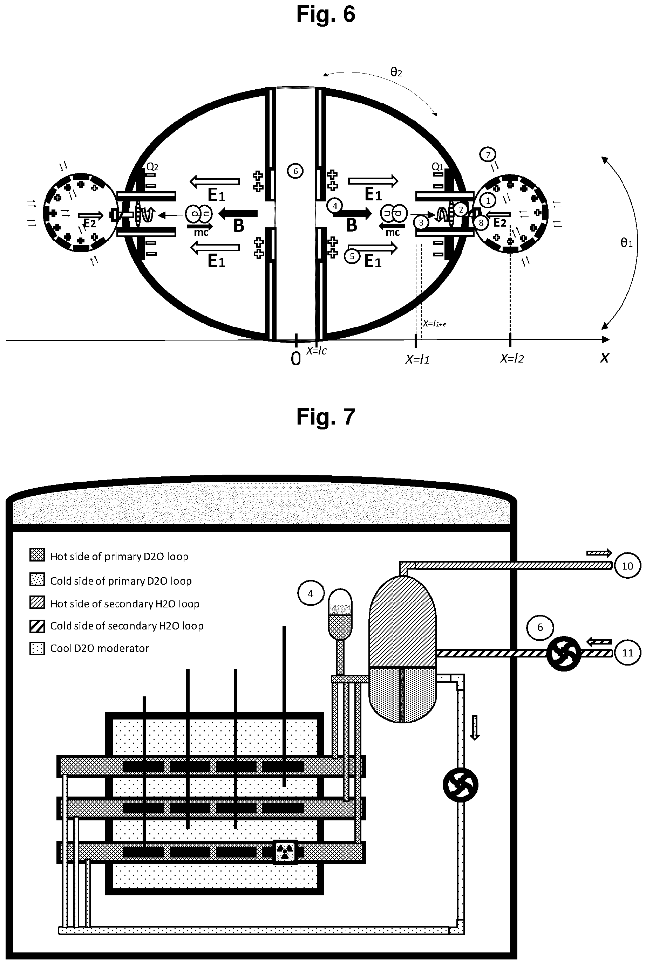

Figures 5 and 6 illustrate, in a X-Y plane cross-section, an illustration of one possible implementation of a device and method according to the present invention, and in particular an example of how to engineer dynamical state preparations of the Fusion Material with the help of electromagnetic fields acting on deuteron Fusion Material and neutron Doping Material. The deuterons in question are injected at a low velocity corresponding to a cold fusion temperature (as specified above). The n-p orientation for maximum proton-proton electromagnetic shielding is controlled by an electric field *E* and the nuclear spin control is achieved by a magnetic field *B*. In the simplest implementation these are static fields. The Fusion Reactor F core FC is in this example doped with neutrons and forms part of the overall space-time curvature engineering. Doping Material in the form of thermalized neutrons may be obtained from a separate nuclear fission or fusion process that is arranged and executed in a system external to the Fusion Reactor of the type illustrated in Figure 5. Such neutrons may then be injected into the Fusion Reactor Core through a separate Monochromator which is not shown in Figure 5. Such neutrons may then be injected into the Fusion Reactor Core through a separate Monochromator which is not shown in Figure 5.

The accumulator A absorbs energy of massless fields or massive fields. Quantum state filters are not included in the figure. The Power Control is to a substantial part consisting of electronics and software, and is not part of the illustration.

If nuclear fusion is used in this external Doping Material generation process, this needs not be a Cold Fusion process as is formally illustrated by $^3_0H + ^3_0H \rightarrow ^4_0He + 2n$. The accumulator A absorbs energy of massless fields or massive fields. Quantum state filters are not included in Figure 5. The Power Control is to a substantial part implemented using electronic circuitry and software executing on such circuitry, and is not shown in Figure 5. The unfilled arrows on the Accumulator(s) indicate that the geometric shapes, sizes and configurations may vary. For example, the Accumulator angle of radiation emission by the fusion process and subsequent absorption may change, and/or the Accumulator may be expanded with expanding angle of the Fusion Reactor Core, even during power production. The accumulation of energy in the Accumulator is increased by increasing the Accumulator area receiving the radiation from the Fusion Reactor Core. The accumulation of energy in the Accumulator is also increased by increasing the depth of the Accumulator. Conversely, the energy received by the Accumulator is decreased by decreasing the Accumulator area or depth of both.

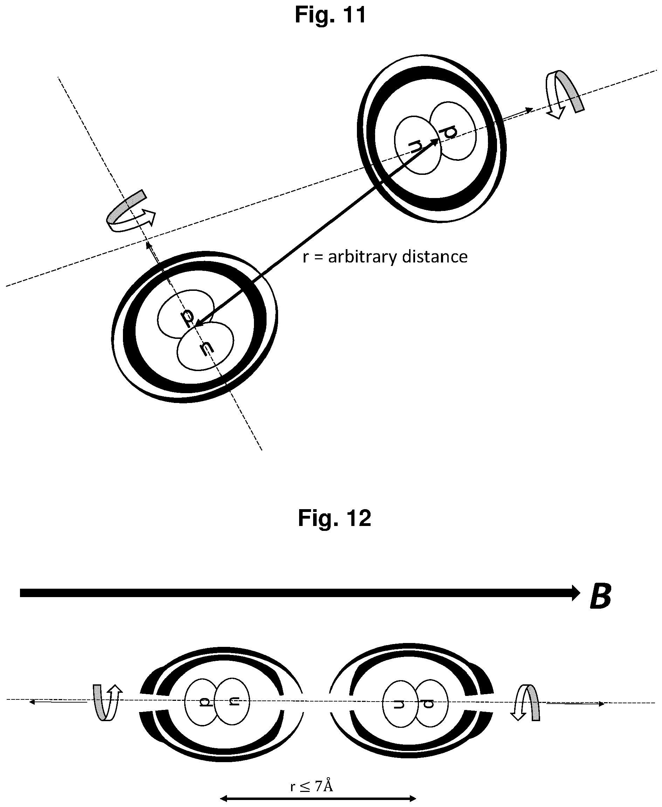

Figure 11 shows two hydrogen atoms at an arbitrary distance apart and with arbitrary spin orientations before an externally provided magnetic field is applied. The two atoms are here illustrated by two deuterium atoms and are drawn in a particular isospin ordering of the nuclei. The illustration shows the two deuterium atoms at an arbitrary chosen point in time and in an approximately spherically symmetric electron probability density state. The dark regions illustrate where the electrons are mainly located. Quantum mechanically this is described by regions where the probability of locating the particle is significantly different from zero. A probability density will be referred to as a density for short in the text below and in the Figures described below. These densities typically decrease as exponentials $e^{-r/r_0}$ for some constant $r_0$ with the distance r from a point of charge symmetry or an axis of charge symmetry generated by the nuclei. These non-zero regions of Figure 11 and the following Figures are not intended to show exact solutions of the equations describing the electron orbits (often taken as the Schrödinger equations), but only to illustrate the principles of the present invention. The relative dimensions of various parts in the figure are not proportional and again only serve to illustrate the principles; the electron orbits are at a distance in the order of 1Å from the nuclei while the size of the nuclei are in the order of $10^{-5}$ Å. The characteristic feature here, when disregarding matter condensation energies such as generated by Van der Waals forces, is that there is a repulsive force between the two electron densities tending to move the two atoms apart if they come too close, as well as a repulsive force between the two nuclei tending to move the two nuclei apart if they come too close, and therefore the hydrogen nuclei cannot fuse spontaneously. In this illustration and in the following illustrations, the electron orbits or densities are shown as a cross section in the (y,z)-plane of the paper.

Figure 12 shows two deuterium atoms with a separation of the nuclei of at most 7Å. The nuclei spins have been aligned by applying the magnetic field **B.** The sign +**B** or -**B** is immaterial. In this particular example the nuclear spins are illustrated as pointing away from each other, but they may also be pointing toward each other. The magnetic field will at non-zero probability orient the spins in this illustrated fashion. The densities do not change when this plane is rotated along the z-axis joining the two deuterium nuclei. A first modification of the electron orbits represented by the density, apart from orienting the nuclei by aligning the nuclei spins which also effect the electron orbits, is obtained by applying the magnetic field **B.** This will increase the probability of nuclear fusion in the particular iso-spin arrangement shown. The lack of electrons in a neighborhood of the common spin axis, or equivalently in a neighborhood of the **Q** = 0 tube, arise from two factors. The first factor depends on a Landau quantum number $n$ and arises when approximating the illustrated deuteron as a point particle generating a Coulomb field that interacts with the electron. Firstly disregarding the electron-proton interaction, the solutions of the electron Schrödinger equations in this case are for the co-ordinate dependent part in Landau gauge **A** = (-y, 0,0)$B_Z$, for a homogenous field **B** and for the $y$-coordinate in the plane perpendicular to the common $z$-axis or the magnetic field axis, with $y_0$ given by this axis, functions of the form $\chi_n(y) =$

$$C_n e^{-(y-y_0)^2/(2a_B^2)} H_n\left(\frac{y-y_0}{a_B}\right).$$ Here, $H_n(x)$ with $x = \frac{y-y_0}{a_B}$ are Hermite polynomials of order $n$, $a_B = \sqrt{\hbar/M_e\omega_B}$,

$\omega_B = |e|B_Z/M_ec$ (see L.D. Landau and E.M. Lifshitz, Quantum Mechanics (Non-relativistic Theory) (Pergamon Press 1977, Third Edition), §112, equation (112.9)). The energy levels are $E = \left(n + \frac{1}{2} + \sigma\right)\hbar\omega_B + \frac{p_z^2}{2M_e}$ and the first term is the Landau quantization. The first three Hermite polynomials are $H_0(x) = 1$, $H_1(x) = 2x$, $H_2(x) = 4x^2 - 2$. For odd quantum numbers $n$, the function $\chi_n(0) = 0$ and therefore the probability $P(y) \sim |\chi_n|^2$ of locating the electrons on and in a neighborhood of the z-axis vanish. A quantum number $n \neq 0$ implies a finite temperature $T \neq 0$. Next including the nucleus-electron interaction but disregarding the magnetic field, the hydrogen wave function for a separate quantum number $n$ is

$\psi(r,\theta,\varphi) = R_{nl}(r)Y_{lm}(\theta,\varphi)$, where $Y_{lm} = Ce^{im\varphi}P_l^m(cos\theta)$ and $P_l^m = (-1)^m(sin\theta)^m \frac{d^m}{d(cos\theta)^m}$, the latter which all vanish for $\theta = 0$ (and $m \neq 0$), i.e. vanish on the common axis. Therefore, for the complete system when both the nucleus-electron and magnetic field-electron interactions are taken into account, there exist system states where the electrons are not located in a neighborhood of the common axis, as it is not possible to form sums or products of wave functions representing the complete system using $\chi_n(y) = 0$ and $\psi(r,\theta,\varphi) = 0$ to obtain a non-zero value on this axis. This consideration also applies to forming linear combinations of atomic orbitals (LCAO) of such electron states. For such states and in the iso-spin configuration given in Figure 12, the hydrogen nuclei will fuse with a non-zero probability. The given iso-spin configuration is promoted by charge and electric field polarizations, or freeze out in that form by taking a low temperature limit $T \to 0$. The second factor in keeping the $Q = 0$ tube clean arises when taking the full space-time curvature into account. Considering the electron as a test particle in the Kerr-Newman geometry, the electron will trace out paths in this geometry such that a neighborhood of the $Q = 0$ tube will remain free of electrons. Due to proton-proton repulsion, the nuclei again tend to align the iso-spins as illustrated in this figure. A further effect illustrated in Figure 12 is that the electrons tend to collect on the average on the proton side, which further helps to keep the region around the common line between the nuclei clean from electrons in this configuration. The combined effect is an increased probability of nuclear fusion as the electron density repulsions between the two atoms and the proton-proton repulsion between the two nuclei have been reduced. From a space-time geometry point of view, the deuteron does not generate a spherically symmetric point particle potential, it instead generates a potential that is rotationally symmetric only around the common axis. In Figure 12, the magnetic field is illustrated as homogenous for simplicity, which means that the arrow $\boldsymbol{B}$ can be parallel translated to the common axis of the nuclei while remaining unchanged. The paramagnetic or diamagnetic response by the electron orbits to $\boldsymbol{B}$ are not indicated in Figure 12. Figure 12 illustrates a main finding of the present invention.

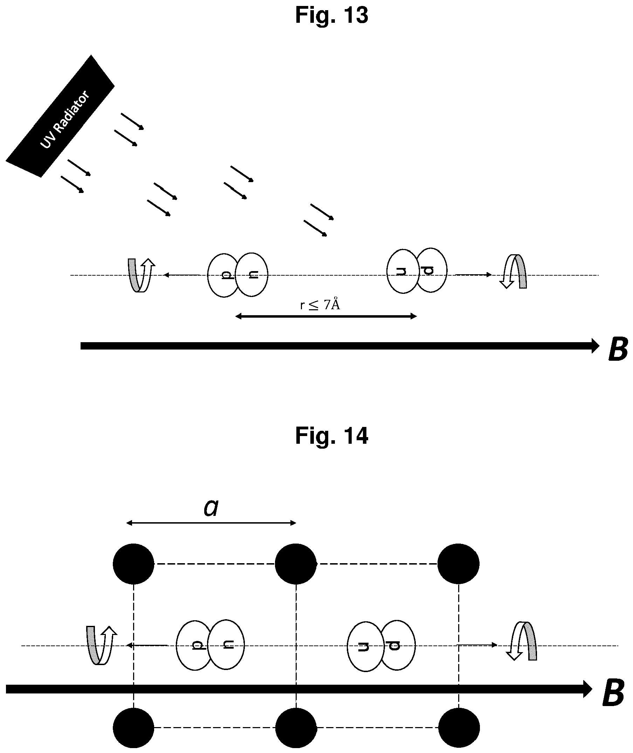

Figure 13 illustrates the result of the modification of the electron orbits after an additional step of applying ionization. This step removes the electron orbits altogether from a neighbourhood of the nuclei. The ionization in this illustration is achieved by applying electromagnetic radiation, using a per se conventional UV radiator (UV lamp).

Figure 14 illustrates the result of the modification of the electron orbits after an additional step of loading the hydrogen atoms into a hydrogen absorber, which additional loading step may be performed as an additional or alternative step to the ionization step illustrated in Figure 13. The hydrogen absorber is in this case illustrated, by way of example, by a simple cubic lattice in two spatial dimensions, the third dimension is not shown for the purpose of simplicity. The hydrogen absorber may be, for example, a simple palladium Pd metal. In this particular exemplifying case of Pd, the dark spots at lattice vertices represent the Pd core system. A core system includes the closed electron shells of Pd, but not the Pd valence electrons. The valence electron bands are not shown in Figure 14. The lattice constant $\alpha$ for the simple and clean Pd lattice is in the order of 4Å. The resulting modified electron orbits of the hydrogen atoms in the Pd lattice may be described as that the hydrogen electron are merging into the Pd lattice electron bands, and in this sense the hydrogen atoms can be regarded to an extent as free from the electrons even if not ionized prior to being loaded into the Pd lattice. This particular illustration, when taking the core systems as Pd and assuming for simplicity that Pd is a cubic lattice as in Figure 14 rather than face-centered cubic, shows a degree of loading of one hydrogen per four Pd atoms, and the resulting combined lattice may be formally described as $PdH_{0.25}$. More generally, the loading performed is $PdH_x$ for any value of loading ratio $x$. In the particular case of $x = 1$, the form for palladium is PdH. The first adjustment to Figure 14 in this particular PdH case is taking into account that palladium is face-centered cubic (fcc), which means that additional Pd cores are located at the intersecting diagonals of each of the sides of the cube, i.e. an additional 4 cores are added to Figure 14. The second adjustment to Figure 14 in this particular PdH case is to add 7 hydrogen atoms into the cube in order to obtain 8 hydrogen atoms. In order to minimize the internal energy of the system, these hydrogen atoms can be regarded as located in a symmetric way inside the Pd cube. In this case the average distance between the hydrogen nuclei is in the order of 1 Å.

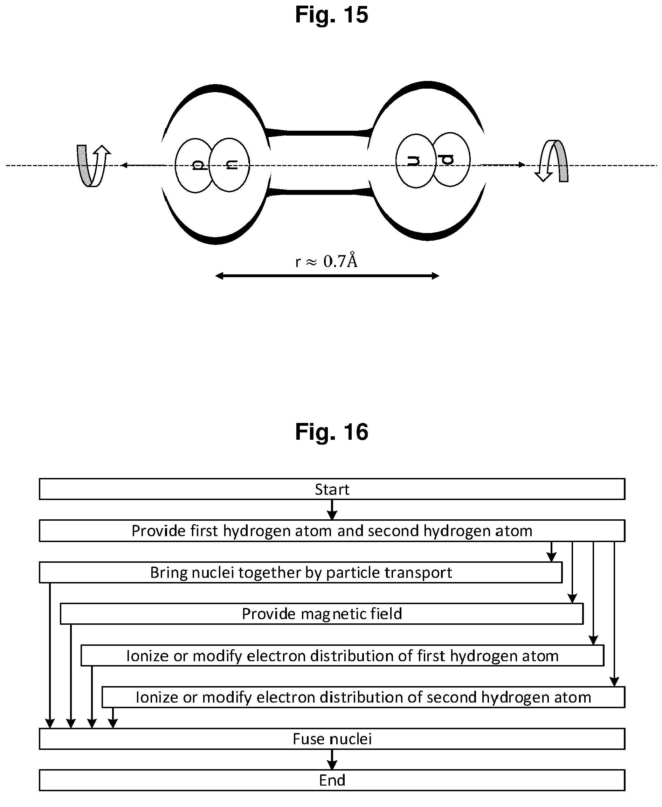

Figure 15 illustrates two deuterium atoms brought to a distance from each other of less than 7 Å by providing the two atoms as a hydrogen molecule $H_2$, or in hydrogen isotope deuterium notation as a $D_2$ molecule. The overlapping electron orbit density amplitudes in this case do not change the fact that a Q = 0 tube remains between the two nuclei in certain $l \neq 0$ and $m \neq 0$ states. This also implies a further modification of the electron orbits. In a hydrogen molecule the distance between the nuclei is in the order of 0.7Å. A hydrogen molecule with reverse nuclear spins represents parahydrogen. In standard terminology, Figure 15 illustrates for example a $\Sigma$ electron spin singlet state parahydrogen where the respective electron states are $l \neq 0$ $p$-states with opposite orbital angular momentum projections $l_z$ on the z-axis (the molecular or inter-nuclear axis) and covalently bonded by a single $\sigma_{p_z + p_z}$ bond. There is no density overlap in a neighborhood of the molecular axis for the particular states under consideration as the individual atomic electron configuration densities vanish in that region. It is realized that a magnetic field $\boldsymbol{B}$, according to the present invention, is applied also to the hydrogen molecule illustrated in Figure 15.

Hence, for all of these examples illustrated in Figures 12-15, a magnetic field $\boldsymbol{B}$ is used to align a first spin of a first deuterium nucleus in relation to a second spin of a second, neighbouring, deuterium nucleus so that a respective spin axis of the first and second spins are anti-parallel and directed either towards each other or away from each other, and further so that the first and second spins are projected on the common line between the nuclei in question, which common line is parallel to the magnetic field $\boldsymbol{B}$.

Furthermore, the electron cloud of said nuclei are modified by either principle illustrated in Figures 12, 13 or 14. In Figure 12, the magnetic field $\boldsymbol{B}$ is used to keep the common line of the nuclei and the spins of the nuclei clean from the electrons (this may be described as the electron distribution assuming a non-spherically symmetric form in which the probability for finding an electron on or near the common axis is lower than what would be the case with a spherically symmetric distribution; may also be described as "skewing" the electron distribution of the electron cloud away from a region at and near the common line); in Figure 13, ionization (prior or in connection to nuclei alignment) is used to completely remove the electrons; and in Figure 14, loading into an hydrogen absorber with a selected lattice structure achieves electron cloud modification. In the embodiment illustrated in Figure 15, the hydrogen atoms are brought together by forming a hydrogen molecule, which then is aligned using a magnetic field $\boldsymbol{B}$ which also achieves said keeping the common line between the nuclei in question clean from electrons.

Figure 16 is a flowchart illustrating a first embodiment, below referred to as Fusion Reactor.

In a first step, the method starts.

In a subsequent step, a first hydrogen atom and a second hydrogen atom are provided. The hydrogen atoms are both either deuterium or both tritium.

In a first subsequent step, a respective nucleus of said hydrogen atoms are brought together at a distance of at the most 7 Å. This bringing together takes place by some sort of particle transport, such as by injection or particle (deuterium nucleus, tritium nucleus) beam provision.

In a second subsequent step, a magnetic field is provided, arranged to align the respective spin of said nuclei in relation to each other so that a respective spin axis of said spins are anti-parallel and directed either towards each other or away from each other and so that said spins are projected on a common line between the nuclei, which common line is parallel to the provided magnetic field. This alignment may take place during the transport of the nuclei to the location of the subsequent fusion.

In a third subsequent step, the first hydrogen atom is either ionized, or the electron orbit (electron distribution) of the electron of the first hydrogen atom is modified such that a spatial distribution for this electron is such that it is not located (or at least located with a lower probability, such as a significantly lower probability, than an electromagnetically unaffected case) between the respective nuclei of said first and second hydrogen atoms along said common line ("skewed away from the region", as described above).

In a fourth subsequent step, the second hydrogen atom is either ionized, or the electron orbit (electron distribution) of the electron of the second hydrogen atom is modified such that a spatial distribution for this electron is such that it is not located between the respective nuclei of said first and second hydrogen atoms along said common line (as described above). This region may be the same region as in the third subsequent step.

The first, second, third and fourth subsequent steps may be performed in any order.

The result of these subsequent steps is that the first and second hydrogen atom nuclei are arranged in sufficient proximity, with a proper spin alignment and without disturbing effects from electron distributions, so as to allow fusion to form a helium atom.

Hence, in a subsequent step, such fusion takes place. This fusion takes place at a statistical probability, due to the laws of quantum mechanics. Hence, not all such pairs of hydrogen nuclei will actually fuse. However, a sufficient proportion of such pairs of hydrogen nuclei will fuse so that, when a large plurality of hydrogen nuclei pairs are brought together this way, significant energy production can be achieved.

In a subsequent step, the method ends.

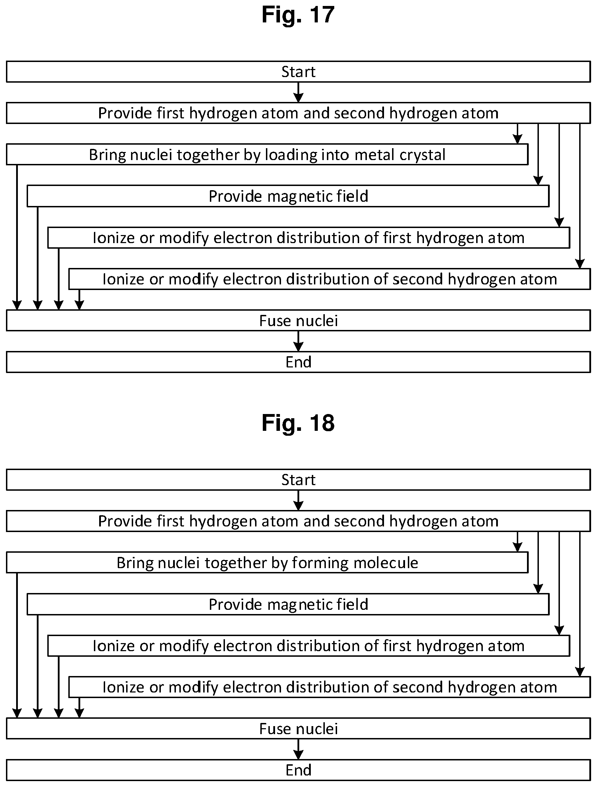

Figure 17 is a flowchart illustrating a second embodiment, below referred to as Battery / Fuel Cell.

In a first step, the method starts.

In a subsequent step, a first hydrogen atom and a second hydrogen atom are again provided, being both either deuterium or both tritium.

In a first subsequent step, a respective nucleus of said hydrogen atoms are again brought together at a distance of at the most 7 Å. In this embodiment, this bringing together takes place by loading the hydrogen atoms into a metal crystal, fixing intra-nuclei distances as a result of the crystal lattice geometry. The loading into the lattice executes a first modification of the electron orbits, by the electron being integrated into the conduction bands of the metal.

In a second subsequent step, a total magnetic field is provided by the application of a magnetic field which may be sole magnetic field affecting the crystal volume or being an additional magnetic field working in concert with an already-existing magnetic field (such as the Earth magnetic field), which total magnetic field is arranged to align the respective spin of said nuclei in relation to each other so that a respective spin axis of said spins are anti-parallel and directed either towards each other or away from each other and so that said spins are projected on a common line between the nuclei, which common line is parallel to the magnetic field in the metal lattice. This alignment may take place during the transport of the nuclei to the location of the subsequent fusion. The application of the magnetic fields executes a second modification of the electron orbits such that the electrons are not located between the respective nuclei of said first and second hydrogen atoms along said common line.

In a third and fourth subsequent respective step, the first and second hydrogen atoms are either ionized, or the electron orbit (electron distribution) of the respective electrons is further modified such that a spatial distribution for this electron does not locate this electron in a region between the respective nuclei of said first and second hydrogen atoms and along said common line (as described above).

The electron distribution such that the electron orbit (electron distribution) are not located between the respective nuclei of said first and second hydrogen atoms along said common line (as described above), in this embodiment, can be achieved at least partly by the said magnetic field.

Again, the first, second, third and fourth subsequent steps may be performed in any order, and the result of these subsequent steps is again that the first and second hydrogen atom nuclei are arranged in sufficient proximity, with a proper spin alignment and without disturbing effects from electron distributions, so as to allow fusion to form a helium nucleus.

In a way which is similar as for the Fusion Reactor embodiment, in a subsequent step such fusion takes place at a statistical probability.

In a subsequent step, the method ends.

Figure 18 is a flowchart illustrating a third embodiment, using liquid or gaseous hydrogen freely moving in a confined volume.

In a first step, the method starts.

In a subsequent step, a first hydrogen atom and a second hydrogen atom are again provided, being both either deuterium or both tritium.

In a first subsequent step, a respective nucleus of said hydrogen atoms are again brought together at a distance of at the most 7 Å. In this embodiment, this bringing together takes place by allowing the first and second atoms to bond chemically, to form a molecule.

In a second subsequent step, a magnetic field is provided, arranged to align the respective spin of said nuclei in relation to each other so that a respective spin axis of said spins are anti-parallel and directed either towards each other or away from each other and so that said spins are projected on a common line between the nuclei, which common line is parallel to the provided magnetic field. This alignment may take place onto the molecules of said type freely moving through said confined volume.

In a third and fourth subsequent respective step, the first and second hydrogen atoms are either ionized, or the electron orbit (electron distribution) of the respective electrons is modified such that this electron is not located between the respective nuclei of said first and second hydrogen atoms along said common line (as described above).

The electron distribution by keeping the said common axis clean from electrons, in this embodiment, can be achieved by a previous ionization of said hydrogen atoms forming said molecules.

Again, the first, second, third and fourth subsequent steps may be performed in any order, and the result of these subsequent steps is again that the first and second hydrogen atom nuclei are arranged in sufficient proximity, with a proper spin alignment and without disturbing effects from electron distributions, so as to allow fusion to form a helium nucleus.

Also, each step may be performed multiple times in each such iteration.

In a way which is similar as for the Fusion Reactor embodiment, in a subsequent step such fusion takes place at a statistical probability.

In a subsequent step, the method ends.

**Detailed Specification - Fusion Reactor Embodiments**

This section is concerned with a more detailed specification of the Fusion Reactor class of embodiments. The prototype of Fusion Reactor embodiments is the use in power plants, but the principles described herein may also be used in any of the objects discussed above, like ships. One particular example of the Fusion Reactor embodiment is as follows. Reference is made to Figure 6.

**1. Input Material**

Deuterium oxide $D_2O$, where here $D \equiv {}^2_1H$ for mass number 2 and atomic number Z=1 (heavy water) is used as input material to the power plant. Argentina produces approximately 200 metric tonnes of $D_2O$ per year in 2018 at one plant, and a decommissioned plant in Canada had a capacity of 1600 tonnes per year. The price of Cambridge Isotopes of purity 99.96%-D in 2015 was approximately 995 USD/kg. This example is not purity sensitive and 99.96%-D can be assumed. The channel $D + D \rightarrow {}^3_0He + n \rightarrow {}^4_0He$ produces $\Delta mc^2$ = (2x2.0136 - 4.0026)u1.6605 $\times$ 10$^{-27}c^2$ = 0.0246 $\times$ 1.6605 $\times$ 10$^{-27}$ $\times$ 9 $\times$ 10$^{16}$ = 0.368 $\times$ 10$^{-11}$ J per $D_2O$ molecule. This channel will be used to exemplify the total energy budget. 1 kg of water contains $\left(\frac{1000}{18.015}\right) \times 6.022 \times 10^{23} = 3.343 \times 10^{25}$ molecules, with $D_2O$ 10% less than that, and therefore 1 kg of heavy water produces approximately 1.107 $\times$ 10$^{14}$J. The total electricity consumption world-wide in 2012 was approximately 19,000 TWh, this approximately equals 1.9 $\times$ 10$^4$ $\times$ 10$^9$ $\times$ 3600 = 6.840 $\times$ 10$^{16}$J. It therefore takes $\left(\frac{6.840}{1.107}\right) \times 10^{16-14} =$ 6.178 $\times$ 10$^2$ kg, i.e. approximately 0.6 tonnes of heavy water for that channel to cover 100% the global electricity consumption in 2012. This corresponds to a global consumption of approximately 0.07 kg of $D_2O$ per hour. This number assumes an overall efficiency of 100% from fusion energy to electrical energy. From general considerations, an efficiency rate of 10-30% can be assumed at some industrial maturity level.

From a safety perspective, $D_2O$ is not radioactive and becomes toxic for humans only at approximately 50% of the total bodily water concentration. The body water constitutes 50 - 75% of the body mass, meaning that an 80 kg person needs to drink in the order of 20 liters of pure $D_2O$ over a period of the order of 10 days before toxic doses are obtained.

## 2. Material Separator

The Material Separator takes the Input Material, in this embodiment example $D_2O$, and separates it into Fusion Material, Doping Material, and to by-products.

In this simple embodiment of the method only Fusion Material is used and no Doping Material is applied. Both deuterium atoms in the $D_2O$ molecule are used as Fusion Material. In this embodiment example, only a single by-product is produced which generally is oxygen gas $O_2$.

Fusion Material separation of $D_2O$ may be achieved by adding energy to the $D_2O$ molecules in order to dissolve the $HO$ - $H$ hydrogen bond and the $O$ - $H$ covalent bond. This bond-dissociation energy can be disregarded in the overall energy budget as it is comparing nuclear energies with chemical energies. The two dissociation energies for $H_2O$ is 497

$$\left(\frac{923}{6.022}\right) \times 10^{3-23} = 1.533 \times 10^{-18} \text{J}.$$

+ 426 kJ/mol, i.e. We use the same value as an approximation for $D_2O$ dissociation as the adjustment to $D_2O$ is only of the order of 10% or less of the hydrogen value. This dissociation energy of $1.533 \times 10^{-18}$J is to be compared with the nuclear energy of $0.368 \times 10^{-11}$ J per $D_2O$ molecule and can therefore be disregarded in the overall energy budget. From this we can also assume 100% efficiency in the Material Separation process for simplicity in the energy budget calculations for this embodiment.

This embodiment example uses standard electrolysis to separate $D_2O$ into Fusion Material gas $D_2$ and by-product oxygen $O_2$ by standard methods. From Faradays first law of electrolysis, the production rate of Fusion Material is proportional to the DC current applied.

## 3. Material Ionization Chamber

This embodiment of the present method uses deuteron Fusion Material. The deuterons are obtained by ionization of the $D_2$ gas obtained from the Material Separator process. This embodiment applies ionization of $D_2$ at STP.

The ionization energy of hydrogen is for Planck constant $h$ approximately $E_i = hf_i = 2.18 \times 10^{-18}$J and differs from deuterium only by a factor 1.000272. Therefore, to a good approximation $2.18 \times 10^{-18}$ J is to be compared with the nuclear energy of $0.368 \times 10^{-11}$ J per $D_2O$ molecule and this energy part can again be disregarded in the overall energy budget. For the $D_2$ gas, the ionization energy is slightly higher but does not change the fact that this energy is disregarded in the overall energy budget.

The ionization in this embodiment is performed by applying an electromagnetic radiation with frequency $f = E/h$ for Planck constant $h$, $h = 6.626 \times 10^{-34}$Js, and where the electron orbital resonance energy $E$, which is selected not to be a deuteron nucleus resonance energy or frequency, satisfies $E > E_i$. For the frequency, this implies a resonance

frequency condition $f > f_i = 3.29 \times 10^{15}$Hz with the above estimates, with c = $3 \times 10^8$ m/s and $\lambda_i = \dfrac{c}{f_i}$, the resonance wavelength is of the order $100 \times 10^{-9}$nm and is part of low energy UV spectrum in this estimate.

The rate of the ionization and Fusion Material production in this embodiment is defined by the intensity of the resonant UV radiation and the density of the $D_2$ gas, which also to some extent defines the rate of nuclear fusion or power production.

Ideally, the deuterons that exit the Material Ionization chamber and enter into the Fusion Reactor have the same kinetic energy, or equivalently, have monochromatic de Broglie wavelength.

This is achieved with either low Ionization Chamber operating temperature and/or by applying a Monochromator that may use standard monochromator or spectrometer techniques to perform a kinetic energy dynamical state preparation at some point before deuteron entry into Fusion Reactor, and before entry into magnetic fields.

The UV radiation may be generated using a standard UV lamp arranged to radiate UV radiation inside the Ionization chamber, or to radiate from the outside of the chamber into the chamber, which chamber is then provided with wall material allowing the UV radiation to pass therethrough.

An alternative implementation to the electromagnetic radiation, is to use a strong static electric field to achieve the ionization of the deuterium atoms. The electric field is made strong enough to separate the electrons from the deuterons. Typically, a potential of 0.1-6 keV for a separation of 2 mm between a pair of charged anode-cathode plates is used to achieve this.

In both the electromagnetic radiation and the static electric field ionization cases, a further magnetic field can be applied parallel to **B**, as indicated in Figure 5, in the Material Ionization Chamber or prior to the deuterium atoms entering this chamber such that the nuclear spins become polarized before applying the ionizing fields.

## 4. Fusion Reactor

In this presentation, $\mu_0$ in the magnetic field vacuum definition $\boldsymbol{B} \equiv \mu_0 \boldsymbol{H}$ is set to $\mu_0 = 1$ unless otherwise explicitly stated.

The ionized deuterium Fusion Material (the deuterons), are injected into the Fusion Reactor through an electric field **E** extracting the $D^+$ Fusion Material from the Ionization Chamber. The Fusion Material extraction rate, which is proportional to the energy production rate, can be controlled by the direction and magnitude of the vector field $\boldsymbol{E}_2$ (see Figure 6) together with the physical opening in the Matter Wave Lens connecting the Material Ionization Chamber and the Fusion Reactor. Further production rate control can be exerted by an optional Spin Filter.

This embodiment of the method of dynamical state preparations will be expressed in the terminology of quantum state preparations in order to allow Cold Fusion to occur. The terminology of quantum state preparations for dynamical state preparations follows from the chosen model to describe the physics involved as given below. The Fusion Reactor embodiment of the method is now obtained by applying a magnetic field **B** parallel or anti-parallel to the electric field $\boldsymbol{E}_1$. This means that in this embodiment, the electric field **E** is used to direct the Fusion Material to the Fusion Reactor Core, which is a preparation of the dynamical or quantum linear momentum states, while the magnetic field **B** is used for the dynamical or quantum state preparation of the spin states. Apart from spin, the geometry of this embodiment of the method is such that the orbital angular momentum vector **L** of the deuterons relative to the origin vanishes in terms of classical physics. In terms of non-relativistic quantum mechanics from the non-commutativity of $L_x$, $L_y$, and $L_z$, referring to Figure 6, $L_x = 0$, $\overline{L_y} = \overline{L_z} = 0$, where the bar over operator symbol denotes expectation values as defined in standard quantum mechanics. The Fusion Reactor Core is the region where the Cold Fusion occurs. The engineering of the Maxwell fields **E** and **B** are obtained by constructing electrical circuits implementing current loops, capacitors and tori within and around the Fusion Reactor. Such electromagnetic field generation is conventional as such, and will not be detailed herein. However, this engineering can in principle be achieved in a very large number of possible ways, what is important is that the resulting Maxwell fields are correct with respect to achieving Cold Fusion in the manner described herein by the linear momentum and spin states preparation of the Fusion Material. In the particular example shown in Figure 6, static fields **E** and **B** are generated and used.

By maintaining the two half-chambers in Figure 5 at equal temperature and with equal magnitude in electric and magnetic field strengths, the left and right beams of Figure 5 will be in the same nuclear spin state for identical energy, say $S = +1$ for a particular energy. The two spin states are therefore opposite for identical energy states corresponding to Figure 2 by applying opposite magnetic fields **B** as illustrated in Figure 5 and the absolute direction of the field **B** is chosen such that Figure 2 is achieved by combining **B** with **E**, and this absolute direction is either as illustrated in Figure 5 or the reverse polarity of **B**. The static field **B** is generated by a DC current in this embodiment. The field **B** determined by the DC current is made strong enough to generate significant dynamical or quantum state deuteron energy splitting between the three deuteron spin states $S_x = \pm 1, 0$ allowing a practical separation of the desired dynamical or quantum states that contribute to Cold Fusion from the unwanted states that do not contribute to Cold Fusion. Unwanted states in general degrade the quality of the deuteron stream. In this embodiment, described in classical terms and disregarding thermal velocity, all deuterons acquire identical kinetic energy $\mathcal{E}_k = \frac{1}{2} m_D v^2$, or equivalently identical velocity $v$ along the $x$-axis, when accelerated (with sign $\pm$) in the electric field **E** until the magnetic field **B** is effectively switched on for the particle. Applying the field **B** corresponds to applying a spin $S_x = \pm 1, 0$ dependent potential without changing the total deuteron energy, which in this approximation in turn will split the velocity into three different velocities depending on $S_x = \pm 1, 0$. This applies generally as long as the there is only one effective spin dependent potential as explicitly illustrated by equation (7) below. A different embodiment would be to use a different procedure of separating the desired dynamical or quantum states that contribute to Cold Fusion from the unwanted states that do not contribute to Cold Fusion by, for example, applying the general method described in the text in connection with equations (41) through equations (45).

One purpose here is to set up the conditions of the electromagnetic fields required to achieve the Cold Fusion as described in Sections 3 and 4 above. The Cold Fusion conditions will be related to the electromagnetic fields through dynamical equations, which for this particular embodiment will be described by a physical model given by equation (7). The Cold Fusion conditions themselves will in this example be described as the boundary conditions for the deuterons $v_x = v_y = v_z = 0$ and $S_x = +1$ at the point $(x,y,z) = 0$. The condition $S_x = +1$ refers explicitly to Figure 5 and in a different configuration of the electromagnetic fields, the states $S_x = 0, -1$ could also be used. Any embodiment of the method of dynamical state or quantum state preparation for achieving Cold Fusion by allowing it to occur uses the same underlying physical principles with some dynamical equation corresponding to (7). The equation (7) is only one physical model used for describing this particular embodiment of the method of dynamical quantum state preparation for achieving Cold Fusion, other physical or mathematic models that result in identical measured results are possible. For this particular embodiment of the present invention, the dynamical equations (7) with or without the boundary conditions is called the Fusion Reactor Equations. Solving the Fusion Reactor Equations will give the required relations between the fields *E*, *H*, physical dimensions and shapes of the Fusion Reactor components, operating temperatures and other factors that have any effect on achieving the deuteron boundary conditions $v_x = v_y = v_z = 0$ and $S_x = +1$ at the point $(x,y,z) = 0$ with the required precision in order to achieve Cold Fusion. These conditions imply that the orbital angular momentum vanishes, i.e. *L* = 0 in the classical sense, and that *J = L + S = S*.

The time *t* is measured in the rest frame of the Fusion Reactor and this reference frame of co-ordinates are referred to as the laboratory system. The rest frame of the deuteron will travel with velocity *v* relative to the laboratory system and measure a time $t_D$. For $v \ll c$ the two frames will measure approximately the same time intervals $t_D \approx t$ and mathematical approximations where $t_D = t$ are called non-relativistic approximations. In a non-relativistic approximation, the Fusion Reactor Equations are in this chosen model of description determined by the Schrödinger equation for dynamical state Hilbert space vectors $\psi$, where $\psi$ is a co-ordinate and spin state function in the Schrödinger representation. For a time-independent, i.e. static, field *B* in the direction of positive x-axis for x > 0, for generalized linear momentum operator $p_x$, deuteron mass $m_D$, deuteron charge q, deuteron magnetic moment $\mu$ and with Hamiltonian *H*, the non-relativistic Schrödinger equation is (see P.A.M Dirac, The Principles of Quantum Mechanics (Oxford at the Clarendon Press 1947, Third Edition), Section 27, equation (7); and D. Landau and E.M. Lifshitz, Quantum Mechanics (Non-relativistic Theory) (Pergamon Press 1977, Third Edition), §111, equation (111.4)):

$$i\hbar \frac{\partial \psi}{\partial t} = H\psi = \left( \frac{1}{2m_D} p_x^2 + q\varphi - \boldsymbol{\mu} \cdot \boldsymbol{B} \right) \psi \qquad (7)$$

In this approximation we treat the Maxwell fields *E* and *B* as given classical vectors, not as quantum field operators and the back-reaction by the deuteron on the electromagnetic fields is in this approximation disregarded. The third term on the right-hand side (RHS) of (7) corresponds to the splitting of the energy due to the field *B* into three energy states for the deuteron triplet $S = \pm 1,0$ depending on whether the deuteron magnetic moment $\mu$ is parallel, anti-parallel or zero projected on the magnetic field *B.* For electron energy levels in an atom, this energy splitting by *B* results in the Zeeman effect. The deuteron transport time over distance *l* from the Material Ionization Chamber to the Fusion Reactor core is $t = \int_{x<l}^{0<x} v^{-1}(x)dx,$ in this form excluding points where *v* = 0, and where the classical velocity *v* is determined by the Lorentz force in a non-relativistic approximation as

$$m_D \frac{d\boldsymbol{v}}{dt} = q\boldsymbol{E} + \frac{q}{c} \boldsymbol{v} \times \boldsymbol{B} \qquad (8)$$

In this particular embodiment, as exemplified in Figure 6, the classical velocity *v* without considering spin is fully determined by the applied electric field *E* in (8) as in this particular embodiment we have $v \times \boldsymbol{B} = 0$ as *v* is parallel to *B.* The quantum average deuteron velocity while transported to Fusion Reactor Core is from the classical relation (8) integrated to be $v = \frac{q}{m_D} E_x t + v_0$ with no collisions at *x(t)* over macroscopic (i.e. non-quantum) distance *l*. For the thermalized low temperature Material Ionization Chamber with ionization radiation applied at *x = l,* we have quantum average velocity $v_0 = 0$ (for *T* = 0). In order to describe this, a mathematical and physical approximation could in principle be introduced where the transport of the deuteron Fusion Material over macroscopic distances *l* is treated classically, but the dynamical state preparations required to achieve Cold Fusion by projecting spin on the magnetic field *B* is treated quantum mechanically as quantum state transition amplitudes. However, this embodiment of the method is concerned with turning points of the form *v(0)* = 0, while quasi-classical approximations are in general not valid at such points (see L.D. Landau and E.M. Lifshitz, Quantum Mechanics (Non-relativistic Theory) (Pergamon Press 1977, Third Edition), §46, equation (46.7)) and the connection between quantum theory and classical theory becomes more uncertain. For this reason, also the space-time dependence will here be treated quantum mechanically as expressed by (7) rather than using a Newton form of description (apart from quantum mechanics using classical analogies) as expressed by equation (8).

The spin transition probability from initial spin state *i* to final spin state *f* is given as the Hilbert space square

$|\langle\psi_f|H_I|\psi_i\rangle|^2$ for the spin interaction Hamiltonian $H_I$ = -$\boldsymbol{\mu} \cdot \boldsymbol{B}$ acting on the spin states $\sigma$. The experimental values (see John Dirk Walecka, Theoretical Nuclear and Subnuclear Physics (Imperial Collage Press 2013), Section 8.1, equation (8.1) and Section 37.3, equation (37.66)) for the magnetic moments $\boldsymbol{\mu}$ and the spins for the proton, the neutron and the deuteron respectively, and in terms of Pauli spin matrices $\boldsymbol{S}_{AB}$ and nuclear magnetons n.m. are given by

$$\boldsymbol{\mu}_p = +2.793 \frac{|q|\hbar}{2m_p c} \boldsymbol{S}_{AB} \equiv +2.793 \cdot \boldsymbol{S}_{AB} \text{ n.m.} \tag{9a}$$

$$\boldsymbol{\mu}_n = -1.913 \cdot \boldsymbol{S}_{AB} \text{ n.m.} \tag{9b}$$

$$\boldsymbol{\mu}_D = +0.857 \cdot \boldsymbol{S}_{AB} \text{ n.m.} \tag{9c}$$

The fact that the deuteron magnetic moment is approximately the result of adding together the magnetic moments of the proton and the neutron confirms the model illustrated in Figure 3. Written explicitly in terms of Pauli spin matrices with abstract spin indices *A* and *B,* the equations (9) in terms of (*x, y, z*) vector components and relabelled by cyclic permutation from the usual representation for the purpose of projecting spin on the x-axis in an $S_x$-diagonal representation, the expressions $\boldsymbol{\mu}_D \cdot \boldsymbol{B}$ in this embodiment become

$$\boldsymbol{\mu}_p \cdot \boldsymbol{B} = +2.793 \boldsymbol{S}_{AB} \cdot \boldsymbol{B} = +2.793 \begin{pmatrix} 1 & 0 \\ 0 & -1 \end{pmatrix}_x B_x \qquad \text{n.m.·T} \tag{10a}$$

$$\boldsymbol{\mu}_n \cdot \boldsymbol{B} = -1.913 \boldsymbol{S}_{AB} \cdot \boldsymbol{B} = -1.913 \begin{pmatrix} 1 & 0 \\ 0 & -1 \end{pmatrix}_x B_x \qquad \text{n.m.·T} \tag{10b}$$

$$\boldsymbol{\mu}_D \cdot \boldsymbol{B} = +0.857 \boldsymbol{S}_{AB} \cdot \boldsymbol{B} = +0.857 \begin{pmatrix} 1 & 0 & 0 \\ 0 & 0 & 0 \\ 0 & 0 & -1 \end{pmatrix} B_x \qquad \text{n.m.·T} \tag{10c}$$

Unit T in (10) is Tesla. In the equation (10c), the Pauli spin matrices have been generalized with respect to spin 1 projections and with $S_x$-diagonal eigenvalues 1, 0 and -1. The generalization of the Pauli matrices with respect to spin projections is here different from generalization with respect to generators of a Lie algebra. The deuteron energy splitting $\Delta\varepsilon$ corresponding to the Zeeman effect for an atom due to the 3 different deuteron spin projections is now from (10c) between each energy level in the sequence $S_x$ = (1,0, -1) given by

$$\Delta\mathcal{E}_{+1,0} = +0.857(1 - (0))B_x = +0.857 \cdot B_x \qquad \text{n.m.·T} \tag{11a}$$

$$\Delta\mathcal{E}_{0,-1} = +0.857(0 - (-1))B_x = +0.857 \cdot B_x \quad \text{n.m.·T} \tag{11b}$$

$$\Delta\mathcal{E}_{+1,-1} = +0.857(1 - (-1))B_x = +0.857 \cdot 2B_x \qquad \text{n.m.·T} \tag{11c}$$

From (11), the energy splitting is increased by increasing the field $\boldsymbol{B}$. When disregarding the kinetic and electric field terms, the spin Hamiltonian term in (7) is -$\boldsymbol{\mu} \cdot \boldsymbol{B}$, and therefore the lowest energy is obtained with the deuteron spin parallel to the magnetic field $\boldsymbol{B}$, i.e. for $S_x$ = +1 as in Figure 6, and from (10c) with the energy $\varepsilon_{+1}$ = -0.857 $\cdot$ $B_x$ n.m.T, while the highest energy is $\boldsymbol{\mu}$ anti-parallel with $\boldsymbol{B}$, i.e. for $S_x$ = -1 with $\varepsilon_{-1}$ = +0.857 $\cdot$ $B_x$ n.m.T. In the high temperature limit $T \to \infty$ all states $S_x$ = $\pm1,0$ are equally probable according to equation (6), in which case there is a significant need of spin alignment using strong fields $\boldsymbol{B}$ and filtering out unwanted spins. In the low temperature $T \to 0$ all states will be the low energy states $S_x$ = +1 and weak fields $\boldsymbol{B}$ can be used while the need of filtering out unwanted spins disappear in this limit. For low enough operating temperature T, the dynamical system in a thermally radiating environment will tend to align the magnetic moment to lowest energy, which in this deuteron case is $\boldsymbol{\mu}(t)$ becoming parallel to $\boldsymbol{B}$ as follows

from equations (7) and (10). In classical terms, a torque $\tau = \boldsymbol{\mu} \times \boldsymbol{B}$ will act on the deuteron until $\boldsymbol{\mu}$ is aligned with $\boldsymbol{B}$, much like a compass needle in magnetic field of the Earth.

For order of magnitudes for spin alignment, magnetic fields of the order of 20T at STP are used in standard Nuclear Magnetic Resonance (NMR) in order to align the spins in a material substance with an external magnetic field.

In the same fashion from (10c), the spin transition probability $|\langle \psi_f | H_I | \psi_i \rangle|^2 = |\langle \psi_f | \boldsymbol{\mu} \cdot \boldsymbol{B} | \psi_i \rangle|^2$ is increased by increasing the field $\boldsymbol{B}$. In standard NMR, spin flips are obtained after order of $10^{-6}$ seconds from applying a small orthogonal time-dependent perturbation of the static 20T field. Optional time-dependent magnetic or electromagnetic fields stimulate magnetic spin transitions if $E = \hbar\omega_B$, for the field frequency $\omega_B$, is close to the energy differences $\Delta\varepsilon$ in equation (11), and which correspond to resonance frequencies. The option of using time dependent electromagnetic fields for stimulated transitions will not be used in this simple illustration of applying the dynamical state preparations, in order to simplify the presentation.

The term "spin states" refer, in this non-relativistic approximation, to different dynamical degrees of freedom as compared to the deuteron space-time or linear momentum x-coordinate transport. The different terms in (7) acting on different degrees of freedom in effect separate the dynamical state function $\psi$ into the product $\psi = \psi(x,t)\sigma$. From the dynamics and the non-relativistic approximations used in modelling this embodiment of the method, the LS-coupling for orbital angular momentum $L$ vanishes, $\boldsymbol{L} \cdot \boldsymbol{S} = \boldsymbol{0}$ as $\boldsymbol{L} = \boldsymbol{0}$ in a point particle approximation for the classical or quasi-classical trajectory of the deuteron for the purpose of illustrating this embodiment of the method. A more precise expression in terms of this fact in this non-relativistic approximation is that $L_x S_x = 0$ and $\overline{L_y S_y} = \overline{L_z S_z} = 0$. If a Spin Filter is not used, each deuteron emerging from the Ionization Chamber into the Fusion Reactor is expressed as a different linear combination $\psi_i = c_1 \psi_{+1} + c_2 \psi_0 + c_3 \psi_{-1}$. There, the index labels the dynamical states by the eigenvalues of the Hermitian operators under consideration. For completely unpolarised dynamical states $\psi_i$, the average state can be expressed as

$$\psi_i = \frac{1}{\sqrt{3}} \psi_{+1} + \frac{1}{\sqrt{3}} \psi_0 + \frac{1}{\sqrt{3}} \psi_{-1}.$$

In order to obtain relations between the electromagnetic fields, physical dimensions etc., the solution for $\psi$ in the differential equation (7) is needed. First, the Fusion Reactor Equations for this particular embodiment will be detailed, and solutions of these equations will be described subsequently. The Fusion Reactor Equations refer to Figure 6.

In this particular embodiment, two fields $E_1$ and $E_2$ are applied between $0 < x < l_1$ and $l_1 < x < l_2$, reversing directions at distance $l_1$ such that during transition from $x = l_2$ to $x = 0$, the velocity $v(x) \approx 0$ for $x \approx 0$ for the correct $S_x = +1$ and for the correct ordering N#P of the deuteron. For $x > 0$ and in this approximation, the magnetic field $\boldsymbol{B}$ is switched on at $x = l_1$. The electromagnetic fields in the mathematical expressions are the resultant fields arising from superpositions in the electromagnetic field engineering part. In the non-relativistic approximation, the quantum operators $p_i = -i\hbar \frac{\partial}{\partial x^i}$ are used together with the external Maxwell field minimal substitutions arising from classical analogy, with generalized momentum given by the replacement $p_i \to p_i + \frac{q}{c} A_i$ and where the space-like part of $A_i$ is defined by $B_i = \nabla \times A_i$. The Schrödinger equation (7) is now for space-like 3-indices $k$ and with electromagnetic potential $\varphi$

$$i\hbar \frac{\partial \psi}{\partial t} = H\psi = \left( \frac{1}{2m_D} \left( -i\hbar \frac{\partial}{\partial x^k} + \frac{q}{c} A_k \right)^2 + q\varphi - \boldsymbol{\mu} \cdot \boldsymbol{B} \right) \psi \qquad (13)$$

We substitute $q\varphi = -qE_x x$ in (13) for a homogenous and static electric field $E_x$ in the direction of the x-coordinate and that vanish in the $y$ and $z$ directions in the approximation used here for the purpose of illustrating this embodiment. Taking $\boldsymbol{B}$ again as static and homogenous along the deuteron beam, we obtain in this approximation of the quantum state preparation embodiment (see P.A.M Dirac, The Principles of Quantum Mechanics (Oxford at the Clarendon Press 1947, Third Edition), Section 41, equation (88)):

$$i\hbar \frac{\partial \psi}{\partial t} = H\psi = \left( \frac{1}{2m_D} \left( -i\hbar \frac{\partial}{\partial x} \right)^2 - qE_1 x - \boldsymbol{\mu} \cdot \boldsymbol{B} \right) \psi \qquad 0 \leq x \leq l_1 - \epsilon \qquad (14a)$$

$$i\hbar \frac{\partial \psi}{\partial t} = H\psi = \left( \frac{1}{2m_D} \left( -i\hbar \frac{\partial}{\partial x} \right)^2 - qE_2 x \right) \psi \qquad l_1 + \epsilon \leq x \leq l_2 \qquad (14b)$$

$$i\hbar \frac{\partial \psi}{\partial t} = H\psi = \left( \frac{1}{2m_D} \left( -i\hbar \frac{\partial}{\partial x} \right)^2 - qE_C x - \boldsymbol{\mu} \cdot \boldsymbol{B}_C \right) \psi \quad 0 \leq x \leq l_C - \epsilon \qquad (14c)$$

An optional equation (14c) with quantities indexed by $C$ has been added here in the case when the electric and magnetic fields are designed differently in the Fusion Reactor Core, which is generally needed if the physical size of the Fusion Reactor Core is large. For the purpose of illustrating this embodiment, such differences in the Fusion Reactor Core will not be used here, i.e. only (14a) and (14b) will be used. In equations (14), the two terms $\left( -i\hbar \frac{\partial}{\partial y} - \frac{1}{2}\frac{q}{c} B_x z \right)^2$ and $\left( -i\hbar \frac{\partial}{\partial z} + \frac{1}{2}\frac{q}{c} B_x y \right)^2$ in the gauge $A = \frac{1}{2} \boldsymbol{B} \times \boldsymbol{r} \, (\mu_0 \equiv 1)$ vanish in the quasi-classical trajectory approximation used here and have been omitted for the deuteron beam along the x-axis. Dynamical evolution or motion in $(y,z)$-plane will be brought back later using diffraction. A more exact treatment is obtained by including the dynamical evolution in the $(y,z)$-plane by including the terms $\left( -i\hbar \frac{\partial}{\partial y} - \frac{1}{2}\frac{q}{c} B_x z \right)^2$ and $\left( -i\hbar \frac{\partial}{\partial z} + \frac{1}{2}\frac{q}{c} B_x y \right)^2$ in the Hamiltonian in (14) and will result in oscillations in the $(y,z)$-plane (see L.D. Landau and E.M. Lifshitz, Quantum Mechanics (Non-relativistic Theory) (Pergamon Press 1977, Third Edition), §112, equations (112.5) and (112.7)) and a corresponding Landau quantization in Landau gauge with energy levels $\mathcal{E}_L = \left( n + \frac{1}{2} \right) \hbar \omega_C,$ where $\omega_C \equiv \frac{|q||\boldsymbol{B}|}{m_D c}.$ A small number $\epsilon$ has been included in (14) in order to take account to a singularity described below.

For the initial or boundary conditions for the Fusion Reactor Equations (14) regarding the deuteron velocity $v_0$ at $x = l_2$, in general $v_0 \neq 0$ due to thermal velocities, but $v_0 = 0$ in the low temperature limit of the Ionization Chamber. This low temperature limit simplification will be used here for the purpose of illustration of this embodiment. The boundary conditions at $x = 0$ in order to achieve Cold Fusion will discussed below. A more precise mathematical model would also use the exact solutions of the Maxwell equations in a given setting, which will generate smooth fields at $x = l_1$ rather than step functions at $x = l_1$. One tool to engineer exact Maxwell equations, apart from engineering currents, is to take various physical segments of the Fusion Reactor to specific electromagnetic potentials, including earth. We continue to use the above simplified, i.e. non-exact, electromagnetic field model for illustrating this particular embodiment of the method according to the present invention.

The above non-relativistic approximation may be improved by a more exact relativistic model, where it is not necessary that $v \ll c$ but maintaining the approximation that the deuteron can be regarded as a point particle in a macroscopic Fusion Reactor. In such a model, the electromagnetic fields are constant over the point particle even if the fields over the macroscopic Fusion Reactor vary. This approximation may not be valid for an embodiment of the inventive method in a small enough nano-Fusion Reactor or quantum-Fusion Reactor, as a deuteron has a "size" of the order $10^{-15}$m. With this point particle approximation, the electromagnetic fields are acting at the point of the deuteron and we have instead of (14) the relativistic Dirac equation for fermions in the laboratory frame of the form (see P.A.M Dirac, The Principles of Quantum Mechanics (Oxford at the Clarendon Press 1947, Third Edition), Section 67, equation (9)):

$$\left\{ \frac{1}{c} E + \frac{q}{c} \varphi + \rho_1 \left( \sigma_i \cdot \left( p_i + \frac{q}{c} A_i \right) \right) + \rho_3 m_D c \right\} \psi = 0 \quad . \qquad (15)$$

In (15), the $4 \times 4$ matrices $\rho_1$ and $\rho_3$, Pauli spin matrices $\sigma_i = (S_{AB})_i$ are defined as in Dirac (again, see P.A.M Dirac, The Principles of Quantum Mechanics (Oxford at the Clarendon Press 1947, Third Edition), Section 67, equation (9)) for a 4-spinor $\psi$. The Dirac $\gamma$-matrices arise as Lorentz transformations acting on $\psi$ and on the operator $\alpha_i$ defined by $\alpha_0 \equiv 1$, $\alpha_k = \rho_k \sigma_k$ for $k = 1, 2, 3$ and $\alpha_m = \rho_3$. The Dirac equation (15) is only valid for each neutron and proton separately if the two nucleons are considered as non-interacting, and one would need to use outer products of spinors to construct spinor vectors and tensors to include such interactions (see R.Penrose & W.Rindler, Volume 1, Two-Spinor Calculus and Relativistic Fields (Cambridge University Press 1990), Section 4.6, p. 231-237.). A nuclear interaction can also be introduced through a Lagrangian associated with standard Euler-Lagrange variational principles, or by direct inspection from electromagnetic minimal substitution and mass renormalization analogies. In this model, the proton and neutron nucleons in the deuteron are described as a baryon iso-spinor field $\Psi \equiv \begin{pmatrix} p \\ n \end{pmatrix}$ where iso-spin $\begin{pmatrix} 1 \\ 0 \end{pmatrix}$ represents

a proton and iso-spin $\begin{pmatrix} 0 \\ 1 \end{pmatrix}$ a neutron. The interaction between the two nucleons is mediated by an attractive scalar meson field $\sigma$ and a vector meson field $V_i$ satisfying the

simultaneous equations (John Dirk Walecka, Theoretical Nuclear and Subnuclear Physics (Imperial Collage Press 2013), Section 14.2, equ. (14.9)), with the given metric chosen as in the given reference (John Dirk Walecka, Theoretical Nuclear and Subnuclear Physics (Imperial Collage Press 2013), Appendix D.3, p. 573-), of the form

$$\frac{\partial}{\partial x_i} V_{ki} + m_v^2 V_k = i\alpha_V \overline{\Psi}\gamma_k \Psi \tag{16a}$$

$$\left(\frac{\partial}{\partial x^i}\frac{\partial}{\partial x_i} - m_s^2\right)\sigma = -\alpha_S \overline{\psi}\Psi \tag{16b}$$

$$\left[\gamma_i\left(\frac{\partial}{\partial x_i} - i\alpha_V V_i\right) + (M - \alpha_S\sigma)\right]\Psi = 0 \tag{16c}$$

The non-linear differential equations (16) use the definitions $\overline{\Psi} \equiv \Psi^\dagger \gamma_4$ with Hermite conjugate upper index, $V_{ki} = \nabla_k V_i - \nabla_i V_k$, vector and scalar meson coupling constants $\alpha_V$ and $\alpha_S$, free baryon mass $M$, meson masses $m_V$ and $m_S$, and in a nuclear interactions approximation a conserved baryon current $J_B$ of the form $J_{Bk} \equiv \overline{i\Psi}\gamma_k \Psi$. In the low temperature limit $T \to 0$, a Relativistic Mean Field Approximation (see John Dirk Walecka, Theoretical Nuclear and Subnuclear Physics (Imperial Collage Press 2013), Chapter 14, p. 119-, Section 18.1, p.155, bullet 1) can be applied to solve (16). For the $S = 0$ Fusion Product ${}_0^4 He$, a Relativistic Hartree Approximation (John Dirk Walecka, Theoretical Nuclear and Subnuclear Physics (Imperial Collage Press 2013), Section 14.4, p. 125) can be used to solve (16).

One should note that although the illustration of this particular embodiment of the inventive method will mainly be in terms of non-relativistic Quantum Mechanics below, some aspect of the nuclear fusion details, like spin and iso-spin dependencies, nuclear matter saturation (see John Dirk Walecka, Theoretical Nuclear and Subnuclear Physics (Imperial Collage Press 2013), Section 14.4, p. 125), depend on relativistic aspects. The equations (16) can be augmented (John Dirk Walecka, Theoretical Nuclear and Subnuclear Physics (Imperial Collage Press 2013), Section 20.2, equ. (20.8)) by adding a $\pi$-meson iso-vector ($\pi^+$, $\pi^0$, $\pi$) with charge +$q$, 0, -$q$ respectively, where now a change in nucleon iso-spin can be regarded as an interchange of such $\pi$-mesons (see John Dirk Walecka, Theoretical Nuclear and Subnuclear Physics (Imperial Collage Press 2013), Section 21.1, equations (21.5), (21.6)), for example the deuteron polarization changing from N#P to P#N can be modeled as a $\pi^+$ emission by P and a $\pi^+$ absorption by N. The $\pi$-meson is a scalar with respect to space-time rotations, meaning that the $\pi$-meson interchange converting a proton to a neutron and conversely, only changes energy and the charge of the nucleon, while the true deuteron spin $S_x = \pm 1,0$ remains unchanged. A further improved relativistic approximation is to not anymore disregard the quantum back-reaction on the electromagnetic fields and subject the electromagnetic fields to a full quantum field treatment following standard Quantum Field Theory (see F. Mandl & G. Shaw, Quantum Feld Theory (John Wiley and Sons Ltd. 1986), Chapter 5, p 81-). The QFT treatment is required for weak electromagnetic fields when the Fock space occupation numbers $n$ are small in the sense that $n + 1$ is significantly different in value from $n$. A still further improvement of exactness is to introduce QCD and charge densities to describe the nucleons.

In the context of nuclear matter saturation, the second purpose of the field $E_1$ is to polarize the deuteron on the two sides of the x-axis according to Figure 2 in order to minimize or eliminate the electromagnetic repulsion that would prevent Cold Fusion. The field $E_1$ can be calculated either by a rigid body approximation from the nuclear matter saturation property, and the deuteron turning to align the proton with the field $E_1$, or as an iso-spin polarization, say from N#P to P#N, by $\pi$-meson exchange. In the classical rigid body model, the deuteron spin reversal must be disregarded as the spin $S$ does not quantum mechanically couple to the electric field $E_1$ in a first approximation, while in the $\pi$-meson exchange the true space-time spin remains unchanged. Alternatively, the field $E_1$ can be determined experimentally by varying $E_1$ until the desired fusion efficiency is achieved, which also fixes $E_2$ from the $v = 0$ at $x = 0$ condition. The condition $v = 0$ at $x = 0$ for Cold Fusion is explained in more detail below.

The particle thermal velocities generated by thermalization correspond to $\frac{1}{2}m_D\overline{v^2} = \frac{3}{2}k_B T$ or $\overline{v} =$

$\sqrt{3k_B T/m_D}$ . Inserting values $k_B = 1.381 \times 10^{-23}$ J/K and $m_D = 1875.613$ MeV/$c^2 \cdot 1.6 \times 10^{-19}$J/eV = 3.0 × $10^{-10}/c^2$ gives at operating temperature $T$ = $10^4$K the value $\overline{v}$ =

$c\sqrt{3 \cdot 1.381 \cdot 10^{-23} \cdot 10^4/3.0 \cdot 10^{-10}} \approx c(3.7 \times 10^{-5})$ m/s and therefore $v \ll c$ for T = $10^4$K. The deuteron particle velocity generated by accelerations in the electric fields $E_x$ before exiting the Matter Wave Lens is for the relativistic energy and disregarding spin and integration constants

$$\mathcal{E}_{Rel} = m_D c^2 \left(1 - \frac{v^2}{c^2}\right)^{-\frac{1}{2}} + q\varphi \approx m_D c^2 + \frac{1}{2} m_D v^2 + q\varphi, \qquad \frac{v^2}{c^2} \ll 1,$$

where the latter approximation is valid for $\frac{v^2}{c^2} \ll 1$, i.e. for $v \ll c$. The velocity acquired by the particle in the electric field over distance $l_i$ is in the non-relativistic approximation obtained from $\frac{1}{2} m_D v^2 = q\varphi$ or $\frac{1}{2} m_D v^2 = q E_x l_i$ for a homogenous field $E_x$ or more generally

$\frac{1}{2} m_D v^2 = q \int_0^{l_i} E(r) dr.$ We assume for the sole purpose of illustrating the principles lying behind the embodiment of the inventive method that the electric fields are weak enough or that the physical dimensions of the Fusion Reactor are small enough such that the condition $v \ll c$ is valid. For $v \ll c$, the Fusion Reactor Equations under these approximations are given by (14).

The equations (14) are partial differential equations with a non-constant coefficient x. Using standard notation, the spin variables $\sigma$ represent the 3 discrete deuteron eigenvalues $\sigma_x \equiv S_x = \pm 1,0$ in the $S_x$-diagonal representation as made explicit in (10c). Following standard procedure for separating the $x$, $t$ and spin variables $\sigma$, with the spin variables already in effect separated, by assuming a solution of the form $\psi(x,t)\sigma \rightarrow \psi(x)\psi(t)\sigma \equiv \psi(x,\sigma)\psi(t) \equiv \psi(x)\psi(t)\psi(\sigma)$ with

starting point $i\hbar \frac{\partial \psi(t)}{\partial t}\psi(x)\sigma = \left(\frac{1}{2m_D}\left(-\hbar^2 \frac{\partial^2 \psi(x)}{\partial x^2}\right) - qE_x x\psi(x) - \boldsymbol{\mu} \cdot \boldsymbol{B}\psi(x)\right)\psi(t)\sigma,$ or after multiplying by

$\sigma^{-1}$ from the left, $i\hbar \frac{1}{\psi(t)}\frac{\partial \psi(t)}{\partial t} = \frac{1}{\psi(x,\sigma)}\left(\frac{1}{2m_D}\left(-\hbar^2 \frac{\partial^2 \psi(x,\sigma)}{\partial x^2}\right) - qE_x x\psi(x,\sigma) - \boldsymbol{\mu} \cdot \boldsymbol{B}\psi(x,\sigma)\right) \equiv -\varepsilon$ for some number

$\varepsilon$ independent of $x$, $\sigma$ and $t$. The number $-\varepsilon$ is the eigenvalue of the Hermitian operators $\left(i\hbar\frac{\partial}{\partial t}\right)$ and

$-\left(\frac{\hbar^2}{2m_D}\frac{\partial^2}{\partial x^2} + qE_x x + \boldsymbol{\mu} \cdot \boldsymbol{B}\right)$ acting on $\psi(t)$ and $\psi(x,\sigma)$ respectively. The $x$ and $\sigma$ variables are in turn separated by

$\frac{1}{\psi(x)}\left(\frac{1}{2m_D}\left(-\hbar^2 \frac{\partial^2 \psi(x)}{\partial x^2}\right) - qE_x x\psi(x)\right) + \mathcal{E} = \frac{1}{\psi(\sigma)}(+\boldsymbol{\mu} \cdot \boldsymbol{B}\psi(\sigma)) \equiv -\mathcal{E}_B.$ This results in the separated Fusion Reactor Equations for (14) given by

$$\psi(t): \quad i\hbar \frac{\partial \psi(t)}{\partial t} + \mathcal{E}\psi(t) = 0 \tag{17a}$$

$$\psi(x): \quad \frac{1}{2m_D}\left(-\hbar^2 \frac{\partial^2 \psi(x)}{\partial x^2}\right) - qE_x x\psi(x) + (\mathcal{E} + \mathcal{E}_B)\psi(x) = 0 \tag{17b}$$

$$\psi(\sigma): \quad (\boldsymbol{\mu} \cdot \boldsymbol{B} + \mathcal{E}_B)\psi(\sigma) = 0 \tag{17c}$$

Mathematical properties of (17) will be discussed first, subsequently followed by physical interpretation. The mathematical details are significant, for example, when constructing Fusion Reactor simulation software.
The equation (17c) only reiterates what has already been assumed, in equation (10c), namely that $-\boldsymbol{\mu} \cdot \boldsymbol{B} = \varepsilon_B$. The differential equation (16.a) with constant coefficients is integrated to

$$\psi(t) = C_1 e^{\frac{i}{\hbar}[\mathcal{E}t + \delta_{0t}]} + \psi_{0t}$$

(18a)

In (18a), $C_1$ is taken as real when the complex phase information at $t = 0$ is carried by $\delta_{0t}$. The homogenous differential equation (17.b), with non-constant coefficient x and using the definition $Q(x) \equiv \frac{2m_D}{\hbar^2}(qE_x x - (\mathcal{E} + \mathcal{E}_B))$, is of the normal form

$$\psi(x): \frac{\partial^2 \psi(x)}{\partial x^2} + Q(x)\psi(x) = 0$$

(17b′)

The functions $Q(x)$ or $(x - l_1)^2 Q(x)$ are not analytic at the irregular singular point $x = l_1$, which arises from the jump discontinuity at $x = l_1$. This singularity arises from the mathematical idealization of the fields E and B as Heaviside functions of the form

$$E_x = E_1 \quad 0 < x < l_1$$

$$E_x = E_2 \quad l_1 \leq x < l_2$$

For this reason, a small number $\varepsilon$ was included in (14), and $Q(x)$ is analytic on each interval $0 \leq x \leq l_1 - \varepsilon$ and $l_1 + \varepsilon \leq x \leq l_2$. Since (17b′) is a second order differential equation with non-constant coefficients, we do not in general expect solutions of this equation to be expressible in terms of elementary functions. In addition, if a step function of the form above is used, then $E_x$ and $B_x$ would not be continuous nor have continuous derivatives at $x = l_1$ and the need of introducing distributions and weak derivatives arise. This complication will be avoided below by deleting the small segment $x = l_1 \pm \varepsilon$ for the purpose of illustrating this embodiment of the inventive method. The mathematical problem at $x = l_1$ does not arise from physics. An exact solution of the Maxwell equations will result in $C^\infty$ fields also on the interval $x = l_1 \pm \varepsilon$, and solutions in terms of power series can be assumed (George F. Simmons, Differential Equations with Applications and Historical Notes (CRC Press, Third Edition), Section 28, p. 210-) over all x. In practice, (17b) or (17b′) would in most cases be solved by numerical methods.

We now further assume that the fields $E_x$ and $B_x$ are weak enough, and that the interval $x = l_1 \pm \varepsilon$ is small enough, such that the dynamics of the deuteron when passing through this interval remains unaffected apart from a phase shift $\delta_\varepsilon$. In this approximation, the interval $x = l_1 \pm \varepsilon$ is simply eliminated from the system and the equations are solved separately for $x \leq l_1 - \varepsilon$ and $x \geq l_1 + \varepsilon$. This reduces the system to a regular Sturm-Liouville problem when determining for what particular values of $\varepsilon + \varepsilon_B$ solutions of (17b) or (17b′) will be permitted. Rewriting $Q(x) \equiv \frac{2m_D}{\hbar^2}(qE_x x - (\mathcal{E} + \mathcal{E}_B))$ in (17b′) on the form $Q(x) \equiv -\frac{2m_D}{\hbar^2}(\mathcal{E} + \mathcal{E}_B) + \frac{2m_D q E_x}{\hbar^2}x \equiv -a + bx$, it is seen that $Q(x)$ is a first order polynomial in the independent variable x. For such $Q(x)$, the method of Laplace transforms may in principle be used to solve (17b′) (see George F. Simmons, Differential Equations with Applications and Historical Notes (CRC Press, Third Edition), Chapter 9, p. 447-). However, this method will depend on identifying inverse Laplace transforms as the solutions $\psi(x)$. This identification will be difficult for general Fusion Reactor Equations and therefore, in practice, the general methods for solving the Fusion Reactor equations like (17b) or (17b′) are reduced to power series or numerical methods. Here, power series are obtained by removing segments $x = l_1 \pm \varepsilon$ under the approximation that such segments have small impact on the dynamical system. Since $Q(x)$ is now analytic ($C^\infty$ with convergent power series) over all x, the equation

(17b′) has two linearly independent unique analytic solutions on all x in the Fusion Reactor (George F. Simmons, Differential Equations with Applications and Historical Notes (CRC Press, Third Edition), Section 29, p. 214, Theorem A). For $\alpha = 0$ and $b = 1$ in $Q(x) = -\alpha + bx$, the equation (17b′) reduces to the well-known Airy equation with Airy functions as solutions. As a starting point, the general method power series will be used, and Airy functions that are valid for this particular case will be introduced later.

Assuming now a power series solution of (17b') of the form

$$\psi(x) = \sum_{n=0}^{\infty} c_n x^n = c_0 + c_1 x + c_2 x^2 + c_3 x^3 + \dots \qquad (18b)$$

The conditions on $c_n$ in (18b) are obtained by inserting (18b) in (17b') of the form

$$\frac{\partial^2 \psi(x)}{\partial x^2} - (a - bx)\psi(x) = 0 \qquad (17b'')$$

From (18b) follows that

$$\frac{\partial \psi}{\partial x} = c_1 + 2c_2 x + 3c_3 x^2 + \dots = \sum_{n=0}^{\infty} n c_n x^{n-1}$$

$$\frac{\partial^2 \psi}{\partial x^2} = 2c_2 + 2 \cdot 3c_3 x + 3 \cdot 4c_4 x^2 + \dots = \sum_{n=0}^{\infty} n(n-1) c_n x^{n-2} \qquad (19)$$

Inserting (19) into (17b") gives (17b") in the form

$$\sum_{n=0}^{\infty} n(n-1) c_n x^{n-2} - (a - bx) \sum_{n=0}^{\infty} c_n x^n = 0 \qquad (17b''')$$

Equating equal powers in the resulting (17b''') provides the conditions on the coefficients $c_n$ as

$$x^0: \ 2c_2 - ac_0 = 0 \qquad\qquad c_2 = \frac{1}{2} ac_0 \qquad (20a)$$

$$x^1: \ 2 \cdot 3c_3 + bc_1 = 0 \qquad\qquad c_3 = -\frac{1}{2 \cdot 3} bc_1 \qquad (20b)$$

$$x^2: \ 3 \cdot 4c_4 - ac_2 + bc_1 = 0 \quad c_4 = \frac{1}{3 \cdot 4}(ac_2 - bc_1) = \frac{1}{3 \cdot 4}\left(\frac{1}{2} a^2 c_0 - bc_1\right) \qquad (20c)$$

$$x^3: \ 4 \cdot 5c_5 - ac_3 + bc_2 = 0 \quad c_5 = \frac{1}{4 \cdot 5}(ac_3 - bc_2) = -\frac{1}{4 \cdot 5}\left(\frac{1}{2 \cdot 3} abc_1 + \frac{1}{2} abc_0\right) \qquad (20d)$$

$$x^4: \qquad\qquad \dots \text{etc.}$$

No conditions are placed on the constants $c_0$ and $c_1$ in the recursion above, the constants $c_0$ and $c_1$ are determined from the boundary values on the segments $0 \le x \le l_1 - \varepsilon$ and $l_1 + \varepsilon \le x \le l_2$. The boundary values are chosen to maximize probability of deuteron fusion, and this optimization will be made more precise below. The constants $\alpha$ and $b$ carry the information of the fields **B** and **E** respectively. The solutions of the Fusion Reactor equations (17) is now from (18a) and (17.b) given as

$$\psi(x,t)\sigma = \psi(x)\psi(t)\sigma = \left(\sum_{n=0}^{\infty} c_n x^n\right)\left(C_1 e^{-\frac{i}{\hbar}[\mathcal{E}t + \delta_{0t}]} + \psi_{0t}\right)\sigma \qquad (21)$$

In the above mathematical approximation using step functions for the fields in this particular embodiment as indicated in Figure 6 Airy functions *Ai* may be used to solve (17b). Using the form (17b") with

$$-(a - bx) \equiv -\frac{2m_D}{\hbar^2}\big((\mathcal{E} + \mathcal{E}_B) - qE_x x\big) \equiv -\frac{2m_D}{\hbar^2}\big((\mathcal{E} + \mathcal{E}_B) - Fx\big)$$ and with variable substitution

$$\xi \equiv \left( x + \frac{\varepsilon + \varepsilon_B}{F} \right) \left( \frac{2m_D F}{\hbar^2} \right)^{\frac{1}{3}}$$

results in the equation and solution of the form (L.D. Landau and E.M. Lifshitz, Quantum Mechanics (Non-relativistic Theory) (Per-gamon Press 1977, Third Edition), §24, equations (24.2), (24.3), (24.4))

$$\frac{\partial^2 \psi(\xi)}{\partial \xi^2} - \xi \psi(\xi) = 0 \tag{22a}$$

$$\psi(\xi) = C Ai(-\xi) \tag{22b}$$

$$Ai(\xi) = \frac{1}{\sqrt{\pi}} \int_0^\infty \cos\left( \frac{1}{3} u^3 + u\xi \right) du \ . \tag{22c}$$

We will now turn to the physical interpretation of (17), and in particular (17b), while initial and boundary values to achieve Cold Fusion will be discussed subsequently. The separated Fusion Reactor Equation (17b) states that the kinematics along the x-axis depend on the number $\varepsilon_B$. There are 3 different values of this number, as explicitly given by (11) above. All deuterons with initial velocity $v_0 = 0$ at $x = l$ will have exactly the same total energy when exiting the Matter Wave Lens and entering into the field **B**. Under the approximations given above, the small interval $x = l_1 \pm \varepsilon$ does not have any effect on the energy of the deuterons. This implies that the same total energy is split into 3 different kinematics along the x-axis depending on the deuteron spin orientation $S_x = \pm 1, 0$. As the electric field term in (17b) is the same for all deuteron spin orientations, only the kinetic energy term $\frac{1}{2m_D} \left( -\hbar^2 \frac{\partial^2 \psi(x)}{\partial x^2} \right)$ can be different for the 3 spin orientations. The lowest value of the number $\varepsilon_B$ gives the highest value of the kinetic energy from conservation of total energy. This means that if the condition for Cold Fusion is $v_x = 0$ at $x = 0$, and if this is applied to the spin component that has the highest kinetic energy, then only this particular deuteron spin will reach $x = 0$ in the Fusion Reactor Core, while the other deuterons have been removed from the stream and travel with a non-zero $v_y + v_z = v_r$ velocity expectation value component as indicated in Figure 6.

This process of spin dependent kinetic energy is also indicated by classical field theory. From the current loop analogy of the spin magnetic moment, for synchrotron radiation for a particle with $v \ll c$, twice as much radiation intensity is received in the direction of the magnetic moment $\mu$ than in the plane orthogonal to $\mu$ (see L.D. Landau and E.M. Lifshitz, The Classical Theory of Fields (Pergamon Press 1975, Fourth Revised English Edition), §74, equation (74.5)).

Furthermore, as most easily seen from continuity and the ultra-relativistic case $v \sim c$, radiation from a moving charged particle under acceleration is asymmetric in the direction of the velocity and the opposite direction (see L.D. Landau and E.M. Lifshitz, The Classical Theory of Fields (Pergamon Press 1975, Fourth Revised English Edition), §74, equation (74.5)). Therefore, from conservation of momentum, radiation associated with spin transitions from $S = -1, 0$ to $S = +1$ will change $v_x$. In this case, filtering of the undesired spins can be achieved by the deuterons having different velocities $v_x$. Again, such spin filtering is not required in the low temperature limit $T \to \infty$, as in this limit all deuteron states are $S = +1$ from the outset.

For the purpose of illustration of this embodiment, we arbitrarily choose to fuse the highest kinetic energy components by allowing only such deuterons travel to $x = 0$ and therefore chose the lowest magnetic energy deuterons which are oriented parallel to the magnetic field **B**. In this embodiment, we could equally well have chosen to take the highest magnetic energy components to fuse by taking the spin and magnetic field **B** anti-parallel, in which scenario the highest kinetic energy deuterons will travel through $x = 0$ and be collected in the opposite half of the Fusion Reactor or in the Fusion Reactor Core.

A third option for this embodiment is to introduce one or several further electromagnetic fields and bend the streams corresponding to $S = \pm 1, 0$ differently depending on spin. For this option, the Matter Wave Lens could for example be placed at $y = +h$ for $x > 0$ and $y = -h$ for $x < 0$. With appropriate adjustments of the fields **E** and **B**, the electromagnetic fields are designed to bend the deuteron streams toward $(x,y,z) = (0,0,0)$, in which case only the desired spin component streams will meet at $(x,y,z) = (0,0,0)$ at some angle, the undesired deuteron streams will either bend too fast or too slow and not meet subject to Cold Fusion boundary condition $v =$

$$\sqrt{v_x^2 + v_y^2 + v_z^2} = 0 \text{ at } x = 0.$$

The initial and boundary values determining all constants in (21) will now be discussed, of which $C_1$ will be taken to scale the number of deuterons per unit time emerging from the Ionization Chamber into the Fusion Reactor. The number of deuterons emerging from the Ionization Chamber into the Fusion Reactor is controlled by the deuterium density in the Ionization Chamber and by the intensity of the ionization radiation. The solution over all x is given by joining the solutions for $0 \leq x \leq l_1 - \varepsilon$ and $l_1 + \varepsilon \leq x \leq l_2$, by matching the boundary conditions $\psi(l_1- \varepsilon) = \psi(l_1 + \varepsilon)e^{i\delta_\varepsilon}$ with the approximation used here that the interval $l_1 \pm \varepsilon$ has no effect on the dynamics. Again, the purpose of this assumption is only for illustrating this embodiment of the present invention.

The initial values and boundary conditions are chosen to optimize the probability of deuteron fusion. In order to extract information on this optimization, some principles of relativistic QFT are invoked. The probability of fusion can be regarded as the probability to achieve (strong) interaction, while the probability of interaction can be expressed in terms of probability of a particular scattering from initial state $|i\rangle$ to final state $|f\rangle$ by scattering matrix $S_{fi}$. This probability is proportional to $|\langle f|S|i\rangle|^2$. Assuming now a split of the system Hamiltonian $H$ into the free system part $H_0$, describing $H$ when the two deuterons are a large distance apart and non-interacting, and an interaction Hamiltonian $H_I$ of the form

$$H = H_0 + H_I \tag{23}$$

The S-matrix can be expanded in power series in natural units ($\hbar = 1$, $c = 1$) for time ordered product $T$ in interaction Hamiltonians $H_I$ of the form (F. Mandl & G. Shaw, Quantum Feld Theory (John Wiley and Sons Ltd. 1986), Section 6.2, equation (6.23)):

$$S = \sum_{n=0}^{\infty} \frac{(-i)^n}{n!} \int ... \int d^4 x_1 d^4 x_2 ... d^4 x_n \, T\{H_I(x_1)H_I(x_2) ... H_I(x_n)\} \tag{24}$$

The key point here is that the derivation of the S-matrix in terms of power series does not depend on the interaction being weak in the sense that $H_I$ in (23) is only a small perturbation of $H_0$. Perturbation methods arise only at the instance when assuming that (24) is rapidly converging by cutting the expansion of (24) after the first few terms or by assuming that the perturbed states change only slowly with time when expressing the states in a representation where $H_0$ is diagonal, the latter referred to as an interaction representation. In QED for example, the $H_I$ are expressed in terms of fine structure constant $\alpha = \frac{1}{137.04}$, the power series term $n$ will be proportional to $\alpha^n$ and (24) will converge rapidly. The existence of the power series (24) is also independent of any possible interpretation of each order of power series in terms of physical processes and corresponding Feynman graphs. The existence of the power series of the form (24) depends only on the convergence of (24), which can be expressed as the ration test $\lim_{n \to \infty} \left| \frac{u_{n+1}}{u_n} \right| < 1$ for power series of the form $S = \sum_{n=0}^{\infty} u_n$, in contrast to perturbation theory that assumes that $S$ is well approximated by truncating the sum after a few initial terms. From the principle of regarding the gluon fields as defining effective null surfaces as described in Section 3 above, from the $C^\infty$ structure of space-time, and results from General Relativity that mass is associated with complex space-times (see R.Penrose & W.Rindler, Volume 1, Two-Spinor Calculus and Relativistic Fields (Cambridge University Press 1990), Section 4.6, p. 231-237), we expect analytic fields in general which can be expressed in term of power series. Therefore (24) is assumed, but with strong interactions such that (24) still converges. The S-matrix (24) in energy-momentum space and for Feynman amplitude $M$ is written in terms of transition amplitudes as (F. Mandl & G. Shaw, Quantum Feld Theory (John Wiley and Sons Ltd. 1986), Section 7.3, equation (7.45)):

$$\langle f|S|i\rangle = \delta_{fi} + (2\pi)^4 \delta^{(4)}(P_i - P_f) \prod_{ext} \left(\frac{m}{VE}\right)^{\frac{1}{2}} \prod_{ext} \left(\frac{1}{2V\omega}\right)^{\frac{1}{2}} M \tag{25}$$

The equation (25) is a general expression wherein the detailed information of the interaction is carried by the Feynman amplitude *M*. The index *ext* in (25) refers to the external particles before and after the interaction or scattering, or equivalently the external lines in the momentum space Feynman diagrams. Equation (25) is now applied to the channel

$$D + D \to {}^{4}_{0}He + 2\gamma(\omega).$$ When treating the proton and neutron separately in the scattering in the S-matrix equation with index + and - indicating whether the deuteron emerge from positive or negative x into the Fusion Reactor Core, index 1 and 2 for each emitted photon and index *n* and *p* for neutron and proton respectively, equation (25) is now written

$$\langle f|S|i\rangle = \delta_{fi} + (2\pi)^4 \delta^{(4)}\big(P_i - P_f\big) \times$$

$$\times \left(\frac{m_n}{VE_{n+}}\right)^{\frac{1}{2}} \left(\frac{m_p}{VE_{p+}}\right)^{\frac{1}{2}} \left(\frac{m_n}{VE_{n-}}\right)^{\frac{1}{2}} \left(\frac{m_p}{VE_{p-}}\right)^{\frac{1}{2}} \left(\frac{1}{2V\omega_1}\right)^{\frac{1}{2}} \left(\frac{1}{2V\omega_2}\right)^{\frac{1}{2}} \left(\frac{m}{VE_{He}}\right)^{\frac{4}{2}} M \qquad (26)$$

In (26), the mass and energies of neutrons and the protons in the resulting ${}^{4}_{0}He$ has been approximated to be the same in the last factor. From (26) it is immediately seen that, independently of the details of the interactions carried by the Feynman amplitude *M*, the maximum probability of interaction by deuteron fusion for $E \geq m$ is when $E = m$ in all factors. The boundary conditions constraining the fields **E** and **B** contained in the constants $\alpha$ and $b$ of (20) are therefore that the non-relativistic deuteron momentum and velocity become $p_x = 0$ and $v_x = 0$ in the Fusion Reactor Core at $x = 0$. In summary, the Cold Fusion boundary conditions and referring to Figure 6 are

$$p_i = 0 \qquad\qquad\qquad at\ x = 0 \qquad\qquad (27a)$$

$$S = +1 \qquad\qquad\qquad at\ x = 0 \qquad\qquad (27b)$$

In (27a), $p_i = 0$ formally represents $p_i \equiv (p_0, p_1, p_2, p_3) = (m_D c,\ 0,0,0)$ if relativistic mechanics is used, or

$$p_i \equiv \int \psi^* \left(-i\hbar \frac{\partial}{\partial x^i}\right) \psi dV = 0$$ in a small neighbourhood of $x = 0$ if non-relativistic Quantum Mechanics is used.

From $\frac{1}{2} m_D \overline{v^2} = \frac{3}{2} k_B T$ it also follows from the low temperature limit in the Ionization Chamber when $\overline{v^2} = 0$ at $x = l_2$, disregarding the back-reaction of the ionization radiation of the deuteron and disregarding the magnetic spin-splitting, that the deuteron acceleration by $E_2$ must be cancelled exactly by $E_1$, or more precisely that

$$E_1 l_1 = E_2 (l_2 - l_1) \qquad\qquad\qquad (28)$$

In order to maximize the probability of deuteron fusion by the method of dynamical or quantum state preparation, the two deuterons from each side need to be transported by the Maxwell fields to the point $x = 0$ where $p_x = 0$, and with the correct spin and iso-spin polarizations P#N+N#P at $x = 0$. It is clear that if this could be achieved exactly, then the deuteron fusion will certainly occur, or, more precisely, will occur with high probability. This follows from the fact that once the deuterons considered as bosons are close enough, the always attractive boson exchange energy will attract the deuterons until they come close enough for the always attractive nuclear forces to take over. The nuclear forces can at large distances be approximated by the Yukawa potential (see John Dirk Walecka, Theoretical Nuclear and Subnuclear Physics (Imperial Collage Press 2013), Appendix A, p. 549-, equation (A.8)):

$$V(r) = -\frac{g_s^2}{4\pi c^2} \frac{e^{-m_s r}}{r} \qquad\qquad\qquad (29)$$

We consider the Yukawa potential interaction associated with an exchange of a neutral (pseudo-)scalar $\pi^0$ meson. Neutral means here that once a correct iso-spin polarization is obtained, say N#P, this nuclear interaction does not change the order in N#P. The scalar property means here that once the correct spin orientation is obtained, this nuclear interaction does not change the spin orientation.

As an estimate of the nuclear interaction range at low energies, $r_{tot}$, we take the known experimental neutron-proton effective nuclear interaction range. The cross section at low energy is 20.4 barns (see John Dirk Walecka, Theoretical Nuclear and Subnuclear Physics (Imperial Collage Press 2013), Section 1.2, equation (1.4)) or 20.4 × $10^{-28}m$. From $A = \pi r^2$, this gives $r_{tot}$ = 2.55 × $10^{-14}m$, or 25.5 f.m. A more conservative value of the nuclear interaction range for nuclear fusion will be used, rather than 2.55 × $10^{-14}m$, given by

$$r_{tot} = 10^{-14}m = 10 \text{ f.m.} \tag{33}$$

In fact, the above low energy neutron-proton cross section can be expected to be far too small if the dynamical state preparations are perfectly eliminating electromagnetic repulsions as the deuteron-deuteron is fusing into an even-even number of neutrons and protons as compared to the odd-odd neutron-proton fusion. One factor is that, in the neutron-proton case, there is no identical particle state function symmetrisation, while in the identical particle deuteron-deuteron fusion there is a boson state function symmetrisation resulting in an additional attractive deuteron-deuteron exchange interaction. In addition, for nuclear matter the deuteron is larger than the proton or neutron further extending the range of nuclear interactions. The advantage of fusing deuteron-deuteron over neutron-proton is illustrated by the difference in binding energies. The neutron-proton binding energy in the deuteron is 2.225 *MeV,* while the deuteron-deuteron binding energy in $^{4}_{0}He$ is 23.8 *MeV.* If this difference is interpreted as a stronger Yukawa potential (29), then the nuclear range is extended in the deuteron-deuteron fusion case as $g_s$ and $m_s$ in (29) do not change. Nevertheless, for the purpose of testing theoretical limits, in particular in connection with the Heisenberg Principle of Uncertainty, and for setting extreme engineering objectives, (33) will be used.

In summary, a high rate of deuteron fusion in the Fusion Reactor Core and in a neighbourhood of $x = 0$ is obtained by placing the two deuterons within $10^{-14}m$ from $x = 0$ at $v_x = 0$. To the extent $v_x = 0$ cannot be maintained, the two deuterons need to be located within the region $r = 10^{-14}m$ approximately simultaneously.

There are essentially three limiting factors on the precision of reaching $v_x = 0$ and $x = 0$ for each fusion deuteron. In this approximation we assume that the fields ***E*** and ***B*** are classical fields that can be determined with infinite precision. The remaining limiting factors, when the fields ***E*** and ***B*** are disregarded, are the Heisenberg Principle of Uncertainty and the point particle approximations used. With regard to the point particle approximation, the deuteron radius $R$ in (30) is $R$ = 1.3 fm, and is therefore significantly less than the 10 fm precision required. The point particle approximation therefore does not have a significant effect on the required engineering precision in a first approximation. The remaining limit of resolution of reaching $v_x = 0$ and $x = 0$ simultaneously is the Heisenberg limit. For uncertainty $\Delta$ and in the non-relativistic approximation $v \ll c$ this Heisenberg limit is

$$\Delta p_x \Delta x = m_D \Delta v_x \Delta x \geq \frac{1}{2}\hbar \tag{34a}$$

$$\Delta p_y \Delta y = m_D \Delta v_y \Delta y \geq \frac{1}{2}\hbar \tag{34b}$$

$$\Delta p_z \Delta z = m_D \Delta v_z \Delta z \geq \frac{1}{2}\hbar \quad . \tag{34c}$$

$$\Delta \mathcal{E} \Delta t \geq \frac{1}{2}\hbar \tag{34d}$$

For $m_D$ = 2.0 · 1.7 × $10^{-27}$ *kg* and $\hbar$ = 1.1 × $10^{-34}Js,$ the result of the resolution limit in (34a) is

$$\Delta v_x \Delta x = \frac{1.1}{2 \cdot 2.0 \cdot 1.7} 10^{-34+27} = 1.6 \times 10^{-8} \ m^2/s \tag{35}$$

As the required precision on $\Delta x$ is $10^{-14}m$ = 10 fm, the possible precision on velocity is from (35) given as

$$\Delta v_x = \frac{1}{\Delta x} 1.6 \times 10^{-8} = 1.6 \times 10^{-8+14} = 1.6 \times 10^6 m/s \qquad (36)$$

As $\Delta v_x \ll c = 3 \times 10^8$ $m/s$, there is no theoretical limit preventing to achieve the required engineering precision of $\Delta x = 10^{-14}m$. This uncertainty in velocity, however, restricts the time that the deuteron spends within the region $r = 10^{-14}m$. This time is on the average estimated as $t = \frac{s}{v} = \frac{10^{-14}}{1.6 \cdot 10^6} = 0.6 \times 10^{-20}s.$ The requirement is that the deuteron fusion is achieved in shorter time than $0.6 \times 10^{-20}s$. Considering the deuteron fusion again as an interaction, and the interaction in turn again as a scattering process as in (24) above, the exact decay rate from the original two-deuteron $D + D$ system to the fused $^4_0 He + 2\gamma(\omega)$ for the channel $D + D \rightarrow {}^4_0 He + 2\gamma(\omega)$ can be calculated exactly from the square norm of the second term in (25), and differential decay rates can in turn be calculated from these momentum space results (see F. Mandl & G. Shaw, Quantum Feld Theory (John Wiley and Sons Ltd. 1986), Section 11.5, equations (11.35), (11.36), (11.37), (11.38)). In this context, a simple estimate of the fusion reaction time is made by again using the Heisenberg principle as given by (34d). The uncertainty in the energy for the synthetic two-deuteron system is the energy change $0.368 \times 10^{-11}$ J as specified under heading "Fusion Material", above. With this uncertainty in energy inserted in (34d), the limit resolution time is

$$\Delta t = \frac{1}{2\Delta\varepsilon}\hbar = \frac{1.1}{2 \cdot 0.368} \cdot 10^{-34+11} = 1.5 \cdot 10^{-23}s \qquad (37)$$

Comparing (37) with the time $0.6 \times 10^{-20}s$ spent in the region $r \le 10$ fm, it follows that deuteron fusion occurs in the average $\frac{0.6 \times 10^{-20}}{1.5 \cdot 10^{-23}} = 400$ times within the time that the deuterons spend in the region $r \le 10$. From these results follows that the deuteron dynamical state preparations $v_x = 0$ at $x = 0$ are possible while maintaining deuteron fusion. Obtaining a high rate of deuteron fusion in the Fusion Reactor Core is therefore only a matter of engineering precision along the $x$-axis.

One purpose of the Matter Wave Lens is to obtain the precision engineering required in the y and $z$ directions. The total lensing effect is obtained by the Matter Wave Lens and the fields $E$ and $B$. In this particular simple embodiment illustrating the method, the field $B$ is in this approximation uniform along the deuteron paths. In such an approximation all lensing with $E_1$ and $E_2$ homogenous is achieved by the Matter Wave Lens, and to which optional magnetic and electric fields field can be added to improve the lens. From the Lorentz force (8), the deuterons will rotate around the $x$-axis with coordinates $(y,z) = r(\cos \omega t, \sin \omega t)$ where $\omega \equiv \frac{qcB_x}{\varepsilon} = \frac{2qcB_x}{m_D v^2}$ and $r \equiv \frac{cp_t}{qB_x} = \frac{cm_D v_t}{qB_x}$ with $v_t \equiv \sqrt{v_y^2 + v_z^2}$ as follows from direct calculation (see L.D. Landau and E.M. Lifshitz, The Classical Theory of Fields (Pergamon Press 1975, Fourth Revised English Edition), §21, equations (21.3), (21.5), (21.6)). When disregarding the magnetic field effects, the spreading of the deuteron stream into the Fusion Reactor and the Fusion Reactor Core arise, when disregarding deuteron-deuteron interaction within the same stream emerging into the Fusion Reactor Core, from the diffraction at the exit point of the Matter Wave Lens at $x = l_1$. This diffraction can be calculated by exact solutions of the Schrödinger equations (13) for the exact solutions of the Maxwell equations of the vector potential $A_k$ used in (13) in the neighborhood of $x = l_1$. Alternatively, this diffraction can be calculated by a geometric optics analogy with a de Broglie wave of wavelength $\lambda = h/p$ or $p = \hbar k$ from $k \equiv \frac{2\pi}{\lambda}$. In this latter model, the deuteron velocity, say at 100K, is from $\bar{v} = \sqrt{3k_B T/m_D}$ above, or $\bar{v} = c\sqrt{3 \cdot 1.381 \cdot 10^{-23} \cdot 10^2/3.0 \cdot 10^{-10}} \approx c(3.7 \times 10^{-6}) \approx 1.1 \times 10^3 m/s.$ From this follows for $v \ll c$ that $\lambda = \frac{h}{p} = \frac{h}{m_D v} = c^2 \frac{6.6 \times 10^{-34}}{3.0 \times 10^{-10} \cdot 1.1 \times 10^3} = 18 \cdot 10^{16-34+10-3} = 1.8 \cdot 10^{-10}m$ for the deuteron in a point particle approximation. As long as the opening 2r in the Matter Wave Lens is much larger than the deuteron de Broglie wave length $1.8 \cdot 10^{-10}m$, i.e. $1.8 \cdot 10^{-10}m \ll 2r$ at a hypothetical velocity of 100K, diffraction calculations using geometric optics analogy can be used, which here corresponds to Fraunhofer diffraction (L.D. Landau and E.M. Lifshitz, The Classical Theory of Fields (Pergamon Press 1975, Fourth Revised English Edition), §61, p. 153-).

One must however keep in mind that the optics null condition $k_i k^i = 0$ does not apply for matter waves, and all geometric optics equations must be adjusted accordingly. In order to simplify the illustration of this embodiment of the method, a third method of again using the Heisenberg Uncertainty Principle will be used here to estimate the diffraction effect. Constraining the deuteron to the Matter Wave Lens opening gives $\Delta y = \Delta z = 2r$ which from (34b) and (34c) yields the maximum precision in the $y$ and $z$ momenta as

$$\Delta p_y = \Delta p_z = \frac{1}{4r}\hbar \qquad\qquad (38)$$

The Matter Wave Lens must therefore be constructed in such a way that the effect of the diffraction (38) at $x = l_1$ does not significantly spread the matter wave at $x = 0$ outside the fusion region of 10 fm as given by (33). The effect of the diffraction at $x = 0$ depends in the general case on the fields $\boldsymbol{E}$ and $\boldsymbol{B}$, and on all the physical dimensions like $l_1$ and $l_2$, and r in (38) must be chosen such that the Matter Wave Lens will focus the deuteron stream within 10 fm at $x = 0$.

Up to this point, gravity has been disregarded in the present embodiment. The Fusion Reactor need to be kept at approximate atmospheric vacuum in this simple illustration in order for, by way of example, the deuteron streams not to be distorted by collisions with the accumulating Helium or other molecules, and for avoiding that the electromagnetic fields are distorted by polarizations and other effects. Due to the vacuum, the gravitational field will have the increasing effect that the $v \approx 0$ deuterons in the Fusion Reactor at $x = 0$ will start falling towards the centre of gravity when the Fusion Reactor is built on the surface of a planet. We assume for the purpose of illustrating the present embodiment that the Fusion Reactor is built on the surface of the Earth, tangential to the Earth surface and that the physical size $l$ is much smaller than that of the Earth. This approximation means mathematically that the acceleration of the deuterons in the gravitational field does not depend on the coordinate $x$ in the Fusion Reactor or in the Fusion Reactor Core when the $x$-axis is tangential to the Earth surface. We choose the $z$-axis with negative $z$-direction pointing towards the centre of gravity of the Earth. In this approximation, effects from the Earth rotation are also disregarded. The gravitational potential at $z$ relative to some $z$-coordinate $z_0$, and for effective gravitational acceleration $g$ at the point on the Earth surface where the Fusion Reactor is built, can now be approximated by

$$\varphi_G = m_D g(z - z_0) \qquad\qquad (39)$$

When adding the gravitational contribution to the dynamical system by adding the term (39) to the Hamiltonian in equations (14), the two terms $\left(-i\hbar\frac{\partial}{\partial y} - \frac{1}{2}\frac{q}{c}B_x z\right)^2$ and $\left(-i\hbar\frac{\partial}{\partial z} + \frac{1}{2}\frac{q}{c}B_x y\right)^2$ do not anymore vanish even in the quasi-classical deuteron trajectory approximation. Now the y and $z$ coordinates enter into the description and the magnetic field $\boldsymbol{B}$ affects the complete motion as illustrated by (8), not just fixing the spin projection part. In an exact model, the gravity effect on the spin should also be included. Gravity also increases the required precision engineering in the Fusion Reactor physical dimensions, and the fields need to be exactly symmetric when interchanging positive and negative $x$-axis. The deuteron emission from the Ionization Chamber for small deuteron beam intensity must be exactly synchronized in order for two deuterons to meet at the same time at $x = 0$. These complications can be reduced by rotating the Fusion Reactor $x$-axis in the power plant an angle $\theta_1 \approx \frac{\pi}{2}$ in order to align the $x$-axis with the line pointing towards the center of gravity of the Earth, together with introducing an asymmetry in the electric fields $\boldsymbol{E}$ between positive and negative $x$-axis, corresponding to a modification of (28), such that the deuteron on average stays hovering with a given spin projection in the gravitational and electromagnetic field at $x = 0$ with $v_x = 0$. This rotation of the $x$-axis will increase the fusion probability without the need to increase the deuteron stream intensity.

This embodiment of the method has been mainly illustrated by a P#N iso-spin polarized deuteron emerging from the left $x < 0$ and an N#P iso-spin polarized deuteron emerging from the right x > 0. We write this polarization undergoing fusion symbolically from left-to-right as P#N+N#P. However, it is realized that the present method can also be implemented with other polarizations. Hence, the iso-spin polarizations cancelling the electromagnetic repulsion may equally well be N#P+N#P or P#N+P#N. An embodiment with a change in iso-spin polarization requires the corresponding changes in the electromagnetic fields and in optional Spin Filters, i.e. the dynamical state preparations are performed differently.

With regard to the angular distribution of the produced energy, say for example of the channel

$$D + D \rightarrow {}^{4}_{0}He + 2\gamma,$$ from the general symmetry of this embodiment the physics is invariant with respect to rotation of the $x$-axis, i.e. a rotation in the $y, z$-plane. This means that the radiated energy will be symmetric with regard to this rotation. Secondly, the two deuteron bosons are symmetric with respect to interchange of the two deuterons. From this follows that the produced energy is radiated symmetric with respect to an angle $\theta$ measured from the $y, z$-plane. The exact $\theta$-dependence of the radiation can be determined experimentally from case to case. If the nuclear interactions were exactly described by (29), then the radiation can be expected to be spherically symmetric, but it is known from experiment that the interaction is spin dependent, and strongest spin dependence for even spins (see John Dirk Walecka, Theoretical Nuclear and Subnuclear Physics (Imperial Collage Press 2013), Section 1.4, Section 1.9) $S = 0$, $S = 2$, $S = 4$ etc. In this illustration of an embodiment with the even $S = 0$ case, the two deuterons fuse into an $S = 0$ state ${}^{4}_{0}He$ and for this channel the two photons are emitted in exactly antipodal (angle= $\pi$) directions with identical photon energy and with opposite helicity from conservation of spin and momentum for $v_x = 0$ at $x = 0$. The design of the Fusion Reactor Core is adjusted with the angle $\theta_2$ of the shield separating the Fusion Reactor Core, followed by adjustments of the electromagnetic fields and the Accumulator, in order to improve the ratio of the energy radiated into the Accumulator by the total energy produced in the Fusion Reactor Core. The rotational symmetry around the x-axis is maintained for optimum fusion production efficiency.

This simple illustration of this particular embodiment does not use an *explicit* Spin Filter. A Spin Filter for this embodiment can be described as an energy filter using the energy splitting (11) in order to extract the correctly iso-spin and spin polarized deuterons for optimum fusion efficiency. A Spin Filter works in principle in the same way by analogy with polarization filters for light or more general electromagnetic waves, with the polarization replaced by spin.

The principle used here is that the deuteron interaction in the deuteron stream with the Spin Filter depends on spin or both spin and iso-spin in such a way that the correct spin or both spin and iso-spin one wishes to extract does not interact with the filter, but that the particle in question simply, with a significant probability, passes through the filter, possibly with a phase shift $e^{-i\delta_{SF}}$ determined by the Spin Filter. The unwanted spins or both spins and iso-spins are extracted from the deuteron stream by the interacting with the filter by being absorbed or scattered in directions different to the $x$-axis. A spin filter may be any solid state, liquid or gas medium, or simply an electromagnetic field construction, or an arbitrary combination of solid state, liquid, gas and electromagnetic field constructions. If a Spin Filter is used, then a magnetic field $\boldsymbol{B}$ is still usually applied in conjunction with the filter in order to improve and maintain the filter results.

*Explicit* Spin Filter design by experiment is achieved by varying the physical Spin Filter material, which is typically a crystalline material or composition in order to introduce a directional scattering dependence and varying the crystalline orientation, varying the Monochromator output de Broglie wave length, and optionally varying the Fusion Material, and subsequently measure at what combinations a maximum Cold Fusion probability is achieved.

The illustrated embodiment of the invention does, however, include an *implicit* Spin Filter in the sense that only correct spins and iso-spins will reach exactly (within the Heisenberg principle limit) $v = 0$ at $x = 0$. Incorrect spins and iso-spins will either be deviated from moving in the $x$-direction before reaching $x = 0$ (too low kinetic energy) or pass through $x = 0$ (too high kinetic energy). This can be achieved experimentally by varying the electromagnetic fields $\boldsymbol{E}$ and $\boldsymbol{B}$, and in particular by varying the magnetic field $\boldsymbol{B}$ given a particular electric field $\boldsymbol{E}$, until significant fusion is achieved. The Spin Filter construction is desirable in order to minimize the interaction of the unwanted spins and iso-spins with the wanted deuteron stream.

The deuterons $D$ that did not undergo fusion, due to spin or iso-spin projection opposite to what is required or due to too small fusion cross section at the given impact energy in the Fusion Reactor core, will be collected again at $Q_1$ and $Q_2$, where the ions in general reduce to neutral deuterium atoms again and are transported for example by pressure gradients and re-inserted into the $D_2$ gas chamber for re-cycling, at which point depending on the $D$ density and operating temperature, most of the $D$ has recombined into $D_2$ gas again. The produced ${}^{4}_{0}He$ accumulate for example at weakly charged boundary points close the Accumulator and is collected for example by pressure gradients mainly after recombining to ${}^{4}_{2}He$ at the boundary.

Two factors in the above simple model to illustrate the present embodiment of the present invention decrease the quality of the dynamical state preparation and the deuteron stream.

The first is interactions between deuterons within the same stream. The second is non-exact spin state preparations in the sense that the spin is not exactly $\boldsymbol{S} = +1\boldsymbol{S}_x + 0 \cdot \boldsymbol{S}_y + 0 \cdot \boldsymbol{S}_z$, in a particular example when operator eigenvalue $\boldsymbol{S}\psi = +1\boldsymbol{S}_x\psi$ is attempted, but in practice $\boldsymbol{S} = +\alpha\boldsymbol{S}_x + \beta\boldsymbol{S}_y + \gamma\boldsymbol{S}_z$ and where $\alpha \approx 1$, and $\beta, \gamma \approx 0$. A common standard way to improve the above model to include the first effect, is to regard each deuteron in the stream as placed in a mean field created by all other deuterons in the stream, this is referred to (non-relativistic) Mean Field Theory or Relativistic Mean Field Theory. For low enough deuteron density, deuteron distances separated by much more than effective nuclear interactions range, the interaction mean field can be limited to electromagnetic interactions. This new effective potential in the non-relativistic case $\varphi_{MF}$ is added to the Fusion Reactor equations (14) as an additional term $+q\varphi_{MF}$ in the Hamiltonian.

The second results in a small residual electromagnetic repulsion at x = 0 as illustrated in Figure 4 above. This residual repulsion adds another term $+q\varphi_{Res}$ to the Fusion Reactor Hamiltonian. A residual repulsion yields one more modification of the condition (28), besides the gravitational correction given above. With these particular corrections of the model, for example, the general equation (13) with integration constants disregarded and the Fusion Reactor rotated $\frac{\pi}{2}$ is now written

$$ i\hbar \frac{\partial \psi}{\partial t} = H\psi = \left( \frac{1}{2m_D} \left( -i\hbar \frac{\partial}{\partial x^k} + \frac{q}{c} A_k \right)^2 + q\varphi - \boldsymbol{\mu} \cdot \boldsymbol{B} - m_D gx + q\varphi_{MF} + q\varphi_{Res} \right) \psi \tag{40} $$

In summary, for the Fusion Reactor and referring to Figure 6, this particular embodiment of the method requires strong enough magnetic fields $\boldsymbol{B}$ in order to align the deuteron spin with the magnetic field before reaching x = 0, and strong enough electric field $\boldsymbol{E}_1$ in order to achieve strong enough iso-spin polarization at x = 0. It is preferred to use low operating temperatures, in particular in the Ionization Chamber, and strong fields, but it is envisioned that it is also possible to increase the operating temperatures and to reduce the electromagnetic field strengths. The required fields for such embodiments can be estimated theoretically and determined numerically or experimentally.

In the above exemplified embodiments of the dynamical or quantum state preparation method for allowing Cold Fusion according to the present invention, the deuterons emerging from the Ionization Chamber when the optional Spin Filter is not used were described as unpolarized deuterons with respect to $S_x$ of the approximate average form $\psi_i = \frac{1}{\sqrt{3}} \psi_{+1} + \frac{1}{\sqrt{3}} \psi_0 + \frac{1}{\sqrt{3}} \psi_{-1}$. As the deuterium atoms have a non-zero total angular momentum, this embodiment can be improved by designing the ionization radiation in such a way that the deuterons emerging from the Ionization Chamber are already polarized or partially polarized such that the average state is $\psi_i = a\psi_{+1} + b\psi_0 + c\psi_{-1}$ where $a > \frac{1}{\sqrt{3}}$ and $b, c < \frac{1}{\sqrt{3}}$. In this case, the Ionization Chamber participates in the dynamical or quantum state preparations.

In the case of unpolarized deuterons emerging from the Ionization Chamber, and for low enough operating temperature, the low energy $S_x = +1$ is the preferred state once the deuteron moves in the magnetic field, while according to (6) an equal distribution over states is only valid in the limit $T \rightarrow \infty$. Therefore, transitions towards preferred state $S_x = +1$ must have occurred somewhere between the Fusion Chamber and the magnetic field section $0 \le |x| \le l_1 - \varepsilon$. Such transitions are in effect hidden in the mathematical idealization by removing the segments $l_1 \pm \varepsilon$. The mathematical approximation to match solutions over different segments of the x-axis simply by assuming phase shifts therefore have a limitation. The exact $C^\infty$ solutions of the Maxwell equations on the segments $l_1 \pm \varepsilon$ will give a magnetic field $\boldsymbol{B}$ that is dependent on x, $\boldsymbol{B} \equiv \boldsymbol{B}(x)$. From standard quantum mechanics, the Hamiltonian term $-i\hbar \frac{\partial}{\partial x^k}$ in (40) does not anymore commute with the magnetic operator term $-\boldsymbol{\mu} \cdot \boldsymbol{B}(x)$ as $-i\hbar \frac{\partial}{\partial x}$ does in general not commute with a function of x. Therefore, the operator $\boldsymbol{\mu} \cdot \boldsymbol{B}(x)$ does not commute with the Hamiltonian. This means that $\boldsymbol{\mu} \cdot \boldsymbol{B}(x)$, or rather the expectation value $\langle \boldsymbol{\mu} \cdot \boldsymbol{B}(x) \rangle \equiv \int \psi^* \boldsymbol{\mu} \cdot \boldsymbol{B}(x)\psi dV$, is not constant on the interval $l_1 \pm \varepsilon$, i.e. the projection of $\boldsymbol{\mu}$ and $\boldsymbol{S}$ on the given magnetic field $\boldsymbol{B}$ is changing along the approximate path of the deuteron. This is expressed in the Schrödinger representation and in time derivative operator form (see L.D. Landau and E.M. Lifshitz, Quantum Mechanics (Non-relativistic Theory) (Pergamon Press 1977, Third Edition), §9, equation (9.2)) as $\frac{d}{dt}(\boldsymbol{\mu} \cdot \boldsymbol{B}(x)) = \frac{i}{\hbar}[H(\boldsymbol{\mu} \cdot \boldsymbol{B}(x)) - (\boldsymbol{\mu} \cdot \boldsymbol{B}(x))H] \ne 0$.

More precisely, and simplifying by disregarding the electric field accelerations in this discussion, in this case the equation (7) becomes for Hamiltonian eigenstate $\psi$ with eigenvalue $\varepsilon_n$

$$i\hbar \frac{\partial \psi}{\partial t} = H\psi = \left(\frac{1}{2m_D}p_x^2 - \boldsymbol{\mu} \cdot \boldsymbol{B}(x)\right)\psi = \mathcal{E}_n\psi \qquad (41)$$

The equation (41) is not anymore separable of the form $\psi(x,\sigma) = \psi(x)\psi(\sigma)$ as was used in (17), meaning that on the interval $l_1 \pm \varepsilon$ the spin and linear momentum along $x$ are not anymore independent operators acting on different dimensions. If the system is not radiating, i.e. $\frac{\partial H}{\partial t} = 0,$ or equivalently that the system is isolated in the constant in time external electromagnetic fields (L.D. Landau and E.M. Lifshitz, Quantum Mechanics (Non-relativistic Theory) (Pergamon Press 1977, Third Edition), §10, p. 27-), only the total Hamiltonian $H = \frac{1}{2m_D}p_x^2 - \boldsymbol{\mu} \cdot \boldsymbol{B}(x)$ is conserved, which is expressed as $\frac{dH}{dt} = 0,$ and transitions of projections of $\boldsymbol{\mu}$ on $B$ within the same energy level $\varepsilon_n$ will lead to corresponding transitions or changes in linear momentum $p_x$. As a consequence, deuterons with different spins will have different momenta. This condition on transition between spin and linear momenta for the same energy level $\varepsilon_n$ is written as

$$\frac{dH}{dt} = 0 = \frac{d}{dt}\left(\frac{1}{2m_D}p_x^2 - \boldsymbol{\mu} \cdot \boldsymbol{B}(x)\right) \quad \text{or} \qquad (42a)$$

$$\frac{d}{dt}\left(\frac{1}{2m_D}p_x^2\right) = \frac{d}{dt}(\boldsymbol{\mu} \cdot \boldsymbol{B}(x)) \qquad (42b)$$

The deuteron leaving the region $l_1 \pm \varepsilon$ with $\boldsymbol{B} = \boldsymbol{B}(x)$ and entering $x \le l_1 \pm \varepsilon$ from the right in Figure 6 where $\boldsymbol{B}$ = *constant,* the term $\boldsymbol{\mu} \cdot \boldsymbol{B}$ again commutes with the Hamiltonian resulting in that the terms $\frac{1}{2m_D}p_x^2$ and $\boldsymbol{\mu} \cdot \boldsymbol{B}$ are again separately conserved and the transitions between $\frac{1}{2m_D}p_x^2$ and $\boldsymbol{\mu} \cdot \boldsymbol{B}$ within the same $\varepsilon_n$ cease. The deuterons in this way freeze into different eigenvalues of linear momenta $p_x$ depending on the spin projection $S_x = \pm 1,0$. The kinetic energy difference $\Delta\varepsilon_k$ between each level of different spin projections follows directly from (11) and is $= +0.857 \cdot B_x$ n.m.T, with the state $S_x = +1$ as the most rapidly moving deuteron. This corresponds from (14) to a difference in the maximum distance $\Delta x$ reached along $x$ from $qE_1\Delta x = 0.857 \cdot B_x$ n.m.T given by

$$\Delta x = \frac{B_x}{E_1}q^{-1}0.857 \quad \text{n.m.T.} \qquad (43)$$

With the polarity of $\boldsymbol{B}$ chosen as in Figure 6, we wish for the deuterons not participating for example in the P#N+N#P, i.e. the spins $S_x = -1,0$, to peel off the deuteron stream before reaching the fusion region $|\Delta x| < 10^{-14}m$ as given by (33), while $S_x = +1$ is to reach this region. From this we obtain a relation between the fields $\boldsymbol{E}$ and $\boldsymbol{B}$ given by the conditions

$$\Delta x > 10^{-14}m \qquad (44a)$$

$$\frac{B_x}{E_1} > \frac{q}{0.857} \cdot 10^{-14}m \cdot (n.m.)^{-1} \; . \qquad (44b)$$

In fact, as (33) is a conservative estimate described by for example the Yukawa potential (29) and which includes the effect an average electromagnetic repulsion for unprepared dynamical or quantum states. It is therefore reasonable to assume that when correct dynamical or quantum states preparations are executed the conditions (33) and (44b) instead become

$$r_{tot} \gg 10^{-14} m \qquad\qquad (45a)$$

$$\frac{B_x}{E_1} \gg \frac{q}{0.857} \cdot 10^{-14} m \cdot (n.m.)^{-1} \qquad\qquad (45b)$$

The *implicit* Spin Filter as described in the above way arises from quantum mechanical effects. For a more exact treatment of transitions along the x-axis, the dynamics and the quantization in the (y,z)-plane should be taken into consideration.

As already mentioned above, this embodiment can be further improved by stimulating such transitions toward $S_x$ = +1 through a standard quantum mechanical or QFT mechanism of stimulated emission by applying electromagnetic radiation at resonance frequencies. These resonance frequencies are defined by the energies given in (11) and by the relation $\Delta\varepsilon = \hbar\omega$, for frequency $\omega$ of the resonant electromagnetic radiation for stimulated transitions.

With regard to Fusion Products, in traditional thermonuclear fusion where the kinetic energy is used to overcome the coulomb barrier by colliding deuterons, the excited unstable energy state of ${}^{4}_{0}He$ with non-zero angular momentum excess energy above nucleus ground state, besides the mass difference in the fusion of 24 *MeV,* is symbolically written with asterisk as

$$D + D \rightarrow {}^{4}_{0}He^{*} \qquad\qquad (46)$$

Experiments have shown the following decay paths for this non-zero angular momentum ${}^{4}_{0}He$ excitation and with branching ratios given by

$$ {}^{4}_{0}He^{*} \rightarrow n + {}^{3}_{0}He + 3.3\ MeV \qquad\qquad ratio = 50\% \qquad\qquad (47a)$$

$$ {}^{4}_{0}He^{*} \rightarrow p + {}^{3}_{0}H + 4.0\ MeV \qquad\qquad ratio = 50\% \qquad\qquad (47b)$$

$$ {}^{4}_{0}He^{*} \rightarrow {}^{4}_{0}He + \gamma\ (23.8\ MeV) \qquad\qquad ratio = 10^{-6} \qquad\qquad (47c)$$

In this embodiment of Cold Fusion however, for exact dynamical or quantum state preparations in classical mechanics terms $v_x$ = 0 at $x$ = 0 as in (27a), the starting point is not the general (46), as the general ${}^{4}_{0}He^{*}$ represents for example in a shell model a non-zero angular momentum, while exact dynamical or quantum state preparation with cancelling deuteron spins must generate a spherically symmetric zero angular momentum $S$ = 0 stationary or quasi-stationary solution from conservation of angular momentum. The Cold Fusion starting point is only the two deuteron and helium nucleus ground state mass difference 23.8 *MeV* with kinetic energy $\varepsilon_{kin}$ = 0 at $x$ = 0. Therefore, instead of (46), the Cold Fusion starting point and the only channel a short-cut from L.H.S. of (46) to R.H.S. of (47c) and is

$$D + D \rightarrow {}^{4}_{0}He + 23.8\ MeV \qquad\qquad (48)$$

In conclusion, the Cold Fusion is cleaner than the thermonuclear fusion in the sense that the radioactivity from the neutrons in channel (47a) and the tritium in channel (47b) disappear in this Cold Fusion embodiment, subject to exact dynamical or quantum state preparations. Only the $\frac{1}{2} \, 24 \, MeV$ $\gamma$-radiation intended for the Accumulator remains. We call channels of the form (47c) Cold Fusion Channels.

The branching ratio of $10^{-6}$ in (47c) gives an estimate of the order of magnitude of the probability of accidentally obtaining conditions for Cold Fusion for ionized deuterium without applying the method of dynamical or quantum state preparations.

It may be noted that for dipole transitions, general quantum mechanical selection rules prohibit the Cold Fusion Channel type of $S = 0 \to S = 0$ transitions. This forbidden dipole transition gives information on the two $\gamma$-quanta by considering time reversals. As $S = 0$ states imply time reversal symmetry, both before and after executing a Cold Fusion Channel, we can eliminate the electric dipole by phase shifting the electric fields of the two $\gamma$-quanta at $x = 0$ relative to each other by phase $\pi$. But phase shifting $\pi$ is equivalent to a time reversal. Therefore, the two $\gamma$-quanta are time reversed copies of each other, which eliminates the electric dipole as well as maintains time reversal symmetry. The $S = 0 \to S = 0$ transition is not an electric dipole transition in this system sense.

With regard to transitions, we do not *a priori* exclude the theoretical possibility of $S = 0 \to S = 0$ transitions in the sense of scalar field transitions. Such time-dependent scalar fields can here be interpreted as spherically symmetric mass-energy density oscillations where the emitted free spherically symmetric scalar fields propagate according to the Klein-Gordon-Higgs field equations (3). One such interaction model is provided by the scalar meson equation (16b), where in this case the R.H.S. generator in (16b) is the time dependent baryon density. For this type of dynamics, we need a short range repulsive positive potential to complement the long distance attractive negative potential in the static and large central mass limit in the form of Yukawa potential (29). Such a repulsive term $V(r) = +\frac{g_v^2}{4\pi c^2}\frac{e^{-m_v r}}{r}$ is provided by equation (16a) in this limit (see John Dirk Walecka, Theoretical Nuclear and Subnuclear Physics (Imperial Collage Press 2013), Section 14.1, equation (14.4)) resulting in $V(r) = +\frac{g_v^2}{4\pi c^2}\frac{e^{-m_v r}}{r} - \frac{g_s^2}{4\pi c^2}\frac{e^{-m_s r}}{r}.$ In standard nuclear terminology with iso-spin $T$, the even-even nucleus $^4_0 He$ with S = 0 and $T = 0$ represents a special low-energy Fusion Product configuration.

The above-described Fusion Reactor embodiment may also find application in the form of a nano-reactor or an even smaller quantum reactor. However, for small enough physical components, the Fusion Reactor Equations (14) need to be taken more exact by taking into account the dynamical evolution in the $(y,z)$-plane by including the terms

$\left(-i\hbar\frac{\partial}{\partial y} - \frac{1}{2}\frac{q}{c}B_x z\right)^2$ and $\left(-i\hbar\frac{\partial}{\partial z} + \frac{1}{2}\frac{q}{c}B_x y\right)^2$ in the Hamiltonian in (14). This will result in a quantization of the motion in the (y, z)-plane (see, again, L.D. Landau and E.M. Lifshitz, Quantum Mechanics (Non-relativistic Theory) (Pergamon Press 1977, Third Edition), §112, equations (112.5) and (112.7)).

Furthermore, the approximately continuous eigenvalue spectra of the linear momentum $p_x$ along the x-axis will in general change to discrete spectra and a quantization of the motion also arise along the x-axis. At some point when lowering the electromagnetic field intensities $|\boldsymbol{E}|^2$ and $|\boldsymbol{B}|^2$, a QFT treatment of the electromagnetic fields will be required. For a nano- or quantum-reactor one would also not in the general case be able to compensate for (39) by a fixed rotation. Apart from mainly these considerations, a nano-Fusion Reactor or an even smaller quantum-Fusion Reactor embodiment is the same as a macroscopic Fusion Reactor embodiment.

As already mentioned above, Figure 6 offers an overview of a Fusion Reactor embodiment of the present method of dynamical state preparation for Cold Fusion by electromagnetic field engineering. In the simplest form, this corresponds to engineering of constant and homogenous magnetic and electric fields as expressed by the simplified Fusion Reactor Equations.

Hence, Figure 6 gives an overview of the Fusion Reactor embodiment of the present method, performing dynamical state preparation for Cold Fusion by electromagnetic field engineering. In its simplest form, this corresponds to engineering of constant and homogenous magnetic and electric fields as expressed by the simplified Fusion Reactor Equations. Figure 6 gives an overview of this electromagnetic field engineering, where the objective of this electromagnetic field engineering is achieving the Cold Fusion conditions at $x = 0$. The Fusion Material deuterons are ejected from the Ionization Chamber (1) by the field $\boldsymbol{E}_2$, with the ionization UV radiation indicated by arrows (7). The Monochromator selects the correct deuteron kinetic energy (8). The deuteron stream passes an optional explicit Spin Filter (2) and enters into the Matter Wave Lens (3). An electric field $\boldsymbol{E}_1$ is applied (5), designed to achieve $v(0) = 0$ and correct iso-spin polarization at $x = 0$. The applied magnetic field $\boldsymbol{B}$ splits deuteron energy levels and implements an implicit spin filtering (4). The angles indicate adjustments for Accumulator scattering angles ($\theta_2$) and for the gravitational field ($\theta_1$). The

restriction to constant and homogenous fields is only made for the purpose of illustration - the Active Matter Wave Lensing may in general use homogenous or non-homogenous fields. The Fusion Reactor Core is indicated by simplified white (6). The electromagnetic engineering in this region is designed to secure and maintain the Cold Fusion Conditions at $x$ = 0. The electric and magnetic fields indicated are the resultant fields from all fields engineering both inside and outside of the Fusion Reactor Core. The deuterons that did not undergo fusion, due to spin or iso-spin projection opposite to what is required or due to too small fusion cross section at the given impact energy in the Fusion Reactor core, will be collected again at $Q_1$ and $Q_2$. Constant homogenous magnetic fields are obtained by DC current loops, most frequently by coils, and electric fields by charge distributions, most frequently by capacitors.

**5. Accumulator**

The Accumulator absorbs the energy obtained from the nuclear fusion. In this embodiment, and for the sample channel $D + D \rightarrow {}^4_0He,$ the excess energy is 0.368 $\times$ 10⁻¹¹J. When this excess is split into two $\gamma$ quanta emitted, each quantum carries approximately 1.84 $\times$ 10⁻¹²J or

$$\frac{1.84}{1.60} \times 10^{19-12} = 1.15 \times 10^7 \text{ eV} = 11.5 \text{ MeV.}$$

This embodiment uses water $H_2O$ as the Accumulator bulk collecting the excess fusion energy. In general, the energy absorption at distance $y$ in cm in the Accumulator bulk is determined by the intensity relation $I = I_0 e^{-\mu y}$ for absorption coefficient $\mu = n\sigma$, with $n$ number of $H_2O$ molecules per cm³ and $\sigma$ the absorption cross section for the water molecules in cm². The first order energy transfer to the water is Compton scattering and some degree of pair production or other particle creation process, followed by a second order process such as photo electric effect. With sufficient thick water Accumulator, the fusion excess energy carried by the $\gamma$ radiation will eventually thermalize into the water Accumulator, heating the water.

The gasses generated by the $\gamma$ radiation in the water includes $H_2$ and $O_2$, and are collected from the Accumulator. The water level needs to be maintained by a per se conventional water-regulating regulator.

The Accumulator water temperature is kept at operating temperature and pressure by pumping the water through the secondary water system for cooling. The secondary water system may be a part of the steam turbine system in this embodiment.

The Accumulator depth, total maximal distance $y$ in water, is in this embodiment at least 5 m, such as at least 10 m. This distance can be modified by using various water solutions by affecting the absorption coefficient $\mu$. A simple improvement of a $H_2O$ Accumulator is to add $\gamma$ radiation Absorber Materials, like for example Pb, into the Accumulator and/or onto the Accumulator container material. This will reduce the required physical size of the Accumulator for the same power production. The Absorber Materials required bulk thickness to absorb the $\gamma$ radiation depends both on the atomic number $Z$ and on density $\rho$ of the Absorber Materials, the higher atomic number and density, the better $\gamma$ radiation absorption. The Pb absorption coefficient $\mu$ in $I = I_0 e^{-\mu y}$ is approximately 1/$cm$, meaning that 1 cm of Pb will absorb a factor of 1 - $e^{-1} \approx$ 63% and 5 cm of Pb will absorb 99% of the radiation energy. The values for other Absorber Materials are estimated by comparing the densities and the atomic numbers with Pb, and by making a first approximation of $\mu(\rho,Z)$ as a linear approximation separately in the density $\rho$ and in the atomic number $Z$ variables. The composition of Absorber Materials combines good thermal conductivity with high atomic number $Z$ and high density $\rho$. These conditions are satisfied by metals and for this reason metals are normally used. The absorption coefficient values for various Absorber Materials are obtained from standard tables.

**6. Accumulator** - **Upgrading of Nuclear Fission Plant to Nuclear Fusion Plant**

This section is primarily relevant for larger structures than a nano-Fusion Reactor or a quantum-Fusion Reactor. Figure 7 illustrates a standard nuclear fission plant. In this particular example below, the moderator is heavy water $D_2O$ which defines a CANDU reactor.

In Figure 7, a nuclear fission reactor is illustrated, contained in a reinforced concrete building. Figure 7 is a schematic diagram of a per se conventional CANDU reactor without fuelling robots. In Figure 7:1 Fuel bundle. 2 Calandria reactor core. 3 Control/adjuster rods. 4 $D_2O$ pressure reservoir. 5 Steam generator. 6 $H_2O$ pump. 7 $D_2O$ pump. 8 $D_2O$ neutron moderator. 9 Pressure tube. 10 Steam to steam turbine. 11 Cold water return from steam turbine. The nuclear fission reactor may be an existing nuclear fission reactor, which is retrofitted for Cold Fusion operation according to the present invention, by removing the fission reactor core and replacing it for a Fusion Reactor etc. of the type described herein.

In this embodiment of the method according to the present invention, which is for a first-generation fusion power plant, the moderator and nuclear fission fuel of the fission reactor (items 1, 2, 3 and 8 in Figure 7) are simply replaced for the Accumulator and a corresponding Accumulator primary $H_2O$ light water loop instead of a $D_2O$ loop according to the invention, and maintains other infrastructure such as the secondary $H_2O$ light water loop, the steam turbine systems etc.

### 7. Accumulator - Next Generation power plants

In first generation fusion power plants, existing industrial infrastructure can be used to a large extent, in order to minimize implementation time and cost. However, for a next generation fusion power plants, such consideration may not be desired or needed, in particular when the industrial structure has changed. For example, it is foreseen that the input material, by-products and Fusion Material may be different than as in the above-described examples. Furthermore, the Accumulator need not be water, instead it may be any solution, any gas or any solid compound. Also, the Accumulator need not produce heat, it may instead produce electricity directly, for example through high-energy photo cells. These given examples are not exhaustive.

The method of dynamical state preparation to achieve Cold Fusion however remains the same.

### 8. Power Control

The Power Control in this embodiment controls the power production rate, which is linear to the heat transferred to the Accumulator. In this particular embodiment, this may imply control of at least one or several of the following:

- A $D_2O$ injection rate into the Material Separator
- A DC current for the electrolysis in the Material Separator
- A $D_2$ injection rate into the Ionization Chamber
- An intensity of the ionization UV radiation in the Ionization Chamber
- A field strength **E** determining or affecting the extraction rate of the deuteron Fusion Material from the Ionization Chamber
- A size and/or geometry of a physical opening between the Ionization Chamber and the Fusion Reactor determining or affecting the extraction rate of the deuteron Fusion Material from the Ionization Chamber
- A current generating magnetic field **B,** and/or **B** itself, determining the transition rate to correct dynamical state preparation for achieving Cold Fusion
- A rate of collecting unfused material
- A physical size and/or geometry of the exposure of the Accumulator to the Fusion Reactor core
- A pump speed of transporting the heated water of primary water system 1 through secondary water system 2.

### Fusion Reactor-Generalizations

As mentioned above, the present invention is not only applicable to the case of Cold Fusion of deuterium as Fusion Material. In the following, we will describe how instead use can be made of tritium as the Fusion Material, and in particular $_0^3H$ triton.

In the tritium case, the input material can be of the same chemical compositions as for deuterium. The fusing nuclei are contained in molecules or atoms, and in liquid, solid or gas form. The processes that produce the Fusion Material depend on the selected Input Material, using the general principles outlined above.

The Material Separator process may also be the same as for the deuterium case. An additional hydrogen isotope separation may be needed if deuterium and tritium are mixed.

In terms of the material ionization chamber, the ionization process of tritium may be identical to the deuterium case, with the difference that the ionization radiation frequency $\omega$ is adapted to the ionization energy $\varepsilon = \hbar\omega$ for tritium. The deuterium and tritium ionization energies are close.

Moreover, the Fusion Reactor using tritium nuclei is identical to the deuteron case. All equations (7) - (45) are still valid with the following adjustments:

- The deuteron mass $m_D$ is replaced by the mass of the tritium nucleus $m_T$.

- The deuteron spin $S$ = 1 and the deuteron magnetic moment $\mu_D$ are replaced by the spin $S = \frac{1}{2}$ and magnetic

moment $\mu_T$ approximately given by (9a) for the triton. This means that the deuteron and triton spins are opposite and therefore implicit Spin Filtering is opposite when using the general principles described above, meaning that if +***B*** gives highest kinetic energy for the deuteron, then -***B*** gives the highest kinetic energy for the triton. At instances where $\mu$ is not indexed, such as in equations (14), the value of $\mu$ for the deuteron is still replaced by the value $\mu$ for the triton.

- The $2 \times 2$ Pauli spin matrix for the triton is given in equation (10a) and therefore only two energy levels split by the magnetic field exist, and with a greater energy difference corresponding to the equations (11) due to the deuteron $\mu_D$ compared to the triton $\mu_T$.
- The Cold Fusion with nuclei different from deuterons results in processes different from processes (46) - (48).

From the above points follows that the number of unwanted spin projections to be filtered out by implicit or explicit Spin Filters decrease for the triton spin $S = \frac{1}{2}$, and therefore only one unwanted triton spin component needs be removed. Figure 5 and Figure 6 still apply with the deuterons replaced by the tritons. The Pauli exclusion principle repulsion at close distance for the $S = \frac{1}{2}$ triton particles is removed by the use of anti-parallel spins when fusing tritons.

The Accumulator for Cold Fusion of tritons is identical to the Accumulator in the deuteron fusion case, with the difference that the $\gamma$-radiation and other energies are lower and therefore smaller size Accumulators and thinner Absorber Materials can be used. The highest energy for the triton energy production is in the $D + {}^3_0H \rightarrow {}^4_0He + n$ process (with $S \neq 0$) which generates 17.6 *MeV* and the ${}^3_0H + {}^3_0H \rightarrow {}^4_0He + 2n$ process (with $S = 0$) generates approximately 50% of the pure deuteron fusion energy of 23.8 *MeV*.

Finally, the Fusion Reactor Power Control may be identical using the triton as for the deuteron case.

**Fusion Reactor Embodiments** - **Fusion Material Container Version**

This section describes a different embodiment in the class of Fusion Reactor embodiments. In this embodiment, the Transport of the Fusion Material to the Fusion Reactor Core where the Cold Fusion occurs is performed on neutral atoms or molecules. This is different from the Fusion Reactor application described above, in which electrically charged particles are transported to the Fusion Reactor Core by the use of electric fields. A particular version of the electrically neutral Fusion Material Transport will be described hereinbelow, where the Fusion Material in the form of gas, liquid or solid is transported mechanically or manually in containers to the Fusion Reactor Core. For instance, the neutral Fusion Material atoms or molecules may be transported into the Fusion Reactor Core using pipes.

The General Specification for the Fusion Reactor as described above applies also to this embodiment. In particular power production intervals, Power Control, temperature intervals, physical sizes and volumes, magnetic field strengths and Fusion Material particle number densities apply. The generalization to tritium also applies for this Fusion Material Container version.

The input material can be the same chemical compositions as for the first Fusion Reactor embodiment described above.

The Material Separator process may be the same as for the first Fusion Reactor embodiment above. The optimal Fusion Material in molecular state to use is the parahydrogen spin isomer state.

Parahydrogen here refers to a $D_2$ molecule. For this embodiment, mainly the *D* - *D* pair in a $D_2$ fuse without the ionization radiation option. In particular, pairs of the form $D - {}^1_1H$ or $D - {}^1_0H$ do not fuse unless ionization radiation is applied.

In this parahydrogen state, the nuclear two spins are already anti-parallel and no spin filtering is required on such a pairs of nuclei to form anti-parallel pair. At STP and for the protium case, approximately 25% is parahydrogen and 75% is ortohydrogen with the spins parallel. The fraction of parahydrogen increases with decreasing temperature. In the interval 33 - 20 K in the protium case, the parahydrogen share reaches 99.79% while ortohydrogen is reduced to 0.21%. The Fusion material deuteron-deuteron distance in the $H_2$ is at this point approximately 70 pm = 0.7Å in the protium case. $D_2$ properties are similar, but due to higher deuteron mass than the protium nuclei, all parameters acting in favor of Cold Fusion improve for deuterium.

The ionization of the Fusion Material is an option in this Fusion Material container embodiment that can be added as the ionization is not required for Cold Fusion. If this option is used, then the Ionization Chamber corresponds fully to the Fusion Reactor chamber. The ionization is performed after the Fusion Material has been Transported into the Fusion Reactor Core.

However, the Fusion Reactor in the Fusion Material container version includes optionally the Ionization Chamber function. The ionization is best applied after the spin control magnetic field is applied, but may also be performed before applying a magnetic field.

The Cold Fusion conditions are in this case achieved for the particular collection of pairs of deuterons where the orbital angular momentum $L = 0$ around the axis where the magnetic field $B$ is applied. A non-zero probability of Cold Fusion of deuterons in the form of $S = 0 \rightarrow S = 0$ transitions through quantum tunnelling will occur at deuteron-deuteron distances of the order of 0.7Å. This quantum tunneling process is described in detail for 4Å in the Battery and Fuel Cell application described below.

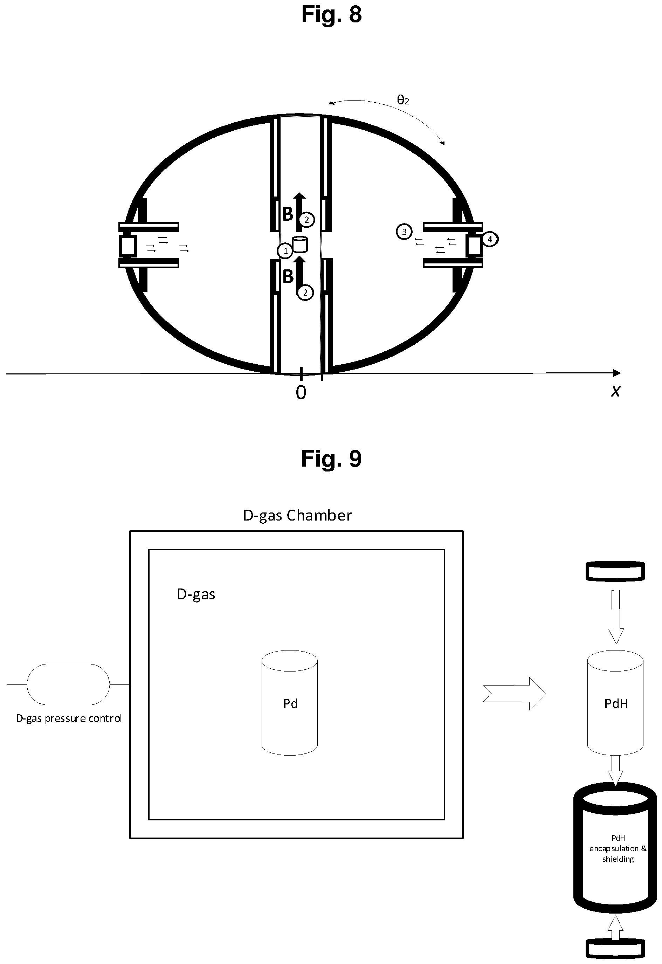

With regard to the Fusion Reactor Equations, the electric field $E$, whose main purpose is to transport electrically charged Fusion Material particles, is not used in the Fusion Material container embodiment presently described. Figure 8 below also illustrates an example where the magnetic field $B$ is applied differently to that of Figure 6, which means the coordinate dependences of the new Fusion Reactor equations for this Fusion Material container version are different.

In Figure 8, the container holding the Fusion Material is indicated by 1, and this is optimally parahydrogen form where the deuteron spins point in opposite directions in a $D_2$ molecule. The $D_2$ phase is any of gas, liquid or solid. The applied magnetic field is indicated by 2. An optional UV ionization radiating is indicated by 3, and is originating from the UV lamp implementation 4. An Accumulator geometry change is indicated as in Figure 6 by $\theta_2$.

Apart from the above described differences, the Fusion Reactor embodiment in the Fusion Material container version is equivalent to the Fusion Reactor embodiment described above.

The Accumulator may be the same for the two Fusion Reactor embodiments described above.

The Fusion Reactor Power Control may also the same as in the Fusion Reactor embodiment described above and illustrated by the example given in Figure 6, with the exception that controlling the field strength of $E$ becomes redundant.

Figure 8 illustrates the Fusion Reactor container version. The container holding the Fusion Material is indicated by 1, and this may optimally be parahydrogen form where the deuteron spins point in opposite directions in a $D_2$ molecule. The $D_2$ phase is any of gas, liquid or solid. The applied magnetic field is indicated by 2. An optional UV ionization radiation is indicated by 3, and is originating from the UV lamp implementation 4. An Accumulator geometry change is indicated as in Figure 6 by $\theta_2$.

**Detailed specifications** - **Battery and Fuel Cell Embodiments**

Based on the same general considerations as described above for the Fusion Reactor embodiments of the present invention, in the following a second broad implementation of the invention will be described. These general considerations include specifically, but are not limited to, given intervals for power production, Power Control, operating temperature, magnetic field directions, magnetic field strength, maximum physical dimensions and Fusion Material particle number density. This embodiment is denoted Battery and Fuel Cell embodiments.

Thus, this section is concerned with a more detailed specification of the Battery and Fuel Cell embodiments. The definitions used in this text are in particular:

Battery: A solid state encapsulated energy source that is Loaded (see below) with a finite discrete amount of Fusion Material. The materials in the interior to the external encapsulation need not be of solid form, but may be any combination of solid, liquid and gas phases of any elements or any combination of chemical elements. The illustration of the Battery and Fuel Cell applications is made below by simplifying to a solid simple palladium (Pd) crystal with only one Loaded deuterium Fusion Material. Fusion Material in this section refers to either the nuclei, ions or neutral atoms.

Fuel Cell: A solid state encapsulated energy source as defined for a Battery but with a continuous externally provided supply, but not an infinite such supply, of additional Fusion Material that has not been initially Loaded into a solid-state encapsulated energy source. Here, a Fuel Cell, in contrast to a conventional fuel cell, does not convert chemical energy stored in dynamical electron states to other forms of energy (typically electrical energy). Instead, a Fuel Cell in the present context converts nuclear energy to other forms of energy, such as electric energy.

Loading: Adding Fusion Material into a solid-state encapsulated energy source. The term Loading of a Battery is used rather than *charging* of a Battery as the energy source is not stored in the form of an electromagnetic charge difference within the Battery, but instead the energy is stored in the form of Fusion Material.

In the following description, deuterons will be selected as the Fusion Material, for illustrating the Battery and Fuel Cell embodiments using Cold Fusion in order to obtain a parallel treatment of the Battery and Fuel Cell embodiment with the Fusion Reactor embodiments described above. This parallel treatment of a Battery and Fuel Cell embodiment with a Fusion Reactor embodiment is made in order to bring clarity into the differences between these classes of embodiments. As a consequence of selecting deuterium as the Fusion Materials, materials absorbing deuterium will also be chosen for the illustration herein of Battery and Fuel Cell embodiments. In order to further simplify the presentation, a simple metal is chosen. More specifically, solid state palladium Pd will be chosen, in particular as much data is available concerning palladium hydride PdH. But even for a single chemical element Battery and Fuel Cell restriction, other hydrogen absorbers like for example titanium Ti could be selected. The Pd selected herein is any stable isotope of Pd. The reason why Pd is chosen once the deuteron is chosen as Fusion Material is that individual hydrogen atoms diffuse easily through Pd, even in the form of $H_2$ gas outside the lattice. Diffusion depends on chemical properties between atoms carried mainly by valence electron state properties, and therefore different atomic isotopes have approximately identical chemical properties. As a result, as hydrogen atoms easily diffuse through Pd, then the hydrogen isotope deuterium will also easily diffuse through Pd.

As mentioned above, the underlying physical principles of the Battery and Fuel Cell embodiments are the same as for the Fusion Reactor embodiments. The difference in the Battery and Fuel Cell embodiments is that the Fusion Material propagate in a matter environment rather than in an almost vacuum, as described for the simplest form of a Fusion Reactor embodiment as described above. The Cold Fusion conditions (27a), (27b) and (33) subject to the Heisenberg constraints (34) are the same, but the Fusion Reactor Equations (14) arising from the dynamical description (7), or the more complete Fusion Reactor Equations (40), are replaced with Battery and Fuel Cell Equations that suitably describe propagation of deuterons in media of said type. One way to address this propagation in a medium is to the replace deuteron mass with an effective mass for the particular medium under consideration. Apart from deuteron-lattice core atom interactions and deuteron-deuteron interactions, it is also necessary to consider the deuteron interaction with the electron bands, including with the conduction bands, if conductors or semiconductors are used.

We rewrite the Cold Fusion conditions (27), (33) and constraints (34) in a form that is suitable for the Battery and Fuel Cell embodiments restricted to solid state embodiments, in particular if deuterons with index $D$ are chosen as Fusion Material, as

$$\langle v_D \rangle = \frac{1}{M_D} \langle p_D \rangle \equiv \int \psi^* p_D \psi dV = 0 \text{ at lattice atomic site } r = R_b \qquad (49a)$$

$$S = \pm 1 \text{ relative to a magnetic field } B \text{ at fusion site in a neighborhood } R_b \text{ or } R_{b+1} \quad (49b)$$

$$r_{tot} = 10 \text{ fm} = 10^{-14} m \qquad (49c)$$

$$\Delta p_i \Delta x^i = m_D \Delta v_i \Delta x^i \geq \frac{1}{2}\hbar, \text{ the Heisenberg constraint} \qquad (49d)$$

$$P\#N + N\#P \text{ or } P\#N + P\#N \text{ iso-spin polarizations.} \qquad (49e)$$

Cold Fusion by this embodiment of the present invention, performed in a solid-state embodiment, does not depend on attempting to compress a lattice for nuclear forces to overcome electromagnetic repulsions. Rather, this embodiment depends on elimination of the electromagnetic repulsion of the Fusion Material by spin alignments and iso-spin polarizations.

**1. Input Material**

As an illustration of the class of Battery and Fuel Cell embodiments, deuterium oxide $D_2O$ is selected as input material to the process, just as in the illustration of the Fusion Reactor class of embodiments above. The considerations with regard to the input material are principally the same for the Battery and Fuel Cell embodiments as for the Fusion Reactor embodiments.

## 2. Material Separator

The separation of the Input Material for the Battery and Fuel Cell embodiments can be achieved in the same way as for the Fusion Reactor embodiments. For the purpose of illustrating the Battery and Fuel Cell embodiments, a standard electrolysis into $D$ and $O$ atoms, ions or gas can be assumed. The Fusion Material, with upper indices for typographical reasons representing ionization in this section, is here $D$, $D^+$, $D_2$ or $D_2^+$, and the Fusion Material needs not be injected into an Ionization Chamber as in the Fusion Reactor case. Instead, a component in the bulk material in the Battery unit is chosen below for the purpose of illustration of the Battery and Fuel Cell embodiment such that Loading of the Battery Unit can be achieved through Fusion Material diffusion. However, the general method dynamical state preparations for achieving Cold Fusion does not depend on Battery loading by diffusion.

## 3. Battery Loader

In this illustration of the present embodiment, the method of Loading of the selected Fusion Material $D$, $D^+$, $D_2$ or $D_2^+$ into the Battery has been chosen to be the method of diffusion. Therefore, a combination of Battery materials must be selected in such a way that it allows for deuterium diffusion. Again, for the purpose of illustration, a simple palladium Pd metal will be chosen below. The Pd Battery is Loaded with deuterium by any diffusion process. For example, surface vacancies promote dissociation of $H_2$ or $D_2$ molecules to atoms. This embodiment does not depend on the degree of Loading as long as the details of applying the method are adjusted accordingly.

It is preferred that the metal crystal is loaded with Fusion Material until substantial or complete saturation, or even more than full saturation. In the example of Palladium, palladium hydride PdH will result for a degree of loading of one Pd atom per one hydrogen isotope atom.

The actual capacity at re-Loading of a used Battery will depend on the technologies used to remove the Fusion Products from the Pd lattice once the deuterons for Cold Fusion are exhausted. For clean $_2^4He$ Fusion Products, this technology is a matter of removing the helium in order to reuse the Pd. This may for example be achieved by diffusion through re-inserting the used Battery into the Battery Loader again, and which is assumed to have a low $_2^4He$ density compared to the Pd lattice, and using methods to separate the $D_2$ gas from the $_2^4He$ gas (assuming gas temperatures) in the Battery Loader. The most basic form to reuse the Pd is melting the Pd metal at some point, in particular if simple re-Loading is not efficient.

Figure 9 illustrates the gas chamber principles according to the present invention as specifically applied to the embodiment of Pd battery loading into PdH. The $D_2$ gas pressure depends on the degree of loading x in PdH$_x$. An alternative to placing the Pd in a gas chamber is to place the Pd in liquid $D_2O$ and perform electrolysis directly with the Pd as the electrolysis cathode. This type of Battery Loading is similar to the 1989 Martin Fleischmann and Stanley Pons "cold fusion" experimental set-up (see Fleischmann, Martin; Pons, Stanley (1989), "Electrochemically induced nuclear fusion of deuterium", Journal of Electroanalytical Chemistry,261 (2A): 301-308). In the context of the present method, the Fleischmann and Pons set-up is not Cold Fusion energy production, but merely a Battery Loading.

## 4. Battery Unit

In the sections below, the unit electromagnetic charge is denoted by e instead of $q$. In order to give one example of the Battery embodiment according to the present invention, we choose a simple palladium metal Pd as a solid-state encapsulation of deuterium representing the Battery unit. Typically, but not elaborated in detail in the below-described illustration, further external insulator combinations may be added to insulate the solid-state encapsulation electrically and electromagnetically; to impart temperature control and maintaining the Loaded Fusion Material within the Battery unit; to eliminate unwanted radiation or Fusion Products resulting from the Cold Fusion energy production; or any combination of these functions. The diffusion property of H into Pd is for example expressed by H and Pd having identical electronegativities of 2.20 on Pauling scale. Another aspect is that the Pd lattice constant $\alpha$ = 3.86 · $10^{-10}$ $m$, while the Pd atomic radius measured as the covalent radius is $r_{Pd}$ = 1.4 · $10^{-10}m$. As the hydrogen covalent radius is only $r_H$ = 0.25 · $10^{-10}m$, the hydrogen "fits" into the Pd lattice, subject to electron wave function perturbations. Covalent radii vary somewhat depending on the reference and slightly different values of $r_{pd}$ = 1.28 Å and $r_H$ = 0.32 Å will also be used below (1 Å = $10^{-10}m$).

Experimental results and theoretical Density Functional Theory numerical calculations using standard solid-state design software show that in the ground state and in a first approximation the Pd and H are joined by covalent bonds in the lattice, and that the electronic structure modification in the PdH compared to Pd is that a new energy band arises by overlapping the Pd 4d state with the H 1s state (Abdasalem Houari, Samir F. Matar and Volker Eyert, Abstract: https://arxiv.org/abs/1411.0542 , PDF: https://arxiv.org/pdf/1411.0542.pdf). $PdH_x$ for the degree of Loading of $D$ or $D^+$ per Pd atom or saturation x, $PdH_x$ with x < 0.57 is paramagnetic, while for x > 0.57 it is diamagnetic. $PdH_x$ for x < 0.5 is a conductor, while for x > 0.5 it is a semiconductor. The Pd-H covalent bond length (for the rocksalt structure) is 2.03 Å, which is much more than the sum 1.28Å + 0.32Å = 1.60Å for the Pd and H covalent radius respectively, and the covalent bond can therefore be regarded as weak metastable that easily decomposes (see Marvin L. Cohen and Steven G. Louie, Fundamentals of Condensed Matter Physics (Cambridge University Press 2016), Section 1.6, equations (1.2) and (1.4)).

The Pd crystal itself is an FCC (face-centered cubic) structure with lattice constant $\alpha$ = 3.86 Å. This lattice constant corresponds to the $\alpha$-phase $PdH_x$ with degree of hydrogen saturation x < 0.017, while $\alpha$ = 4.05 Å for $\beta$-phase x > 0.58, and in between the phase is an $\alpha$ - $\beta$ mix. The presentation of the Battery and Fuel Cell embodiments herein will focus on palladium hydride $PdH_x$ with x $\approx$ 1, and actually use x = 1, although dihydride $PdH_2$ and $Pd_3H_4$ to a large extent have similar properties and may even be better for certain Battery and Fuel Cell embodiments. However, for reasons of clarity this limitation to PdH reduces the complexity of describing this class of embodiments.

With regard to the attractive nuclear forces, the above choices imply that the deuterium-deuterium nuclear distance in a saturated PdH lattice is approximately $r \equiv \alpha$ = 4.05 · $10^{-10}m$, for r for example in the asymptotic Yukawa potential of equation (29). The attractive Yukawa potential will not induce deuterium-deuterium fusion even if the deuterium atoms in the Pd lattice are approximated as free atoms as various repulsive forces prevent fusion. This embodiment is again based on applying electromagnetic fields in such a way that the repulsive forces are reduced enough for the attractive nuclear forces to take over and ideally only the Cold Fusion Channel is selected. The underlying physical principles are the same as in the Fusion Reactor embodiment, but the ways of applying the electromagnetic fields are different. It is clear that the exact electromagnetic field engineering depends both on the selected Fusion Material, here deuterons for the purpose of illustration, and on the selected solid-state encapsulation, here a simple Pd lattice for the purpose of illustration.

For alignment of iso-spins as indicated in (49e), besides P#N+N#P we could in principle also align the deuteron spins for the N#P + N#P iso-spin polarization as long as the total system transition is S = 0 $\rightarrow$ S = 0 defining the Cold Fusion Channel. If the resulting nuclear state after fusion is an L $\neq$ 0 excited state, such transitions would produce non-clean channels (47a) and (47b), resulting in radioactive waste material.

With regard to general dynamics, for a deuteron propagating in a PdH lattice we assume that non-relativistic approximations are valid, i.e. v $\ll$ c and the reference frame is that of the PdH lattice. The general dynamics of a deuteron propagating in a PdH lattice as compared to deuterons propagating in an almost vacuum Fusion Reactor is that the dynamics of the deuteron, and here in particular the Hamiltonian H, is modified by interactions that can be interpreted as resulting in an effective deuteron mass $m_D^*$ that incorporates the average properties of the environment in which the deuteron moves. The non-relativistic kinetic deuteron energy with the definition p = $\hbar k$ for wavevector **k** is (see Marvin L. Cohen and Steven G. Louie, Fundamentals of Condensed Matter Physics (Cambridge University Press 2016), Section 1.6, equations (1.2) and (1.4)) :

$$E_k(\boldsymbol{k}) = \frac{\boldsymbol{p}^2}{2m_D} = \frac{\hbar^2 \boldsymbol{k}^2}{2m_D} \qquad \text{in vacuum} \tag{50a}$$

$$E_k(\boldsymbol{k}) = \frac{\hbar^2 \boldsymbol{k}^2}{2m_D^*} \equiv \frac{\hbar^2}{2} k_i \left(m_{ij}^*\right)^{-1} k_j \qquad \text{in matter} \tag{50b}$$

In the last equality of (50b), a lattice directional dependent inverse effective mass tensor has been defined as a generalization of a directional invariant effective mass scalar $(m^*)^{-1}$. The curve $E(\boldsymbol{k})$ defines the dispersion curve for the media or lattice transporting the deuterons. Strictly, $m_{ij}^* = m_{ij}^*(R_b + r_b)$, i.e. $m_{ij}^*$ is a function of position, while $m_{ij}^*$ independent of lattice position can be interpreted as an average dynamical property with the environment incorporated into the effective mass when transported over many lattice periods. To indicate when the external environment is incorporated into the effective mass, the term quasiparticle will often be used for such systems. Corrections arising from interactions not included in the effective mass model can be obtained as small effective mass and effective charge quasiparticle renormalizations in analogy with standard electro-weak QFT theory.

The difference in the dynamical description here from usual solid-state physics is that we are here interested in the deuteron or atomic nucleus dynamics and deuteron transport energy bands, in contrast to electron dynamics and electron energy bands. In the PdH ground state, i.e. in the limit $T \to 0$ K, the deuteron or deuterium atom is covalently bonded to the Pd and the PdH lattice is fixed. The dynamics of the deuteron can be regarded as an excitation from the ground state just as an electron in a semiconductor can be excited to a conduction band energy state. However, the deuteron energy bands are not the same as the electron energy bands in the crystal. The dynamical description used below to illustrate the Battery and Fuel Cell class of embodiments is for most part a simplified physical model where the deuterons move in an average field created by all other particles and fields that constitute the PdH lattice system. This single particle dynamical description is generally referred to as a Hartree approximation or a Hartree-Fock approximation if exchange symmetry information, such as anti-symmetry, is included in the wave functions.

In order to illustrate the Battery and Fuel Cell embodiments, as a first step a Hamiltonian will be set up in which the deuterons are approximated as moving in the lattice free from the covalent Pd-H bond and excluding any attractive nuclear forces. As a first step, we also treat the deuterons as point particles with charge +e and introduce corrections to the point particle approximation later. A complete many-particle Hamiltonian for the complete lattice system will for one mol of crystal result in an order of $10^{23}$ coupled non-relativistic Schrödinger equations to solve, one for each particle in the PdH lattice system. The total number of quantum states $N$ arising from variables commuting with the many-particle Hamiltonian for the PdH lattice system is $N = nV \gg 10^{23}$, for density of states $n$ and crystal volume $V$. We now follow standard solid-state physics treatment to reduce the $10^{23}$ coupled Schrödinger equations to uncoupled single-particle equations. We also consider the electron dynamics as divided into rigid core lattice points consisting of the nuclei with corresponding closed shell electrons and consider the valence electrons moving more or less freely in conduction bands. For the deuteron dynamics and from the diffusion property, we also consider the deuterons moving more or less freely relative to the Pd cores in effective deuteron conduction bands in the PdH lattice as already noted above.

As a first step, a Born-Oppenheimer type of approximation is introduced, wherein the lattice core atoms are regarded as fixed and generating fixed potentials $V$ for the electron and deuteron dynamics, after which the total system Hamiltonian $H$ can be expressed in terms of a deuteron Hamiltonian $H_D$, a valence electron Hamiltonian $H_e$, a fixed core lattice Hamiltonian $H_c$, a deuteron-valence electron interaction Hamiltonian $H_{eD}$, and a relativistic correction term $H_R$ where at this stage all effects related to spins are included. By definition:

$$H \equiv H_D + H_e + H_c + H_{eD} + H_R \tag{51}$$

The Born-Oppenheimer approximation for the deuteron-core interaction is motivated by the fact that the Pd core mass $m_C$ is much greater that the deuteron mass $m_D$, i.e. $m_C \gg m_D$, implying that Pd cores move much more slowly than the deuterons. The Born-Oppenheimer type of approximation largely separating the deuteron and electron dynamics from the Pd core dynamics now gives for particle $i$, core atom $n$ at fixed site $R_n$ and the number of valence electrons $Z$ outside the core (see Marvin L. Cohen and Steven G. Louie, Fundamentals of Condensed Matter Physics (Cambridge University Press 2016), Section 2.2, equation (2.2)):

$$H_D = \sum_i \left[ \frac{p_{Di}^2}{2m_D} + \sum_n V_{cn}(r_{Di} - R_{cn}) \right] + \frac{1}{2} \sum_{i \neq j} \frac{e^2}{|r_{Di} - r_{Dj}|} + \{V_{De}(r_D)\} \tag{52a}$$

$$H_e = \sum_i \left[ \frac{p_{ei}^2}{2m_e} + \sum_n V_{cn}(r_{ei} - R_{cn}) \right] + \frac{1}{2} \sum_{i \neq j} \frac{e^2}{|r_{ei} - r_{ej}|} + \left\{ \sum_i \sum_n V_{Dn}(r_{ei} - r_{Dn}) \right\} \tag{52b}$$

$$H_{eD} = -\frac{1}{2} \sum_{i,j} \frac{e^2}{|r_{Di} - r_{ej}|} \tag{52c}$$

$$H_c = \sum_i \frac{p_{ci}^2}{2m_c} + \frac{1}{2} \sum_{i \neq j} \frac{Z_i Z_j e^2}{|R_{ci} - R_{cj}|} + V_{ce}(R_c) + V_{cD}(R_c) \quad . \tag{52d}$$

In (52), $p_x \equiv -i\hbar \frac{\partial}{\partial x}$. Further in (52), two interaction terms $V_{ce}$ and $V_{cD}$ have been introduced representing small average perturbations of the cores from the valence electrons and deuterons respectively. These two terms can be estimated from the ground state of electron and deuteron dynamics after first solving the dynamical equations for these sub-systems. By fixing $R_{cn}$ in (52a) and (52b) to constants removes $R_{cn}$ as dynamical variables in (52a) and (52b), and thereby separating the electron and deuteron dynamics or wave functions from the core dynamics or wave functions. The electron dynamics includes the extra valence electron from the deuterium in the PdH lattice. As $m_D \gg m_e$ we can repeat the Born-Oppenheimer approximation argument and also separate the deuteron and electron dynamics or wave functions. This eliminates (52c) and adds a final term in (52a) and in (52b) respectively, as is indicated by a parenthesis. As a second step, a Hartree mean field approximation is introduced. In this approximation, all deuterons move in a mean field created by all cores, all electrons and all other deuterons. The same approximation is made regarding the valence electron dynamics. This assumption takes each term in the Hamiltonians (52a) and (52b) into terms where each term depends only on a single variable and subsequently the electronic and deuteron wave function become separable by products of independent single particle electron wave functions and single particle deuteron wave functions. The many-particle valence electron and deuteron wave functions have now been reduced to single particle wave functions. As a third step, we assume that the Hartree average field is a perfect and periodic lattice with potential $V(r_D) = (r_D + R_c)$. For the deuterons, this results in the single particle Schrödinger equation for the deuterons of the form

$$H_D \psi_D = \left[ -\frac{\hbar^2}{2m_D} \nabla^2 + V(r_D) \right] \psi_D(r_D) = E \psi_D(r_D) \tag{53}$$

For lattice vector $R_b$, equation (53) have solutions in terms of Bloch functions, which are of the form

$$\psi_D(r_D) = u_{k_D}(r_D) e^{ik_D \cdot r_D} \tag{54a}$$

$$u_{k_D}(r_D) = u_{k_D}(r_D + R_b) \tag{54b}$$

By inserting (54) in (53), the Schrödinger equation (53) for the periodic part of the Bloch functions becomes for $r \equiv (x, y, z)$

$$\left[ \frac{1}{2m_D} \left( -\hbar^2 \nabla^2 - 2i\hbar k \cdot \frac{\partial}{\partial r_D} + \hbar^2 k^2 \right) + V(r_D) \right] u_{n,k_D}(r_D) = E_n(k) u_{n,k_D}(r_D) \tag{55}$$

In (55), a new quantum number $n$ has been added arising from taking an infinite lattice finite and imposing periodic boundary conditions at the lattice end-point (see Marvin L. Cohen and Steven G. Louie, Fundamentals of Condensed Matter Physics (Cambridge University Press 2016), Section 3.2, equation (3.8)). Deuteron band structure including energy band gaps in $E_n(k)$ now arise from the lattice periodicity and symmetry properties for attractive and repulsive potentials qualitatively similar to electronic band structures and band gaps, with the difference that the energy levels are different by the electron mass $m_e$ being replaced by $m_D$ and the charge $-e$ is replaced by $+e$. To illustrate the meaning of such parameter variations, the hydrogen energy levels $E_n = -\frac{m_e e^4}{2(4\pi\epsilon_0)^2 \hbar^2} \frac{1}{n^2}$ can be varied by varying the parameter $m_e$ while keeping the parameter e fixed. The symbols m and e appear from this perspective as parameters in the Schrödinger equation. Furthermore, approximation methods used for electron states can in a similar way be reused for deuteron states. In particular, this includes Density Functional Theory (DFT) with standard software available, as long as this software allows for the variation of the parameters m and e. One difference is however when Pauli exclusion principle information is added, for example through anti-symmetrized wave functions for Slater determinants in a Hartree-Fock treatment, anti-symmetrized electron wave functions are replaced by symmetrized deuteron wave functions. The Pauli exclusion principle information in the anti-symmetric wave function tends to move electrons apart, while the symmetric wave functions tend to bring deuterons closer together and is working on behalf of Cold Fusion. Now, if $E_n(k)$ can

$$E_n(\boldsymbol{k}) = \frac{\hbar^2 k^2}{2m_D^*} \equiv \frac{\hbar^2}{2} k_i \left(m_{ij}^*\right)^{-1} k_j$$

be solved in (55), the effective mass is known by assuming ⟶ as in (50b).

The weak covalent bonding in the PdH can in a first approximation be interpreted as the deuterium atoms already being ionized and the deuterons being located in specific lattice spacings (see Tanaka, T., Keita, M. and Azofeifa, D.E., Phys. Rev. Vol. 24, 4, 1771-1776 (1981)). In this approximation, the deuteron dynamics is described by the Bloch form (55) without the need of adding a covalent bonding potential.

An external magnetic field **H** is now applied on the PdH crystal. PdH at PdH$_x$ at $x$ > 0.57 is diamagnetic (Tanaka, T., Keita, M. and Azofeifa, D.E., Phys. Rev. Vol. 24, 4, 1771-1776 (1981)). The magnetic susceptibility $\chi$ of paramagnetic Pd is +567.4·10$^{-6}$cm$^3$/mol which is decreased by increasing $x$ in PdH$_x$ (again, see Tanaka, T., Keita, M. and Azofeifa, D.E., Phys. Rev. Vol. 24, 4, 1771-1776 (1981)). The magnetic field **B** in the PdH lattice is **B** = **H** + 4$\pi$**M** for magnetization **M**, the latter defined by **M** = $\chi$**H** or more generally $M_i = \chi_{ik}H_k$. In a first approximation, the magnetization is disregarded and **B** = **H.** The applied magnetic field **H** is made strong enough such that spin alignment of the quasi-free deuterons occur just as in the Fusion Reactor embodiment. However, as the deuteron velocity is almost vanishing being quasi-fixed in the PdH lattice, the applied field **H** can in general be much reduced compared to the Fusion Reactor embodiment. In fact, it is just a matter of waiting long enough after applying the magnetic field for deuteron spin alignment with **H** to occur. The signature in +$\boldsymbol{\mu}$ · **B** will not be used below and the term -$\boldsymbol{\mu}$ · **B** is now added to the Hamiltonian in the same way as for the Fusion Reactor Equations (14), and (55) now becomes

$$\left[ \frac{1}{2m_D} \left( -\hbar^2 \nabla^2 - 2i\hbar \boldsymbol{k} \cdot \frac{\partial}{\partial \boldsymbol{r}} + \hbar^2 k^2 \right) + V(r_D) - \boldsymbol{\mu} \cdot \boldsymbol{B} + H_{pB} \right] u_{n,k_D}(r_D) =$$

$$= E_n(\boldsymbol{k}) u_{n,k_D}(r_D) \qquad (56)$$

In (56), the symbol $V(r_D)$ includes the Pd lattice part and the effective electron field part, the functions $u_{n,k_D}(r_D)$ now include spin variables, and a term $H_{pB}$ has been added to include all orbital terms interacting with **B,** in classical terminology additional Lorentz force terms. With spin included, a separation into a product of spin and orbital wave functions will however depend on disregarding any spin-orbit interaction.

We now make the approximation ⟨$v_D$⟩ = 0 and $H_{pB}$ = 0. With **H** applied along a lattice cell vector, deuteron alignments and iso-spin polarizations as indicated in Figure 2 will now occur with an approximate probability at STP of 10%. For these alignments, the electromagnetic deuteron-deuteron repulsion disappears and only an attractive Yukawa potential (29) remains, disregarding attractive deuteron-deuteron exchange interactions. Electrons will accumulate in the lattice around positive charges $Q$ > 0 while the $Q$ = 0 tube in Figure 2 will be free of electrons in this free deuteron approximation. This also reduces the probability of N#P+N#P fusion in favour of P#N+N#P fusion, just as in the Fusion Reactor case, as electrons would accumulate in the tube around the proton introducing electromagnetic interactions in that region. Thus, classically only attractive deuteron-deuteron forces exist and a non-zero probability of Cold Fusion exist for the Cold Fusion Channel (47c) with null surface topology P#N+N#P.

Furthermore, Landau quantization of deuteron or electron orbits in the plane with normal parallel to **H** will further assist in keeping the $Q$ = 0 tube clean from electromagnetic charges. The space-time orbits of the electrons will in general depend on the band structure and crystal directions. It is therefore possible to optimize the direction of **H** with respect to crystal directions in order to keep the $Q$ = 0 tube clean. The optimum directions are found by simply varying the angle between the different crystal directions and the magnetic field **H,** and measure at what angles the probability of Cold Fusion reaches its maximum.

If a weak attractive covalent bond potential $V_{Pd-D}$ working against fusion is added to the Hamiltonian together with the attractive Yukawa potential (29) with deuteron separation $\Delta r_D$, equation (56) for the perfectly aligned deuterons becomes

$$\left[ \frac{1}{2m_D} \left( -\hbar^2 \nabla^2 - 2i\hbar \boldsymbol{k} \cdot \frac{\partial}{\partial \boldsymbol{r}} + \hbar^2 k^2 \right) + V(r_D) - \mu \cdot B - V_{Pd-D} - \frac{g_s^2}{4\pi c^2} \frac{e^{-m_s \Delta r_D}}{\Delta r_D} \right] u_{n,k_D}(r_D)$$

$$= E_n(\boldsymbol{k}) u_{n,k_D}(r_D) \qquad (57)$$

As $max|V_{Pd-D}| \ll max\left|\frac{g_s^2}{4\pi c^2} \frac{e^{-m_s \Delta r_D}}{\Delta r_D}\right|$, $max|V(r_D)| \ll max\left|\frac{g_s^2}{4\pi c^2} \frac{e^{-m_s \Delta r_D}}{\Delta r_D}\right|$ when varying the deuteron separation, and for the total repulsive barrier $max|V(r_D)| \ll \infty$, then quantum mechanically there will be a non-zero tunnelling from the smaller potential well $-V_{Pd-D}$ to the much deeper potential well $V = -\frac{g_s^2}{4\pi c^2}\frac{e^{-m_S \Delta r_D}}{\Delta r_D}$ where the minima are separated by a distance order of lattice constant $a$. Quantum mechanically, Cold Fusion occurs at non-zero probability by quantum tunnelling even if the deuterons are considered as covalently bonded with Pd. The nuclear deuteron-deuteron fusion well is in the order of 23.8 *MeV* deep, while from experimental results all other wells and barriers are in the *meV* - 100 *keV* range. This range includes Coulomb barrier penetration in the thermonuclear fusion case without any dynamical state preparations. The deuteron falls into new lower stationary states in the nuclear fusion well by losing energy through electromagnetic and phonon field excitations, where the latter translates to heat in the PdH lattice. Other quantum field excitations may also occur in this process. In the event that produced $\gamma$-radiation propagate to the outside of the PdH lattice, the spectrum of such radiation can be expected to be complex, even if the possible scalar field transitions as discussed at the end of the Fusion Reactor section are excluded. For the $\gamma$-radiation, atomic X-ray terms as well as radiationless atomic transitions (Auger effect) need also be taken into account. The $\gamma$-spectrum is not the same as a single or first order Compton scattering in vacuum.

With regard to the Cold Fusion conditions (49), in a first approximation, and with the Battery unit in a thermodynamic equilibrium state, the deuterons are considered as fixed in the Pd + D lattice. In this sense (49a) is approximately and automatically satisfied, subject only to small accelerations and velocities required to move the deuterons to a fusion point between deuteron atomic lattice sites $R_b$ and $R_{b+1}$. Condition (49b) will be satisfied just by waiting long enough depending on field strength of **H** and **B**. Condition (49c) will be achieved by quantum tunnelling. Condition (49d) becomes redundant as, in contrast to the Fusion Reactor case, we do not need to decide precisely which deuterons are to fuse. Iso-spin polarization P#N+N#D is promoted. All Cold Fusion conditions (49) are now satisfied in this approximation for this selected set of deuterons in the lattice.

With regard to the iso-spin P#N+N#P polarization and angular momentum during deuteron Fusion, at some inter-deuterons distance $\Delta r_D = r_{D1} - r_{D2}$ for deuterons 1 and 2, the deuteron point particle approximation must be abandoned and the separation into neutrons and protons must be taken into consideration. As the two fusing deuterons will be in approximately the same kinetic and potential energy states for Cold Fusion condition $\langle v_{D1} \rangle = \langle v_{D2} \rangle = 0$, the protons and neutrons need to be in opposite spin states which again promotes $S = 0 \rightarrow S = 0$ deuteron Cold Fusion as in the Fusion Reactor case and the Cold Fusion Channel (47c) is selected.

A more exact quantum mechanical treatment will yield a spectrum of interacting factors, including spin-spin interactions, spin-orbit interactions for all particles involved, and a more general class on interactions collectively referred to as exchange-correlation effects. In an even more general case, but still limiting to static fields in the electromagnetic field engineering, an external electric filed **E** can also be added to improve probability of Cold Fusion in the Battery and Fuel Cell embodiments (see item B under heading "Battery Performance Enhancement" below). Defining the complex analytic dielectric function $\varepsilon_{ik}$ and inverse $(\varepsilon_{ik})^{-1}$ for the approximately free homogenous deuteron gas analogously to the linear response dielectric function $\varepsilon$ for a valence electron gas the generalized Hamiltonian and the Battery and Fuel Cell Equations in the above approximations, for the periodic Bloch function part and with symbol

$$\left(-\hbar^2 \nabla^2 - 2i\hbar \boldsymbol{k} \cdot \frac{\partial}{\partial \boldsymbol{r}} + \hbar^2 k^2\right) \equiv (\boldsymbol{p} + \boldsymbol{k})^2,$$ become

$$\left[\frac{1}{2m_D}(\boldsymbol{p} + \boldsymbol{k})^2 + V(r_D) - \boldsymbol{\mu} \cdot \boldsymbol{B} - V_{Pd-D} - \frac{g_s^2}{4\pi c^2}\frac{e^{-m_S \Delta r_D}}{\Delta r_D} - e(\epsilon_{ik})^{-1}E_k r_D^i + \right.$$

$$\left. \epsilon_R^{D-D}\frac{e^2}{|r_{D1}-r_{D2}|}\right] u_{n,k_D}(r_D) = E_n(\boldsymbol{k})u_{n,k_D}(r_D) \tag{58}$$

In (58) a residual term for deuteron-deuteron repulsion in the $Q = 0$ tube of the form $+\epsilon_R^{D-D}\frac{e^2}{|r_{D1}-r_{D2}|}$ has been included as illustrated in Figure 4, which may also include a neutron charge density effect and additional space-time curvature effects. In both the residual term and the dielectric function term, effects can be included from exchange-correlation, screening by electrons and screening by deuterons, QFT type Feynman graph vacuum polarization, and other effects that have not been included up to this point. For a perfect $Q = 0$ tube, even in an external electric field with

**E** parallel or anti-parallel to **H**, $(\varepsilon_{ik})^{-1} = 0$ and $\epsilon_R^{D-D} = 0$ in this section of the tube. Adding the dielectric and residual terms does not change the conclusions regarding quantum tunnelling and Cold Fusion, as the Yukawa potential still remains the deepest potential well, while the electromagnetic repulsion barrier remains finite once the point particle approximation of the deuteron is abandoned and space-time curvature effects are taken into account.

A Battery with the above function now comes in two versions, namely a heat producing Battery and an electricity producing Battery.

For the heat producing Battery, the purpose of the encapsulation is simply heat transfer to the Battery from the Cold Fusion process, and the Battery encapsulation is chosen to optimize $\gamma$ photon energy transfer to the lattice and its encapsulation. Such a heat producing battery can be placed in a room, or placed in or in thermal contact with a material or a liquid to be heated.

For the electricity producing Battery, the Battery unit may be encapsulated in arbitrary photovoltaic layers with materials optimized for the Cold Fusion Channel energy. Additional material layers can be used to optimize the optical properties of photovoltaic layers depending on which photovoltaic technology is used. The optimizing layer material is obtained by first selecting the photovoltaic technology and observe what absorption wave lengths are optimal for this technology. Subsequently the optimizing layer materials are selected by observing what materials shift, for example deuteron-deuteron Cold Fusion 23.8/2 = 11.9 *MeV* wavelength, to the absorption wave lengths of the selected photovoltaic technology. This wave length shifting is not limited to Compton scattering, all relevant quantum field processes are involved. For calculations, optical properties are defined by the complex dielectric tensor function $\varepsilon_{ik} = \varepsilon_{1ik} + i\varepsilon_{2ik}$. The damping $k$ of the produced Cold Fusion $\gamma$-photons when travelling through approximately homogenous layers of material, for which $\varepsilon_{ik} = \varepsilon$ and $\varepsilon$ is a constant diagonal matrix, is obtained from the imaginary part of the complex dielectric function.

For complex refractive index $N$ and usual real refractive index $n,$ the damping $k$ is obtained from $$N = n + ik = \sqrt{\epsilon}$$ (see Marvin L. Cohen and Steven G. Louie, Fundamentals of Condensed Matter Physics (Cambridge University Press 2016), Section 9.1, equation (9.13)).

In general embodiments, the fusion channels (47a) and (47b) are for most part regarded as contaminations resulting from insufficient engineering precision, but these channels can still contribute positively to for example heating Battery embodiments if used in an appropriate way.

For a nano- and a quantum-Battery or Fuel Cell, the same considerations apply as for a nano- and a quantum-Fusion Reactor. However, additional quantization in bands, charge transport, heat transport, optical and other properties need also to be taken into account in the physical model.

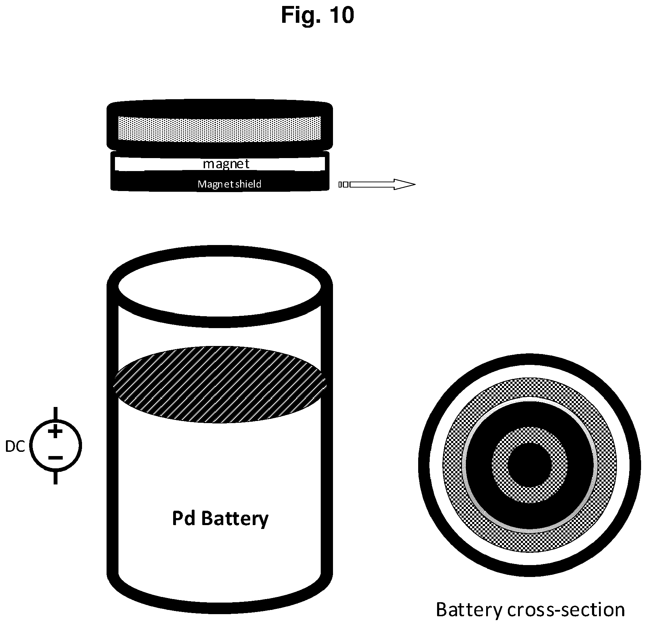

Figure 10 is a simple illustration of a concrete embodiment of a Battery according to the present invention. A standard photovoltaic implementation is not explicitly shown, but only indicated by a DC current source symbol. The top enclosure is drawn with a permanent magnet generating the field *H,* but in principle this could also be generated by a current loop, for example on both top and bottom enclosure, and which is simpler to control. A permanent magnet would require a magnetic shield enabling and disabling in order to halt the Cold Fusion and current generation process as indicated by the arrow on the top enclosure. For the bottom enclosure, the magnetic field is preferably generated with the same magnetic field direction as for the top enclosure if the bottom is also used for magnetic field generation. Some layers are indicated in the Battery cross section. They may be for example two photovoltaic layers indicated by mesh. From the center in Figure 10, a ferromagnetic core improving the internal magnetic field *B* generated by the external field *H,* is indicated in the figure as black. The ferromagnetic core is followed by one photovoltaic layer. The Pd loaded with D is the next layer indicated by black. In between the PdH and the photovoltaic layer is a small $\gamma$-radiation optimization layer from Cold Fusion energy $\hbar\omega_\gamma$ to optimize $\hbar\omega$ for the photovoltaic materials and technologies involved, as indicated by thin white. The two outer layers may represent for example radiation shielding, contamination shielding, temperature shielding and Fusion Material enclosure. The Battery is here indicated as a cylinder, but the embodiments are independent of geometric forms, including thickness of the various layers indicated in the figure.

## 4.2 Battery Performance Enhancement

The above simple illustration of only using a static and homogenous external magnetic field H results in non-zero quantum tunnelling and deuteron-deuteron Cold Fusion. A number of additional features may be added in order to improve the overall technical performance and economy of the Battery and Fuel Cell embodiments described above. In the particular case of PdH, the Cold Fusion rate can be increased by increasing the quantum tunnelling rate, which in turn is increased by flattening the Pd-H covalent bond potential well or by decreasing the deuteron-deuteron distance. The following are some examples.

A) **Deuteron - Deuteron distance reduction by external electromagnetic fields and Bloch oscillations:** In order to illustrate this improvement of the class of Battery and Fuel Cell embodiments, a time-constant and homogenous external electric field *E* is applied parallel or anti-parallel to the external magnetic field *H* above. For the purpose of illustration, *E* is chosen parallel with *H.* The limitation to constant and homogenous fields is only made in order to simplify the dynamical description, but the method may use other types of electromagnetic fields. Re-iterating that the deuteron band dynamics is similar to electron band dynamics, but with a different mass parameter $m_D$ instead of $m_e$ and with a

change of sign of charge, standard electron band results can be applied to deuterons. Using among other things the Bloch function properties (53), (54) and (55), adiabatic approximations, the fact that the homogenous fields $\boldsymbol{E}$ and $\boldsymbol{H}$ vary slowly over lattice constant $a$, with dynamical state and operator representations in terms a Wannier functions, in the simplest approximation of single non-composite energy bands $\varepsilon_n$, and approximating by vanishing Berry curvature, with the deuteron quasiparticle group velocity $v_x$ parallel to the magnetic field $\boldsymbol{H}$ and in $Q = 0$ tube, the deuteron space position can be written (see Marvin L. Cohen and Steven G. Louie, Fundamentals of Condensed Matter Physics (Cambridge University Press 2016), Section 5.4, equation (5.35)):

$$x(t) = \int_0^t v_x(t)dt = \frac{1}{\hbar}\int_0^t \frac{dt}{dk_x}\frac{\partial \varepsilon_n}{\partial k_x}dk_x = \frac{1}{eE_x}\left[\mathcal{E}_n(k_x(t)) - \mathcal{E}_n(k_x(t = 0))\right] \qquad (59)$$

The Block oscillations (59) must be in opposite directions similarly to phonon optical and acoustical branches in one dimension, possibly with a degree of randomness, or else the complete lattice will oscillate. Equation (59) shows that for increasing bandwidth $W$ of energy band $\varepsilon_n$, the deuteron-deuteron distance for two Bloch oscillations relative phase shift of $\pi$ can be decreased by $2 \cdot \quad \Delta x_{max} = 2 \cdot \frac{W}{|eE_x|}$ , assuming all above approximations. The electric field is applied to temporarily minimize the distance between two neighbouring potentially fusing nuclei as given by equation (59), and thereby Bloch oscillations increase the probability of quantum tunnelling and nuclear fusion.

The dynamics of adding the field $\boldsymbol{E}$ in the Battery and Fuel Cell embodiments is similar to adding the field $\boldsymbol{E}$ in the Fusion Reactor embodiments in that it creates triangular potentials between energy gaps and result in Airy-like functions.

B) **Deuteron - Deuteron distance reduction using phonon excitations and oscillations:** The temperature is increased by direct thermal contact transport (such as using cooling flanges or submersion into a cooling liquid) or by other methods such as incident electromagnetic (IR) radiation with the material specific thermal radiation frequency. The increased temperature results in that internal scattering processes induce lattice vibrations, here modelled as phonon excitations following a second quantization QFT analogy. Both optical and acoustic branch excitations contribute to the vibrations with period $T \gg 10^{-23}s$, and which in turn for H-H oscillations temporarily reduce the lattice distance from the average value represented by the lattice constant $a$. In fact, $\frac{1}{T} \sim 10THz = 10^{10}Hz,$ i.e. $T \sim 10^{-10}s$ (again, see Marvin L. Cohen and Steven G. Louie, Fundamentals of Condensed Matter Physics (Cambridge University Press 2016), Section 1.6, equations (1.2) and (1.4)). This in turn implies that the distance between deuterons is momentarily reduced by approximately the same amount. The reduction or change in deuteron distances may for example be estimated using standard theory from (see Marvin L. Cohen and Steven G. Louie, Fundamentals of Condensed Matter Physics (Cambridge University Press 2016), Section 13.2, equation (13.60)):

$$\delta \boldsymbol{R}_{l\alpha} = \sum_{q\alpha} \left(\frac{\hbar}{2MN\omega_{q\alpha}}\right)^{\frac{1}{2}} \hat{\epsilon}_{q\alpha}^b e^{iq\cdot R_l^b}\left(a_{q\alpha} + a_{-q\alpha}^\dagger\right) \qquad (60)$$

In (60), $a_{q\alpha}$ and $a_{-q\alpha}^\dagger$ represent phonon annihilation and creation operators, respectively, $N$ is the number of lattice cells per unit volume, $M$ is the ionic mass per cell, $l$ is the lattice vector index for locating a cell, b is the atomic site in the cell, $\alpha$ is the phonon branch index, $\omega_{q\alpha}$ is the phonon frequency for wave vector $\boldsymbol{q}$, and $\hat{\epsilon}_{q\alpha}^b$ is the phonon polarization unit vector. The distance reduction can reach order of 20% of the lattice constant $a$ at the Cold Fusion operating temperatures. This implies an increase in the attractive deuteron-deuteron Yukawa potential of the order

$$\frac{V_T(r)}{V_0(a)} = \frac{g_s^2}{4\pi c^2}\frac{e^{-m_s a\cdot 0.8}}{a\cdot 0.8} \Big/ \frac{g_s^2}{4\pi c^2}\frac{e^{-m_s a\cdot 1}}{a} = 1.25e^{0.2am_s} > 1.25 \ . \qquad (61)$$

The equation (61) estimates the increase in probability amplitude of deuteron-deuteron fusion due to phonon excitations. The distance reduction by phonon excitations can be applied in practice by increasing the temperature from $T \approx 0$ K in steps of 5 K, vary the direction of the applied magnetic field $\boldsymbol{H}$ in the different crystal directions at each temperature, and observe at what temperature maximum Cold Fusion is obtained. This will provide the optimum operating temperature and magnetic field direction for the Battery and Fuel Cell configuration chosen.

The following sub method may be used for obtaining Cold Fusion optima by variation of the parameters in question.

1. Fix the Fusion Material particle number density at some value $n_1$. In the above illustration of PdH, the density was chosen to correspond to one deuteron $D$ per one palladium Pd, but $n_1$ is in principle an arbitrary density starting point. Divide the number density interval $[0,n_1]$ into 100 subintervals with equal number density change.

2. Fix the temperature at some value $T_1$ in the Cold Fusion temperature range. Divide the Kelvin temperature range into $1K$ intervals.

3. Fix the applied magnetic field $\mathbf{H}$ at some field strength $H_1 \equiv |\mathbf{H}_1|$. Divide the field strength interval $[0, H_1]$ into 100 subintervals with equal field strength change.

4. Fix a starting point for applied magnetic field direction relative to any Battery orientation axis specified by standard polar coordinates $(\theta_1,\varphi_1)$. Divide the polar angle intervals $\theta \in [0,\pi]$, $\varphi \in [0,2\pi]$ into 100 equal angle subintervals.

5. Measure the Cold Fusion rate.

6. Repeat items 4 and 5 for each subinterval angle.

7. Repeat items 3, 4 and 5 for each field strength from $H_1$ and down to $H = 0$, and from $H_1$ up to the desired maximum using the same interval steps, and for each polar angle step.

8. Repeat 2, 3, 4 and 5 for each temperature step in the Cold Fusion range, for each field strength from $H_1$ down to $H = 0$ and from $H_1$ up to the desired maximum using the same interval steps, and for each polar angle step.

9. Repeat 1, 2, 3, 4, and 5 for each number density step down from $n_1$ to $n = 0$ and up from $n_1$ to the desired maximum particle number density, for each field strength from $H_1$ down to $H = 0$ and from $H_1$ up to the desired maximum using the same interval steps, and for each polar angle step.

10. Once the optima for number density, temperature, field strength and field directions have been found, take one or several numbers $M$ of such intervals nearby each optimum and divide this optimum interval again into a number $N$ of smaller and equal intervals, and with $N < M$, until the desired precision of the optima are obtained for each of the variables $n, T, H, \theta$ and $\varphi$. For each iteration of item 10, typically $N = 10$ is used, i.e. each optimum interval is again divided into 10 equal intervals.

The sequence in which the variations are performed with respect to number density $n$, temperature $T$, field strength $H$ and field direction $(\theta,\varphi)$ for finding the optima is immaterial. The particular parameter variation sequence $\theta,\varphi,H,T,n_F$ in steps 6-9 is only one example.

The order in which step 10 is executed for each parameter is also immaterial. The desired precision in any of the parameters may be determined at any point while executing steps 6-9.

C) **Improving magnetic field** B **and spin alignment by ferromagnetic materials:** The deuteron spin alignment efficiency depends on the induced magnetic field $\mathbf{B}$ by the external field $\mathbf{H}$. The resulting $\mathbf{B}$ can be improved by adding layers of ferromagnetic materials, such as Fe, Cu, Ni or Mg, within the Battery or in the Battery encapsulations. As stated above, the magnetic field $\mathbf{B}$ in the PdH lattice now combined with ferromagnetic materials is $\mathbf{B} = \mathbf{H} + 4\pi\mathbf{M}$ for magnetization $\mathbf{M}$, the latter defined by $\mathbf{M} = \chi\mathbf{H}$ or more generally $M_i = \chi_{ik}H_k$. For each ferromagnetic material $\chi$ is obtained from standard tables and the contribution from the ferromagnetic materials is added to the contribution from the PdH lattice to obtain the induced field $\mathbf{B}$. The ferromagnetic material is any of cobalt, iron, nickel, neodymium or samarium, or a compound with any of these elements as one component, or a complex compound (including at least three elements) with any of these elements as one component.

D) **Battery refurnishing by time-dependent NMR-type magnetic fields:** The efficiency of the Battery is determined by that there is of the order of 10% of the deuterons that are correctly P#N+N#P spin aligned initially. More precisely, a fraction of approximately $\frac{1}{3} \cdot \frac{1}{3}$ are correctly aligned at an operating temperature significantly different from $T = 0$, like STP. To increase the efficiency, a time dependent magnetic field with a frequency $\omega$ close to the magnetic spin transition resonance energies $\Delta\varepsilon = \hbar\omega$ for the transitions between the energy levels as defined by equations (11) can be applied to increase the use of the Loaded Fusion Material. This is achieved by creating new correct spin alignments once most of the correct alignments have been used up by Cold Fusion. The Battery re-conditioning time is reduced by increasing the strength of the time-dependent magnetic field.

E) **General magnetic field, temperature and Loading optimization:** The optima for the Cold Fusion energy production rate with respect to Battery operating temperature and applied magnetic field $\mathbf{H}$ depend on the precise Battery composition and configuration. For example, it is known that once the Fusion Material particle number density

$$n_F \equiv \frac{N_F}{V}$$

$n_F$ is fixed, here for number of Fusion Material particles $N_F$ in volume $V$, material properties will oscillate with $\mathbf{H}$. Two such oscillation examples are oscillations in the magnetic susceptibility $\chi(\mathbf{B})$, in literature called the de Haas-van Alpen effect, and oscillations in the resistivity $\rho(\mathbf{B})$, in literature called the Shubnikov-de Haas effect. For each selected Fusion Material, taken as deuterium in the above illustration examples, it is therefore a complex matter to theoretically predict optimal degree of Fusion Material Loading, optimal operating temperatures and optimal applied magnetic field $\mathbf{H}$. The general method to determine these optima for any given Battery design is therefore to separately vary all the parameters Fusion Material particle number density $n_F$ and which corresponds to a degree of Loading, operating temperature $T$, the applied magnetic field strength $H \equiv |\mathbf{H}|$ of $\mathbf{H}$ and the applied magnetic field direction relatively to the Battery orientation, the latter expressed for example in standard polar coordinates $(\theta, \varphi)$. Each parameter is separately varied to the desired degree of accuracy. The desired Cold Fusion production rate is determined in the same way as for determining the optima, the desired rate at each instance may not be the same as optimum rates. A Battery Power Control is obtained by mechanically, electromagnetically or electro-mechanically controlling the parameters $n_F$, $T$, $H$ and $(\theta, \varphi)$.

### 5. Fuel Cell

A Fuel Cell is in principle a Battery, a Battery Loader and with additional Fusion Material being added to the Battery Loader over time, making the Battery Loading capacity in principle infinite, or rather the same as the total access volume to Fusion Material. For a Fuel Cell, the Battery remains in the gas chamber of Figure 9 for the gas case, or the Battery in placed in a liquid in the liquid case, while gas or liquid is continuously added when required. In this Fuel Cell scenario, Fusion Material is continuously added into the Battery though diffusion, and Fusion Products are continuously extracted from the Battery through diffusion.

A Fuel Cell Power Control is obtained by mechanically, electromagnetically or electro-mechanically controlling the parameters $n_F$, $T$, $H$ and $(\theta, \varphi)$ as in the case of Battery Power Control, and in addition to mechanically, electromagnetically or electro-mechanically control the Fusion Material replacement rate into the Battery part of the system.

### Battery and Fuel Cell - Generalizations

As is the case for the Fusion Reactor embodiments, the present invention in its Battery and Fuel Cell embodiments is also not restricted to deuterium as the Fusion Material. Hence, in the following a generalization of the deuterium Fusion Material for the Battery and Fuel Cell class of embodiments to tritium Fusion Material will be described. Moreover, as will be seen in the following, it is possible to use other materials than palladium Pd to absorb the Fusion Material in the Battery and Fuel Cell embodiments.

Suitable hydrogen absorber materials include palladium Pd, titanium Ti, magnesium Mg, aluminium Al, lithium Li, sodium Na, lanthanum La and nickel Ni, as well as compounds and complex compounds (containing at least three elements) wherein at least one component in such a compound contains any of these listed chemical elements. All equations (49) - (61) still apply. Figure 9 and Figure 10 still apply with Pd replaced by the chemical element or the compound selected.

The degree of loading as compared to PdH is also generalized, first using Pd, and also using any of the hydrogen absorbers listed above. For Pd, the degree of deuterium or tritium loading may be any $x$ in $PdH_x$, such as for example $PdH$ ($x = 1$), $PdH_{0.7}$ ($x = 0.7$), $PdH_2$ ($x = 2$). Similarly, for example for titanium Ti, we may have TiH ($x = 1$), $TiH_{2.08}$ ($x = 2.08$). In general, x may be at least 0.8, or even at least 1.5.

The Input Material for tritium may be the same as for deuterium. The fusing nuclei may be contained in molecules or atoms, and in liquid, solid or gas form.

The Material Separator process may also be the same as for deuterium. An additional hydrogen isotope separation may, however, be needed if deuterium and tritium are mixed.

The Loading of tritium Fusion Material through diffusion may be the same as for deuterium - Pd case, with Pd atoms replaced by any selected Battery hydrogen absorber element or compound. If diffusion using a gas chamber is used, then Figure 9 still applies with the specified replacements. As an alternative to gas chamber diffusion, the Battery is Loaded by sinking the Battery into a liquid containing the Fusion Material under the pressure required in order to achieve the desired degree of Fusion Material saturation.

The Battery Unit for tritium is identical to the deuteron case. All equations (49) - (61) are still valid with the following adjustments:

- The deuteron mass $m_D$ replaced by the mass of the tritium nucleus $m_T$.

- The deuteron spin $S = 1$ and the deuteron magnetic moment $\mu_D$ are replaced by the spin $S = \frac{1}{2}$ and magnetic moment $\mu_T$ approximately given by (9a) for the triton. At instances where $\mu$ is not indexed, such as in equations (14), the value of $\mu$ for the deuteron is still replaced by the value $\mu$ for the triton.

- The Cold Fusion with nuclei different from deuterons results in processes different from processes (46) - (48).

A Fuel Cell is for tritium defined exactly as in the deuterium-Pd case, with the corresponding changes of Pd atoms by the chosen hydrogen absorber atoms or compounds hosting the Fusion Material.

The Battery enhancements for the tritium Fusion Material case and the general Battery bulk material case may be identical to deuterium-Pd case with the same changes as defined above. This includes:

A) Nucleon - nucleon distance reduction by external electromagnetic fields and Bloch oscillations

B) Nucleon - nucleon distance reduction using phonon excitations and oscillations

C) Improving magnetic field B and spin alignment by ferromagnetic materials

D) Battery refurnishing by time-dependent NMR-type magnetic fields

E) General magnetic field, temperature and Loading optimization

## TERMS AND DEFINITIONS

The terms used in the text refer to conventional scientific terms. Some specific terms used in the text are defined in the following table. The capital letter in a term or a definition is not mandatory in the text, but when used in the text generally indicate that the term used has a particular definition in the context of this application.

| Term | Definition or Description |
|---|---|
| Absorber Materials | As specified in different parts in text. In addition, and in general, it refers to materials in for example Fusion Reactor Core and Accumulator that absorb energy in the form of massive or massless particles and translates this energy to lower energy particles and bulk heat. Lower energy particles need not appear, in which case all energy is translated to bulk heat. |
| Accumulator Materials | As specified in different parts in text. In addition, and in general, it refers to the materials from which the Accumulator is constructed. |
| Battery Power Control | A Battery Power Control is obtained by mechanically, electromagnetically or electro-mechanically controlling the parameters Fusion Material particle number density $n_F$, operating temperature $T$, applied magnetic field strength $H \equiv |\boldsymbol{H}|$ and relative orientation of the applied magnetic field $\boldsymbol{H}$ and the Battery expressed for example in standard polar coordinates $(\theta, \varphi)$. Here, the definition $$n_F \equiv \frac{N_F}{V}$$ for number of Fusion Material particles $N_F$ in volume $V$ is used. |
| Chain reaction | A chain reaction refers to the case when energy in any form generated from a nuclear fusion or fission in any fraction is used to feed-back into the original process for maintaining such process at production level. This includes feed-back of thermalized neutrons into a nuclear fission process to maintain energy production level or feed-back of energy in a thermonuclear fusion process in order to maintain a high temperature. |
| Cold Fusion | Operating temperature T between 0 - $10^4$ K. In general, and from quantum theory, it is not possible to say that Cold Fusion will occur with a 100% certainty. It is only possible to say that dynamical state preparations that are executed correctly will allow Cold Fusion to occur at some probability $P$ per unit time $t$ different form zero, $P \neq 0$, such that energy can be produced. For the purposes of this invention, this probability of Cold Fusion is high enough so that Cold Fusion in practise will occur in measurable amounts. |

| Term | Definition or Description |
|---|---|
| Cold Fusion Channel | Specifies the nuclear reaction channel in the two forms $D + D \to {}^4_0He^* \to {}^4_0He + \gamma\ (23.8\ MeV)$ $D + D \to {}^4_0He + 23.8\ MeV$ |
| Doping Material | As specified in different parts in text. In addition, and in general, it refers to the material that is added to stimulate Cold Fusion to occur. This material is typically neutrons of neutron rich nuclei of chemical elements or compositions of elements. |
| Fuel Cell Power Control | A Fuel Cell Power Control is obtained by mechanically, electromagnetically or electro-mechanically controlling the parameters $n_F$, $T$, $H$ and $(\theta, \varphi)$ as in the case of Battery Power Control, and in addition to mechanically, electromagnetically or electro-mechanically control the Fusion Material replacement rate into the Battery part of the system. |
| Fusion Material | As specified in different parts in text. In addition, and in general, the Fusion Material is the nuclei of chemical elements that change mass number during the nuclear fusion process. Neutronium is here considered a chemical element. For Battery and Fuel Cell applications, the term Fusion Material may also refer to the used chemical elements, combination of chemical elements or arbitrary ok of such elements and element combinations. |
| Fusion Product | As specified in different parts in text. In addition, and in general, it refers to the output particles, nuclei, chemical elements of arbitrary ionization, or energy in any form that is the output of the Cold Fusion process. |
| Fusion Reactor Materials | As specified in different parts in text. In addition, and in general, it refers to the materials from which the Fusion Reactor is constructed. This excludes Moderator Materials by definition. |
| Fusion Reactor Power Control | As defined in the text, and as a more detailed addition by mechanically, electromagnetically or electro-mechanically controlling the parameters Fusion Material injection rate into Material Separator, DC current for electrolysis when electrolysis is used, Fusion Material injection rate into Ionization Chamber, intensity and wave length of the UV radiation in the Ionization Chamber, the local field strength and direction of $E$ used for charged particle transport or iso-spin polarization or both, physical openings in connecting Ionization Chamber and Fusion Reactor, strength and direction of currents generating applied magnetic fields, pressure gradients for uncharged particle and molecule transport which includes collecting Fusion Products and unused Fusion Material or Doping Material, Accumulator incident radiation area and Accumulator bulk volume, pump speeds. |
| Input Material | The material or compositions of materials from which the Fusion Material is extracted. In the examples in the text deuteron $D$ or $D_2$ is extracted from $D_2O$. |
| Matter Wave Lens | In terms of an optics analogy, the Matter Wave Lens focuses a Fusion Material stream, or a Doping Material steam to a dedicated point, and where Cold Fusion occurs in a neighbourhood of that point. The Matter Wave lens may consist of vacuum, any material media in any phase that is transparent to the de Broglie wave lengths in question, and with arbitrary electromagnetic fields for the purpose of obtaining and maintaining the Cold Fusion conditions, or any combination thereof. |
| Moderator Materials | As specified in different parts in text. In addition, and in general, it refers to materials that participate in the dynamical or quantum states preparations for allowing Cold Fusion of any dynamical variable. This includes momentum or velocity variables and spin variables in explicit Spin Filters. The dynamical variable may refer to any variable depending on which mathematical or physical model is used in the dynamical description. |

(continued)

| Term | Definition or Description |
|---|---|
| Monochromator | This term refers to a single de Broglie wavelength. The Monochromator selects the Fusion Material (deuteron) kinetic energy with velocity $v$ around a narrow band with average velocity $v_0$ such that the Cold Fusion conditions are satisfied with the required precisions for energies around this $v_0$. The velocities $v$ and $v_0$ determine the electromagnetic fields, but not necessarily uniquely. Conversely, the electromagnetic fields determine $v_0$ (and $v$). Standard monochromator or spectrometer methods may be used. |
| Nano size | The term nano size refers to a small size in one or several dimensions with a physical distance $d$ in real space restricted by $d \geq 1.0 \cdot 10^{-9}$ $m$. The term quantum size refers to a size less that nano size, i.e. $d < 1.0 \cdot 10^{-9}$ m. |
| Operating temperature | The temperature at the point or in the neighbourhood where the non-thermonuclear fusion occurs at the beginning of the energy or power production. If vacuum is used, this will correspond to the initial temperature of the Fusion Material and Doping material in the Fusion Reactor Core in the Fusion Reactor application. This does not exclude the fact that some specific regions of the Fusion Reactor, Accumulator or other components that absorbs energy from the nuclear fusion may reach temperatures much higher than the operating temperature some time into the energy production. For vacuum, the temperature is defined by the corresponding radiation frequency distribution, that may or may not be a black-body distribution. |
| Operating temperature module specific | If a specific module or component is referred to, such as for example explicitly Accumulator operating temperature, Ionization Chamber operating temperature, Battery operating temperature, the operating temperature refers to the average temperature over that module or component at the beginning of the energy or power production. For the Accumulator and the Battery and Fuel Cell, this term also refers to the average temperature during *normal* operations of the energy or power production, not only at the beginning of the energy or power production. |
| Phase of matter | This specifying definition of the term "phase" is to complement standard scientific definitions. The term phase refers to any of the forms solid, liquid, gas, plasma or any transitions between such phases. More generally, it refers to non-analytic or sharp edges when one set of thermodynamic variables are plotted against another set for a collection of particles or synthetic systems, which in this latter case includes a QHD nuclear matter phase and a quark matter phase. The term phase within a solid may also refer to a change in some property of the solid, such as for example a change in the lattice constant. |
| Power Control | Any of Fusion Reactor Power Control, Battery Power Control or Fuel Cell Power Control. |
| Power Control Materials | As specified in different parts in text. In addition, and in general, it refers to the materials from which the Power Control is constructed. This includes possible superconducting materials to, for example, generate magnetic fields. |
| Quantum size | The term nano size refers to a small size in one or several dimensions with a physical distance $d$ in real space restricted by $d \geq 1.0 \cdot 10^{-9}$ $m$. The term quantum size refers to a size less that nano size, i.e. $d < 1.0 \cdot 10^{-9}$ $m$. |
| Spin Filter | A Spin Filter filters out unwanted dynamical spin states from wanted dynamical spin states in Fusion Material and Doping Material in order to allow Cold Fusion. A Spin Filter may consist of vacuum, any material media in any phase that is transparent to the wanted spin states but less transparent to the unwanted spin states, and with arbitrary electromagnetic fields for the purpose of obtaining and maintaining wanted spin states, or any combination thereof. A Spin Filter may also use standard methods from spin measurement technologies. |

(continued)

| Term | Definition or Description |
|---|---|
| Transport | The term Transport refers both to individual atoms or molecules of arbitrary ionization, and to a collection of atoms or molecules of arbitrary ionization. Individual atoms or molecules of arbitrary ionization are here called particles. If this collection of particles is a gas or a liquid, then this collection is located in some form containment while for a solid the collection is contained in the solid itself. For an individual particle, Transport refers to bringing the particle from an arbitrary initial position $r = (x_0, y_0, z_0)$ in 3-dimensinal space and with arbitrary initial velocity $v = v_0$ in an arbitrary fashion to a neighbourhood of $r = 0$ with $v \approx 0$ where Cold Fusion occurs. For a collection of particles, Transport refers to bringing the collection of particles with arbitrary initial collective position $r = (x_0, y_0, z_0)$ and arbitrary collective initial velocity $v = v_0$ (in a container and if the average velocity vector is zero then the container itself initially moves with $v_0$) with arbitrary initial pressure $P_0$, arbitrary initial volume $V_0$ and arbitrary initial temperature $T_0$ in an arbitrary fashion to a neighbourhood of $r = 0$ with $v \approx 0$ where Cold Fusion occurs, and in an arbitrary thermodynamic fashion to a final pressure P, a final volume V and a final Cold Fusion temperature T. |

## PARAMETER INTERVALS

In the following, useful values for different parameters pertinent to the present invention, both generally and for different specific embodiments, are discussed.

### Impact Energy & Temperature

In the following, we use kinetic energy rather that velocity for a single particle consideration (Fusion Reactor, Battery & Fuel Cell with bombardment of deuterons), and a corresponding temperature is given for a collection of particles (Battery & Fuel Cell, Fusion Reactor - gas/liquid container).

The kinetic energy in particle consideration is $E_k = E - M_0 c^2 \approx \frac{1}{2} M_0 v^2$. The kinetic energy in particle collections (ensemble/assembly) is approximated from $\frac{1}{2} M_0 \langle v^2 \rangle = k_B T$. Boltzmann constant $k_B = 1.38 \cdot 10^{-23}$ [$J \cdot K^{-1}$] = $8.62 \cdot 10^{-5}$ [$eV \cdot K^{-1}$].

| Class of Standard Industry | Kinetic Energy used $eV$ | Temperature used $T [K] = k \cdot 10^3 \cdot e \cdot 1.6 \cdot 10^{-19} V / k_B$ | Normal Operation | Intervals in Embodiments of Invention |
|---|---|---|---|---|
| Thermonuclear fusion power production | 10 - 100 keV | $1.16 \cdot 10^5 - 11.6 \cdot 10^5$ K | > 70 keV | < 10 keV < $10^4$ K |
| Nuclear medicine /neutron medicine | 10 - 100 keV | $1.16 \cdot 10^5 - 11.6 \cdot 10^5$ K | > 70 keV | < 10 keV < $10^4$ K |

Typical normal operation temperatures for different embodiments are as follows:

| Industry Application | Temperature | Embodiment Interval |
|---|---|---|
| Space vehicle industry Solar system inside Earth | 2 - 757 K | < 1000 K |
| Space vehicle industry Solar system outside Earth | 2 - 393 K | < 500 K |
| Uncontrolled temperature on Earth (Antarctica low, sun exposure high) | -95 - 95 C | > -125 C < +125 C |
| Mil standard aerospace electronics | -55 - 125 C | > -70 C <+170 C |

For the Absorber Materials, various such materials have melting points according to the following, setting upper limits for useful operating temperatures for different useful such Absorber Materials as follows:

| Element | Melting Point | Embodiment operating temperature Intervals [K] |
|---|---|---|
| Palladium | 1828 K | <1800 |
| Titanium | 1941 K | <1900 |
| Magnesium | 923 K | <900 |
| Aluminium | 933 K | <900 |
| Lithium | 453 K | <400 |
| Sodium | 371 K | <350 |
| Lanthanum | 1193 K | <1150 |
| Nickel | 1728 K | <1700 |

In a corresponding manner, the melting/boiling point of parahydrogen and hydrogen limits the useful temperature range according to the following:

| Element | Temperature | Embodiment Operating Temperature Intervals |
|---|---|---|
| Hydrogen $H_2$ boiling point | 20.2 K | > 4 K |
| Hydrogen $H_2$ melting point | 13.99 K | > 4 K |

Generally, the following preferred parameter intervals apply for Cold Fusion according to the present invention:

**Kinetic Energy:** < 1 keV, or < 220 eV, or < 1 eV, or < 100 meV, or < 1 meV, or even < 0.01 meV.

**Operating Temperature:** < $10^4$ K (Cold Fusion Range), or < 1950 K, or < 950 K, or < 500 K, or < 125 C, or < 50 C, or < 5 C, or < -30 C, or < -60 C, or < 150 K, or < 77 K (liquid nitrogen), or even < 30 K (hydrogen phases).

**Start of Fusion Temperature:** Applicable temperature intervals are the same as for said Operating Temperature. The temperature gap between Start of Fusion Temperature and Operating Temperature defines the production rate ($\mu W$ - $GW$). For example, for a Start of Fusion Temperature of 20°C at loading density $PdH_{0.8}$ after $200 \mu T$ is applied, energy production will reach say a maximum steady state Operating Temperature of 50°C at applied $200 \mu T$ in Battery & Fuel Cell or gas/liquid Container. Energy production gap is then 30°C/K from 20°C at $200 \mu T$. This gap defines the power production rate in this example, the number of watts needed to maintain the Battery/Fuel Cell at 50°C in a 20°C environment.

**Magnetic Field Strength**

In the following, it is noted that magnetization generally depends on temperature, and that the given intervals take into consideration both low temperature embodiments and large-scale energy production embodiments at high temperatures:

**Magnetic field:** > 100 $\mu T$ (and at least larger than Earth's natural magnetic field), or > 500 $\mu T$, or > 50 mT, or even > 1 T. For the particular class of embodiments of small energy, low temperature, semiconductor setups, the magnetic field may be 00 $\mu T \leq |B| \leq 50$ $mT$. For large energy, high temperature, large transport vehicles and power distribution applications, $1T \leq |B| \leq \infty$.

**Isotope Loading Ratio in hydrogen absorber Y metal - $YH_x$ (density)**

Into the Absorber Materials, hydrogen may be loaded with a Max Loading Ratio according to the following:

| Hydrogen Absorber/method | Max metal /Deuterium Ratio x in $YH_x$ | Typical Embodiment Intervals |
|---|---|---|
| Palladium/Diffusion at 1 atm. | 0.8 | >0.5 |
| Palladium/Electrolysis/ionic bombardment | > 0.8 | >0.5 |
| Titanium $TiH_{2-x}$ /Diffusion at 1 atm and at 300-500C. | < 2.0 | >0.5 |
| Aluminium $AlH_3$ | 3.0 | >0.5 |

Power production is better the higher the loading ratio is for fixed T and H.

**Loading Ratio for metal Y (the number "x" in $YH_x$):** >0.01, or >0.5, or >0.8, or even >1.5.

**Fusion Reactor stream density/power production P[W]**

The Fusion Reactor stream density is determined by the desired power production and by the efficiency of the power production installation. Instead of fixing power production one could in principle fix the stream density.

Two such quantities could be used in such case that are commonly used:

1. Cubic cm x sec [s·ccm] for neutral atoms or $D_2$ gas (sometimes mTorr is used). Typical small lab equipment: about 10sccm.
2. Milli-Ampere [mA] for deuteron ions. Typical nuclear medicine deuterium accelerator: about 2mA, including ionization capacity.

However, for the output power P[W] of the installation, the following ranges generally apply:

**Total Power Production:** >1nW, or >1$\mu$W, or >1mW, or > 1W, or > 1kW, or > 1MW, or even > 1 GW.

Above, preferred embodiments have been described. However, it is apparent to the skilled person that many modifications can be made to the disclosed embodiments without departing from the basic idea of the invention.

In general, a number of general principles have been described above to achieve Cold Fusion based on alignment of the orientation and spin of individual hydrogen atoms and nuclei in relation to each other. It is realized that these general principles can be applied in other practical configurations than what have been exemplified hereinabove. For instance, the application of various acceleration and aligning electromagnetic fields, together with magnetic fields, may be applied in more complex ways than what has been described above.

The same general principles can be applied across a broad set of ranges with respect to temperatures, field strengths, geometric sizes, powers and so forth, as has been pointed out above.

The examples provided above are mostly drawn to Cold Fusion of deuterium. However, it is realized that the corresponding principles are also useful for tritium.

The examples provided above are freely combinable, as compatible.

In general, everything which has been said in relation to the present method is also applicable to the present system, and vice versa.

Hence, the invention is not limited to the described embodiments, but can be varied within the scope of the enclosed claims.

**Claims**

1. Method for converting nuclear energy by fusing deuterium or tritium nuclei, which method comprises the initial step of providing a first hydrogen atom, in turn comprising a first deuterium or tritium nucleus and a first electron, and a second hydrogen atom, in turn comprising a second deuterium or tritium nucleus and a second electron, which method further comprises the following steps:

a) bringing the first nucleus and the second nucleus together to a distance between the first and second nucleus of at the most 7 Å;

b) applying a first magnetic field (H) such that a resulting total magnetic field (B) is arranged to align a first spin of said first nucleus in relation to a second spin of said second nucleus so that a respective spin axis of said first and second spins are anti-parallel and directed either towards each other or away from each other and so that said first and second spins are projected on a common line between the first and second nuclei, which common line is parallel or anti-parallel to the total magnetic field (B);

c) ionizing said first hydrogen atom, or modifying the electron orbit of said first electron such that a spatial distribution for the first electron is such that the probability for the first electron to exist in a region between the first and second nuclei along the common line is smaller than in a spherically symmetric spatial distribution;

d) ionizing said second hydrogen atom, or modifying the electron orbit of said second electron such that a spatial distribution for the second electron is such that the probability for the second electron to exist in a region between the first and second nuclei along the common line is smaller than in a spherically symmetric spatial distribution,

wherein steps a)-d) may be performed in any order but so that the first and second nuclei are provided at said distance, with said spin orientation and said ionized or electron orbit modified state, at one and the same time.

2. Method according to any one of the preceding claims, wherein said total magnetic field (B) is arranged to generate an energy splitting between hydrogen nucleus spin states which is then used to separate wanted spins from unwanted spins using an electromagnetic field (2) arranged to filter out nuclei not having particular predetermined energy states.

3. Method according to claim 1 or 2, wherein said total magnetic field (B) is at least $100\,\mu T$ of strength.

4. Method according to any one of the preceding claims, wherein said fusion between the first and second nuclei produces a helium nucleus as well as electromagnetic radiation, which electromagnetic radiation is absorbed by an energy absorbing means.

5. Method according to claim 4, wherein the absorbing means comprises a water body which is at least 0.1 meters of connected water in a radiation direction of said electromagnetic radiation, and wherein the absorbed energy manifests as thermal energy.

6. Method according to claim 4, wherein the absorbing means comprises a photovoltaic cell, and wherein the absorbed energy manifests as electric energy.

7. Method according to any one of the preceding claims, wherein the hydrogen atoms and deuterium or tritium nuclei are kept at an average temperature which is at the most 1,000 K, preferably at the most 500 K, preferably at the most 350 K, throughout the process.

8. Method according to anyone of the preceding claims, wherein the hydrogen atoms and nuclei are kept at an average temperature which is at least 0 °C throughout the process.

9. Method according to any one of the preceding claims, wherein the method further comprises the initial step of locally producing said first and second hydrogen atoms by separating, such as using electrolysis, hydrogen dioxide, such as deuterium or tritium dioxide, to form hydrogen gas and oxygen gas.

10. Method according to any one of the preceding claims, wherein steps c) and d) comprise ionization of said first and second hydrogen atoms.

11. Method according to claim 10, wherein said ionization is performed by subjecting the hydrogen atoms to electromagnetic radiation.

12. Method according to claim 10 or 11, wherein the method further comprises applying a first aligning electric field (E1) to the first hydrogen nucleus, arranged to align a neutron of the first hydrogen nucleus in relation to a proton of the first hydrogen nucleus along a predetermined first alignment direction, and applying a second aligning electric field (E1) to the second hydrogen nucleus, arranged to align a neutron of the second hydrogen nucleus in relation to a proton of the second hydrogen nucleus along a predetermined second alignment direction, and wherein said first and second alignment directions are arranged so that said neutron of the first hydrogen nucleus faces either said neutron of the second hydrogen nucleus or said proton of said second hydrogen nucleus, preferably so that said neutron of the first nucleus faces said neutron of the second nucleus.

13. Method according to any one of claims 10-12, wherein the method further includes injecting at least said first nucleus into a reaction chamber as a part of a particle beam so that said bringing together specified in step a) thereby is achieved.

14. Method according to claim 13, wherein both said first nucleus and said second nucleus are injected into said reaction chamber as a part of a respective hydrogen particle beam, where the first nuclei is a part of a first beam and the second nuclei is a part of a second beam, which first and second beams intersect by having at least one flow direction component which is parallel and of opposite sign.

15. Method according to claim 14, wherein said particle beams are parallel and oppositely directed.

16. Method according to any one of claims 12-15, wherein each beam in question is achieved using a respective accelerating electric field (E2) accelerating the nucleus in question.

17. Method according to claims 12 and 16, wherein for each of said beams the accelerating electric field (E2) has an opposite field direction as compared to said first aligning electric field (E1).

18. Method according to claim 16 or 17, wherein said accelerating electric field (E2) has a vertical field direction.

19. Method according to claim 12 and any one of claims 16-18, wherein said first and second aligning electric fields (E1) are applied so as to decelerate the velocity of the nuclei in question, so that its velocity relative to the other nuclei in question is less than $\pm 1 \cdot 10^7$ m/s when they are brought together in step a), or alternatively that the total kinetic energy of the first and the second nuclei, when they are brought together in step a), is less than 1 keV.

20. Method according to claim 12 and any one of claims 13-19, wherein the method further comprises ionizing a third hydrogen atom, in the form of a deuterium or tritium atom, to achieve a third deuterium or tritium nucleus; applying said first or second aligning electric fields (E1) to the third nucleus, arranged to align a neutron of the third nucleus in relation to a proton of the third nucleus; bringing the third nucleus into physical proximity to a fourth deuterium or tritium nucleus, which third and fourth nuclei do not fuse; and collecting the third nucleus, such as using a collecting electric field, and reusing the third nucleus as the first nucleus in steps a) - c).

21. Method according to any one of claims 13-20, wherein the method further comprises applying at least one quantum state filter only allowing said first and/or second nucleus to be brought together in step a) in case the hydrogen nucleus in question with a total spin $S = K$ has a spin projection state $S_z \approx \pm K$, such as by increasing a nucleus scattering amplitude for other spin energy states.

22. Method according to claim 21, wherein the method further comprises applying a respective bending electric field to at least one of said first and second nuclei, arranged to bend a path through space of the nucleus in question, wherein a magnitude of said bending depends on a spin of the nucleus in question, and wherein the nucleus in question, due to said bending, will be brought into contact in step c) only in case said spin fulfils a predetermined condition.

23. Method according to any one of claims 13-22, wherein the distance of step a) is at the most 1,000 fermi.

24. Method according to any one of claims 1-12, wherein said modifying of the electron orbits of steps c) and d) and said bringing together of step a) is performed by loading a plurality of ionized or non-ionized deuterium or tritium atoms into a metal crystal, such as via diffusion or bombardment of deuterium or tritium nuclei into the metal crystal, or by connecting the metal crystal as an anode and placing the corresponding cathode into water composed of the selected hydrogen isotope and then loading the metal crystal with hydrogen via electrolysis, which metal crystal may be a monocrystal or polycrystalline material having a crystal structure achieving said modifying of the electron orbits of steps c) and d) as a result of a geometry of said crystal structure when said deuterium or tritium nuclei are loaded into said metal crystal so as to occupy crystal lattice positions with a distance between two adjacent ones of said nuclei of at most one lattice constant apart.

25. Method according to claim 24, wherein the ratio of the number of ionized or non-ionized deuterium or tritium atoms per number of metal atoms after loading is at least 0.8, preferably at least 1.5.

26. Method according to claim 24 or 25, wherein a total mass of said metal crystal is at least $1.2 \cdot 10^{-14}$ grams.

27. Method according to any one of claims 24-26, wherein a third aligning electric field is applied causing Bloch oscillations arranged to momentarily decrease a relative distance between nuclei located adjacent each other in said metal crystal.

**28.** Method according to claim 26 or 27, wherein the method further comprises encapsulating said metal crystal in a material arranged to absorb photons and possible neutrons to generate thermal energy, and/or absorbing thermal energy directly in that form, and/or absorbing photons to generate electric currents and to convey such thermal energy and/or generated electric current away from the metal crystal.

**29.** Method according to any one of claims 26-28, wherein the metal crystal is any of palladium, titanium, magnesium, aluminium, lithium, sodium, lanthanum or nickel, or a (possibly complex) compound with any of these elements as one component.

**30.** Method according to any one of claims 26-29, wherein a field strength of an induced magnetic field within the metal crystal is increased using a ferromagnetic material comprising cobalt, iron, nickel, neodymium and/or samarium inside or in connection to the metal crystal.

**31.** Method according to any one of claims 26-30, wherein a second magnetic field is applied, which second magnetic field is varied over time with a frequency within 25% of the corresponding nuclear spin projection transition resonance energy of the ionized or non-ionized deuterium or tritium, wherein said second magnetic field is applied to be orthogonal to said first magnetic field (H) within a $\pm 10\%$ margin, which first magnetic field (H) furthermore preferably is a static magnetic field.

**32.** Method according to any one of claims 26-31, wherein the total magnetic field (B) is applied at least during 10 ms.

**33.** Method according to any one of claims 1-13, wherein the bringing together of step a) is achieved by the first and second nuclei forming, or forming part of, a deuterium or tritium molecule.

**34.** Method according to claim 33, wherein the method further comprises keeping a plurality of such deuterium and/or tritium molecules in a confined volume under subjection of the entire confined volume to the total magnetic field (B) of step b) for at least 1 minute, such as at least 1 hour.

**35.** Method according to claim 34, wherein the method further comprises a subsequent emptying step in which helium formed is emptied and the confined volume is refilled with a new plurality of deuterium and/or tritium molecules.

**36.** Method according to any one of claims 33-35, wherein steps c) and d) comprise ionizing said first and second hydrogen atoms forming said deuterium or tritium molecule.

**37.** System for converting nuclear energy by fusing deuterium or tritium nuclei, which system comprises a hydrogen atom provision arrangement, arranged to, in an initial step, provide a first hydrogen atom, comprising a first deuterium or tritium nucleus and a first electron, and a second hydrogen atom, comprising a second deuterium or tritium nucleus and a second electron, which system further comprises a nucleus movement-imparting arrangement, arranged to bring the first nucleus and the second nucleus together to a distance between the first and second nucleus of at the most 7 Å, which system further comprises a magnetic field provision arrangement, arranged to apply a first magnetic field (H) such that a resulting total magnetic field (B) is arranged to align a first spin of said first nucleus in relation to a second spin of said second nucleus so that a respective spin axis of said first and second spins are anti-parallel and directed either towards each other or away from each other and so that said first and second spins are projected on a common line between the first and second nuclei, which common line is parallel or anti-parallel to the total magnetic field (B), which system further comprises a hydrogen atom electron orbit modifying arrangement, arranged to ionize said first hydrogen atom, or to modify the electron orbit of said first electron such that a spatial distribution for the first electron is such that the probability for the first electron to exist in a region between the first and second nuclei along the common line is smaller than in a spherically symmetric spatial distribution, which hydrogen atom electron orbit modifying arrangement is further arranged to ionize said second hydrogen atom, or to modify the electron orbit of said second electron such that a spatial distribution for the second electron is such that the probability for the second electron to exist in a region between the first and second nuclei along the common line is smaller than in a spherically symmetric spatial distribution, and wherein the system is arranged to perform said bringing said nuclei together, said application of said magnetic field (B) and said electron orbit modification in any order but so that the first and second nuclei are provided at said distance, with said spin orientation and said ionized or electron orbit modified state at one and the same time.

**Fig. 1**

**Fig. 2**

# Fig. 3

# Fig. 4

# Fig. 5

# Fig. 6

# Fig. 7

- Hot side of primary D2O loop
- Cold side of primary D2O loop
- Hot side of secondary H2O loop
- Cold side of secondary H2O loop
- Cool D2O moderator

# Fig. 8

# Fig. 9

# Fig. 10

magnet

Magnet shield

DC

Pd Battery

Battery cross-section

# Fig. 11

r = arbitrary distance

# Fig. 12

*B*

$r \leq 7\text{Å}$

# Fig. 13

$r \leq 7\text{Å}$

**B**

# Fig. 14

$a$

**B**

# Fig. 15

r ≈ 0.7Å

# Fig. 16

| Start |
|---|
| Provide first hydrogen atom and second hydrogen atom |
| Bring nuclei together by particle transport |
| Provide magnetic field |
| Ionize or modify electron distribution of first hydrogen atom |
| Ionize or modify electron distribution of second hydrogen atom |
| Fuse nuclei |
| End |

# Fig. 17

| Start |
|-------|

| Provide first hydrogen atom and second hydrogen atom |
|-------|

| Bring nuclei together by loading into metal crystal |
|-------|

| Provide magnetic field |
|-------|

| Ionize or modify electron distribution of first hydrogen atom |
|-------|

| Ionize or modify electron distribution of second hydrogen atom |
|-------|

| Fuse nuclei |
|-------|

| End |
|-------|

# Fig. 18

| Start |
|-------|

| Provide first hydrogen atom and second hydrogen atom |
|-------|

| Bring nuclei together by forming molecule |
|-------|

| Provide magnetic field |
|-------|

| Ionize or modify electron distribution of first hydrogen atom |
|-------|

| Ionize or modify electron distribution of second hydrogen atom |
|-------|

| Fuse nuclei |
|-------|

| End |
|-------|

Europäisches
Patentamt

European
Patent Office

Office européen
des brevets

# DECLARATION

Application Number

which under Rule 63 of the European Patent Convention EP 20 16 8985
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV. G21B3/00 |

The gist of the present invention, as claimed in independent claims 1 and 37, consists in nuclear fusion of deuterium and tritium at low temperatures based on the spin-polarization of the deuterium and the tritium, thereby allegedly achieving "cold fusion" (see page 1, line 19 and page 12, lines 9-15).
According to Article 52(1) EPC, a European patent can be granted for an invention which is, inter alia, susceptible of industrial application. This concept is related to the obligation on an applicant to give a sufficient description of the invention, as required by Article 83 EPC. An invention or an application for a patent for an alleged invention which would not comply with the generally accepted laws of physics would be incompatible with the requirements of Articles 57 and 83 because it cannot be used and therefore lacks industrial application. Also the description would be insufficient to the extent that the applicant would not be able to describe how it could be made to work.
In agreement with T0541/96, it goes without saying that the EPC does not prevent the patentability of "revolutionary" inventions. However, Article 83 EPC makes the amount of information required for a sufficient disclosure of an invention somewhat dependent on the actual "nature" of the invention. If the latter lies in a well-known technical field and is based on generally accepted theories, the description need not comprise many specific technical details which would

-/--

| Place of search | Date | Examiner |
|---|---|---|
| Munich | 6 October 2020 | Manini, Adriano |

EPO FORM 1504 (P04F37)

page 1 of 4

Europäisches
Patentamt

European
Patent Office

Office européen
des brevets

**DECLARATION**

Application Number

which under Rule 63 of the European Patent Convention EP 20 16 8985
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

anyway be implicit to a skilled person.
However, if the invention seems, at least
at first, to offend against the generally
accepted laws of physics and established
theories, the disclosure should be
detailed enough to prove to a skilled
person conversant with mainstream science
and technology that the invention is
indeed feasible (i.e. susceptible of
industrial application). This implies,
inter alia, the provision of all the data
which the skilled person would need to
carry out the claimed invention, since
such a person, not being able to derive
such data from any generally accepted
theory, cannot be expected to implement
the teaching of the invention just by
trial and error. This has been more
recently confirmed in T1485/17, which
stated that if an invention is based on a
phenomenon which appears to contravene
generally accepted laws of physics (i.e.
the claimed fusion reactor obtaining cold
fusion), which is not generally recognised
and has been observed only by a very
limited number of research groups and for
which hitherto no explanation exists in
the scientific community, a high level of
proof is required.
In the present case, description and
drawings provide only very generic
examples of constructions of the nuclear
fusion reactors which are allegedly
supposed to induce nuclear fusion at low
temperature of deuterium and tritium (see
for example fig. 5-8) and which must be
obtained under certain specific operating
conditions. However, the description does
not provide a clear and exhaustive

-/--

| Place of search | Date | Examiner |
|---|---|---|
| Munich | 6 October 2020 | Manini, Adriano |

EPO FORM 1504 (P04F37)

Europäisches
Patentamt

European
Patent Office

Office européen
des brevets

**DECLARATION**

Application Number

which under Rule 63 of the European Patent Convention EP 20 16 8985
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
| --- | --- |

Reason:

technical teaching of what these specific operating conditions are, how they are to be attained and it is not supported by neither any experimental evidence demonstrating the effective obtention of nuclear fusion end products, nor any further independent counter-experiment demonstrating its reproducibility.

In this respect, with regard to the applicant's reply to the clarification request, it is reiterated that the application, even though discussing in generic terms how the alleged cold fusion is to be obtained, neither provides at least one enabling example within the meaning of Rule 42(1)(e) EPC, i.e. one very specifically defined example (including the definition of all parameters) allowing a skilled person to obtain the alleged cold fusion, nor unconfutable, factual, proof of the obtention of cold fusion reactions in an amount that with no doubts exceeds a mere theoretical statistical probability.

Even though a community of researchers is conducting research into cold fusion and publishes many papers, it is noted that the occurring of nuclear fusion reactions at low temperatures remains controversial and generally not accepted by the scientific community, in particular due to the lack of reproducibility.

Therefore, since the description neither provides for the missing evidence of the actual occurrence of such a cold fusion reaction, nor it discloses at least one specific operating condition for indeed triggering such a reaction in a well defined (in all its technical details!)

-/--

| Place of search | Date | Examiner |
| --- | --- | --- |
| Munich | 6 October 2020 | Manini, Adriano |

EPO FORM 1504 (P04F37)

Europäisches
Patentamt

European
Patent Office

Office européen
des brevets

**DECLARATION**

Application Number

which under Rule 63 of the European Patent Convention EP 20 16 8985
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>nuclear reactor device, the application is not disclosed in a manner sufficiently clear and complete for it to be carried out by a person skilled in the art (Art. 83 and Rule 42(1)(e) EPC).<br>Because of what reported above, the present application fails to such an extent to comply with the EPC, that it is impossible to carry out a meaningful search regarding the state of the art for all the subject-matter claimed.<br><br>The applicant's attention is drawn to the fact that a search may be carried out during examination following a declaration of no search under Rule 63 EPC, should the problems which led to the declaration being issued be overcome (see EPC Guideline C-IV, 7.2). | |

| Place of search | Date | Examiner |
|---|---|---|
| Munich | 6 October 2020 | Manini, Adriano |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ROBERT M. WALD.** General Relativity. The University of Chicago Press, 1984, 330-337
- **HAWKING, S. W.** *Comm. Math. Phys.,* 1975, vol. 43, 199-220
- **GILLIES, GEORGE T.** *Reports on Progress in Physics,* 1997, vol. 60 (2), 151-255
- **BRANS, C. ; DICKE, R.H.** *Phys. Rev.,* 1961, vol. 124, 925-935
- **JOHN DIRK WALECKA.** Theoretical Nuclear and Subnuclear Physics. Imperial Collage Press, 2013, 160-168
- **R.PENROSE ; W.RINDLER.** Two-Spinor Calculus and Relativistic Fields. Cambridge University Press, 1990, vol. 1, 231-237
- **ROBERT M. WALD.** General Relativity. The University of Chicago Press, 1984
- **F. MANDL ; G. SHAW.** Quantum Feld Theory. John Wiley and Sons Ltd, 1986
- **ROBERT M. WALD.** General Relativity. The University of Chicago Press, 1984, 359
- **JOHN DIRK WALECKA.** Theoretical Nuclear and Subnuclear Physics. Imperial Collage Press, 2013, 136-142
- **SALAM, A. ; SIVARAM, C.** *Mod. Phys. Lett.,* 1993, vol. 8 (4), 321-326
- **P.A.M DIRAC.** The Principles of Quantum Mechanics. Oxford at the Clarendon Press, 1947, 130-135
- **L.D. LANDAU ; E.M. LIFSHITZ.** Quantum Mechanics (Non-relativistic Theory). Pergamon Press, 1977
- **P.A.M DIRAC.** The Principles of Quantum Mechanics. Oxford at the Clarendon Press, 1947
- **D. LANDAU ; E.M. LIFSHITZ.** Quantum Mechanics (Non-relativistic Theory). Pergamon Press, 1977
- **JOHN DIRK WALECKA.** Theoretical Nuclear and Subnuclear Physics. Imperial Collage Press, 2013
- **JOHN DIRK WALECKA.** Theoretical Nuclear and Subnuclear Physics. Imperial Collage Press, 2013, 573
- **JOHN DIRK WALECKA.** Theoretical Nuclear and Subnuclear Physics. Imperial Collage Press, 2013, 119
- **JOHN DIRK WALECKA.** Theoretical Nuclear and Subnuclear Physics. Imperial Collage Press, 2013, 125
- **F. MANDL ; G. SHAW.** Quantum Feld Theory. John Wiley and Sons Ltd, 1986, 81
- **GEORGE F. SIMMONS.** Differential Equations with Applications and Historical Notes. CRC Press, 210
- **GEORGE F. SIMMONS.** Differential Equations with Applications and Historical Notes. CRC Press, 447
- **GEORGE F. SIMMONS.** Differential Equations with Applications and Historical Notes. CRC Press, 214
- **L.D. LANDAU ; E.M. LIFSHITZ.** Quantum Mechanics (Non-relativistic Theory). Per-gamon Press, 1977
- **L.D. LANDAU ; E.M. LIFSHITZ.** The Classical Theory of Fields. Pergamon Press, 1975
- **JOHN DIRK WALECKA.** Theoretical Nuclear and Subnuclear Physics. Imperial Collage Press, 2013, 549
- **L.D. LANDAU ; E.M. LIFSHITZ.** The Classical Theory of Fields. Pergamon Press, 1975, 153
- **L.D. LANDAU ; E.M. LIFSHITZ.** Quantum Mechanics (Non-relativistic Theory). Pergamon Press, 1977, 27
- **FLEISCHMANN, MARTIN ; PONS, STANLEY.** Electrochemically induced nuclear fusion of deuterium. *Journal of Electroanalytical Chemistry,* 1989, vol. 261 (2A), 301-308
- **MARVIN L. COHEN ; STEVEN G. LOUIE.** Fundamentals of Condensed Matter Physics. Cambridge University Press, 2016
- **TANAKA, T. ; KEITA, M. ; AZOFEIFA, D.E.** *Phys. Rev.,* 1981, vol. 24 (4), 1771-1776